(19) 

Europäisches
Patentamt
European
Patent Office
Office européen
des brevets

(11) **EP 4 614 825 A1**

(12) **EUROPEAN PATENT APPLICATION**
published in accordance with Art. 153(4) EPC

(43) Date of publication:
**10.09.2025 Bulletin 2025/37**

(21) Application number: **23886255.1**

(22) Date of filing: **01.11.2023**

(51) International Patent Classification (IPC):
**H04B 7/0456** (2017.01)    **H04B 7/024** (2017.01)
**H04B 7/06** (2006.01)    **H04L 5/00** (2006.01)
**H04L 25/03** (2006.01)

(52) Cooperative Patent Classification (CPC):
**H04B 7/024; H04B 7/0456; H04B 7/06; H04L 5/00;
H04L 25/03**

(86) International application number:
**PCT/KR2023/017230**

(87) International publication number:
**WO 2024/096559 (10.05.2024 Gazette 2024/19)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **04.11.2022  KR 20220146403
03.02.2023  KR 20230015161**

(71) Applicant: **LG Electronics Inc.**
**Yeongdeungpo-gu**
**Seoul 07336 (KR)**

(72) Inventors:
• **KIM, Hyungtae**
  **Seoul 06772 (KR)**
• **PARK, Haewook**
  **Seoul 06772 (KR)**

(74) Representative: **Frenkel, Matthias Alexander**
**Wuesthoff & Wuesthoff**
**Patentanwälte und Rechtsanwalt PartG mbB**
**Schweigerstraße 2**
**81541 München (DE)**

(54) **METHOD AND DEVICE FOR TRANSMITTING/RECEIVING CHANNEL STATE INFORMATION IN WIRELESS COMMUNICATION SYSTEM**

(57)    A method and a device for transmitting/receiving
channel state information (CSI) in a wireless communi-
cation system are disclosed. A method, performed by a
UE, according to an embodiment of the present disclo-
sure may comprise the steps of: receiving configuration
information related to CSI reporting from a base station;
receiving CSI-RSs on K (K is a natural number) CSI-RS
resources from the base station; and transmitting CSI to
the base station, the CSI including PMIs corresponding to
codebook indices.

FIG.11

EP 4 614 825 A1

**Description**

[Technical Field]

The present disclosure relates to a wireless communication system, and in more detail, relates to a method and an apparatus of transmitting and receiving channel state information in a wireless communication system.

[Background Art]

A mobile communication system has been developed to provide a voice service while guaranteeing mobility of users. However, a mobile communication system has extended even to a data service as well as a voice service, and currently, an explosive traffic increase has caused shortage of resources and users have demanded a faster service, so a more advanced mobile communication system has been required.

The requirements of a next-generation mobile communication system at large should be able to support accommodation of explosive data traffic, a remarkable increase in a transmission rate per user, accommodation of the significantly increased number of connected devices, very low End-to-End latency and high energy efficiency. To this end, a variety of technologies such as Dual Connectivity, Massive Multiple Input Multiple Output (Massive MIMO), In-band Full Duplex, Non-Orthogonal Multiple Access (NOMA), Super wideband Support, Device Networking, etc. have been researched.

[Disclosure]

[Technical Problem]

A technical object of the present disclosure is to provide a method and an apparatus for transmitting and receiving channel state information.

In addition, an additional technical object of the present disclosure is to provide a method and an apparatus for transmitting and receiving channel state information for multiple transmission and reception points (TRPs).

In addition, an additional technical object of the present disclosure is to provide a method and an apparatus for transmitting and receiving channel state information including a precoding matrix indicator for coherent joint transmission (CJT) in multiple TRPs.

The technical objects to be achieved by the present disclosure are not limited to the above-described technical objects, and other technical objects which are not described herein will be clearly understood by those skilled in the pertinent art from the following description.

[Technical Solution]

A method performed by a user equipment (UE) in a wireless communication system according to an aspect of the present disclosure may include: receiving, from a base station, configuration information related to a channel state information (CSI) report; receiving, from the base station, a CSI-reference signal (CSI-RS) on K (K is a natural number) CSI-RS resources; and transmitting CSI to the base station, wherein the CSI includes a precoding matrix indicator (PMI) corresponding to codebook indexes. The configuration information may include i) first information on one or more first parameters and ii) second information on a combination of a second parameter and a third parameter, a precoding matrix indicated by the PMI is determined from a plurality of vectors, and a number of the plurality of vectors may be determined based on the one or more first parameters and the second parameter, the codebook indexes may include an amplitude coefficient indicator indicating one or more amplitude coefficients and a phase coefficient indicator indicating one or more phase coefficients, an upper bound of a total number of non-zero coefficients in the one or more amplitude coefficients and the one or more phase coefficients may be determined based on the one or more first parameters, the second parameter, and the third parameter, a configurable combination between i) the one or more first parameters and ii) the second parameter and the third parameter may be individually determined according to a number of the K CSI-RS resources.

A method performed by a base station in a wireless communication system according to an aspect of the present disclosure may include: transmitting, to a user equipment (UE), configuration information related to a channel state information (CSI) report; transmitting, to the UE, a CSI-reference signal (CSI-RS) on K (K is a natural number) CSI-RS resources; and receiving CSI from the UE, wherein the CSI includes a precoding matrix indicator (PMI) corresponding to codebook indexes. The configuration information may include i) first information on one or more first parameters and ii) second information on a combination of a second parameter and a third parameter, a precoding matrix indicated by the PMI may be determined from a plurality of vectors, and a number of the plurality of vectors is determined based on the one or more first parameters and the second parameter, the codebook indexes may include an amplitude coefficient indicator indicating one or more amplitude coefficients and a phase coefficient indicator indicating one or more phase coefficients, an upper bound of a total number of non-zero coefficients in the one or more amplitude coefficients and the one or more phase coefficients may be determined based on the one or more first parameters, the second parameter, and the third parameter, a configurable combination between i) the one or more first parameters and ii) the second parameter and the third parameter may be individually determined according to a number of the K CSI-RS resources.

[Technical Effects]

According to an embodiment of the present disclosure, when performing a transmission and reception operation (e.g., a CJT operation) in multiple TRPs, flexible operation can be supported.

According to an embodiment of the present disclosure, when performing a transmission and reception operation (e.g., a CJT operation) in multiple TRPs, signaling overhead can be reduced as signaling for configuration information becomes simpler.

Effects achievable by the present disclosure are not limited to the above-described effects, and other effects which are not described herein may be clearly understood by those skilled in the pertinent art from the following description.

[Brief Description of the Drawings]

Accompanying drawings included as part of detailed description for understanding the present disclosure provide embodiments of the present disclosure and describe technical features of the present disclosure with detailed description.

FIG. 1 illustrates a structure of a wireless communication system to which the present disclosure may be applied.

FIG. 2 illustrates a frame structure in a wireless communication system to which the present disclosure may be applied.

FIG. 3 illustrates a resource grid in a wireless communication system to which the present disclosure may be applied.

FIG. 4 illustrates a physical resource block in a wireless communication system to which the present disclosure may be applied.

FIG. 5 illustrates a slot structure in a wireless communication system to which the present disclosure may be applied.

FIG. 6 illustrates physical channels used in a wireless communication system to which the present disclosure may be applied and a general signal transmission and reception method using them.

FIG. 7 illustrates an antenna configuration in a wireless communication system to which the present disclosure can be applied.

FIG. 8 illustrates an aggregated channel for CJT in a wireless communication system to which the present disclosure can be applied.

FIG. 9 illustrates an eType II codebook for CJT in a wireless communication system to which the present disclosure can be applied.

FIG. 10 is a diagram illustrating a signaling procedure between a network and a UE for a method for transmitting and receiving channel state information according to an embodiment of the present disclosure.

FIG. 11 is a diagram illustrating an operation of a UE for a method for transmitting and receiving channel state information according to an embodiment of the present disclosure.

FIG. 12 is a diagram illustrating an operation of a base station for a method for transmitting and receiving channel state information according to an embodiment of the present disclosure.

FIG. 13 illustrates a block diagram of a wireless communication device according to an embodiment of the present disclosure.

[Detailed Description]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

The present disclosure describes a wireless communication network or a wireless communication system, and an operation performed in a wireless communication network may be performed in a process in which a device (e.g., a base station) controlling a corresponding wireless communication network controls a network and transmits or receives a signal, or may be performed in a process in which a terminal associated to a corresponding wireless network transmits or receives a signal with a network or between terminals.

In the present disclosure, transmitting or receiving a channel includes a meaning of transmitting or receiving information or a signal through a corresponding channel. For example, transmitting a control channel means that control information or a control signal is transmitted through a control channel. Similarly, transmitting a data channel means that data information or a data signal is transmitted through a data channel.

Hereinafter, a downlink (DL) means a communication from a base station to a terminal and an uplink (UL) means a communication from a terminal to a base station. In a downlink, a transmitter may be part of a base station and a receiver may be part of a terminal. In an uplink, a transmitter may be part of a terminal and a receiver may be part of a base station. A base station may be expressed as a first communication device and a terminal may be expressed as a second communication device. A base station (BS) may be substituted with a term such as a fixed station, a Node B, an eNB(evolved-NodeB), a gNB (Next Generation NodeB), a BTS(base transceiver system), an Access Point (AP), a Network (5G network), an AI (Artificial Intelligence) system/module, an RSU(road side unit), a robot, a drone(UAV: Unmanned Aerial Vehicle), an AR (Augmented Reality) device, a VR(Virtual Reality) device, etc. In addition, a terminal may be fixed or mobile, and may be substituted with a term such as a UE(User Equipment), an MS(Mobile Station), a UT(user terminal), an MSS(Mobile Subscriber Station), an SS (Subscriber Station), an AMS(Advanced Mobile Station), a WT(Wireless terminal), an MTC (Machine-Type Communication) device, an M2M (Machine-to-Machine) device, a D2D(Device-to-Device) device, a vehicle, an RSU (road side unit), a robot, an AI(Artificial Intelligence) module, a drone(UAV: Unmanned Aerial Vehicle), an AR(Augmented Reality) device, a VR(Virtual Reality) device, etc.

The following description may be used for a variety of radio access systems such as CDMA, FDMA, TDMA, OFDMA, SC-FDMA, etc. CDMA may be implemented by a wireless technology such as UTRA(Universal Terrestrial Radio Access) or CDMA2000. TDMA may be implemented by a radio technology such as GSM(Global System for Mobile communications)/GPRS(General Packet Radio Service)/EDGE(Enhanced Data Rates for GSM Evolution). OFDMA may be implemented by a radio technology such as IEEE 802.11 (Wi-Fi), IEEE 802.16(WiMAX), IEEE 802-20, E-UTRA(Evolved UTRA), etc. UTRA is a part of a UMTS (Universal Mobile Telecommunications System). 3GPP(3rd Generation Partnership Project) LTE(Long Term Evolution) is a part of an E-UMTS (Evolved UMTS) using E-UTRA and LTE-A(Advanced)/LTE-A pro is an advanced version of 3GPP LTE. 3GPP NR (New Radio or New Radio Access Technology) is an advanced version of 3GPP LTE/LTE-A/LTE-A pro.

To clarify description, it is described based on a 3GPP communication system (e.g., LTE-A, NR), but a technical idea of the present disclosure is not limited thereto. LTE means a technology after 3GPP TS(Technical Specification) 36.xxx Release 8. In detail, an LTE technology in or after 3GPP TS 36.xxx Release 10 is referred to as LTE-A and an LTE technology in or after 3GPP TS 36.xxx Release 13 is referred to as LTE-A pro. 3GPP NR means a technology in or after TS 38.xxx Release 15. LTE/NR may be referred to as a 3GPP system. "xxx" means a detailed number for a standard document. LTE/NR may be commonly referred to as a 3GPP system. For a background art, a term, an abbreviation, etc. used to describe the present disclosure, matters described in a standard document disclosed before the present disclosure may be referred to. For example, the following document may be referred to.

For 3GPP LTE, TS 36.211(physical channels and modulation), TS 36.212(multiplexing and channel coding), TS 36.213(physical layer procedures), TS 36.300(overall description), TS 36.331(radio resource control) may be referred to.

For 3GPP NR, TS 38.211(physical channels and modulation), TS 38.212(multiplexing and channel coding), TS 38.213(physical layer procedures for control), TS 38.214(physical layer procedures for data), TS 38.300(NR and NG-RAN (New Generation-Radio Access Network) overall description), TS 38.331(radio resource control protocol specification) may be referred to.

Abbreviations of terms which may be used in the present disclosure is defined as follows.

- - BM: beam management
- - CQI: Channel Quality Indicator
- - CRI: channel state information - reference signal resource indicator
- - CSI: channel state information
- - CSI-IM: channel state information - interference measurement
- - CSI-RS: channel state information - reference signal
- - DMRS: demodulation reference signal
- - FDM: frequency division multiplexing
- - FFT: fast Fourier transform
- - IFDMA: interleaved frequency division multiple access
- - IFFT: inverse fast Fourier transform
- - L1-RSRP: Layer 1 reference signal received power
- - L1-RSRQ: Layer 1 reference signal received quality
- - MAC: medium access control
- - NZP: non-zero power
- - OFDM: orthogonal frequency division multiplexing
- - PDCCH: physical downlink control channel
- - PDSCH: physical downlink shared channel
- - PMI: precoding matrix indicator
- - RE: resource element
- - RI: Rank indicator
- - RRC: radio resource control
- - RSSI: received signal strength indicator
- - Rx: Reception
- - QCL: quasi co-location
- - SINR: signal to interference and noise ratio
- - SSB (or SS/PBCH block): Synchronization signal block (including PSS (primary synchronization signal), SSS (secondary synchronization signal) and PBCH (physical broadcast channel))
- - TDM: time division multiplexing
- - TRP: transmission and reception point
- - TRS: tracking reference signal
- - Tx: transmission
- - UE: user equipment
- - ZP: zero power

Overall System

As more communication devices have required a higher capacity, a need for an improved mobile broadband communication compared to the existing radio access technology (RAT) has emerged. In addition, massive MTC (Machine Type Communications) providing a variety of services anytime and anywhere by connecting a plurality of devices and things is also one of main issues which will be considered in a next-generation communication. Furthermore, a communication system design considering a service/a terminal sensitive to reliability and latency is also discussed. As such, introduction of a next-generation RAT considering eMBB(enhanced mobile broadband communication), mMTC(massive MTC), URLLC(Ultra-Reliable and Low Latency Communication), etc. is discussed and, for convenience, a corresponding technology is referred to as NR in the present disclosure. NR is an expression which represents an example of a 5G RAT.

A new RAT system including NR uses an OFDM transmission method or a transmission method similar to it. A new RAT system may follow OFDM parameters different from OFDM parameters of LTE. Alternatively, a new RAT system follows a numerology of the existing LTE/LTE-A as it is, but may support a wider system bandwidth (e.g., 100MHz). Alternatively, one cell may support a plurality of numerologies. In other words, terminals which operate in accordance with different numerologies may coexist in one cell.

A numerology corresponds to one subcarrier spacing in a frequency domain. As a reference subcarrier spacing is scaled by an integer N, a different numerology may be defined.

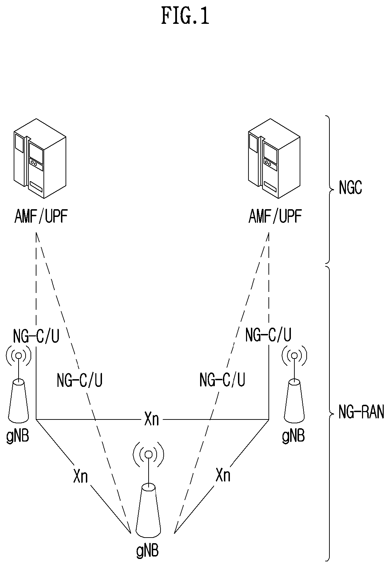

FIG. 1 illustrates a structure of a wireless communication system to which the present disclosure may be applied.

In reference to FIG. 1, NG-RAN is configured with gNBs which provide a control plane (RRC) protocol end for a NG-RA(NG-Radio Access) user plane (i.e., a new AS(access stratum) sublayer/PDCP (Packet Data Convergence Protocol)/RLC (Radio Link Control)/MAC/PHY) and UE. The gNBs are interconnected through a Xn interface. The gNB, in addition, is connected to an NGC(New Generation Core) through an NG interface. In more detail, the gNB is connected to an AMF(Access and Mobility Management Function) through an N2 interface, and is connected to a UPF(User Plane Function) through an N3 interface.

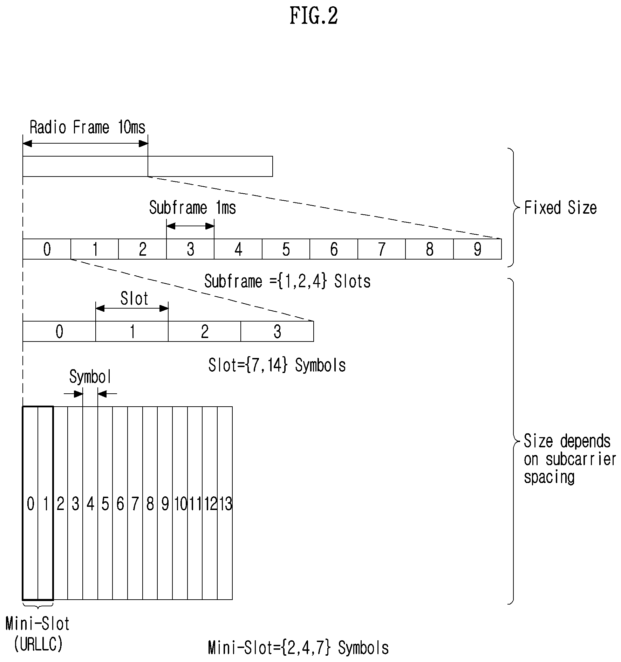

FIG. 2 illustrates a frame structure in a wireless communication system to which the present disclosure may be applied.

A NR system may support a plurality of numerologies. Here, a numerology may be defined by a subcarrier spacing and a cyclic prefix (CP) overhead. Here, a plurality of subcarrier spacings may be derived by scaling a basic (reference) subcarrier spacing by an integer N (or, $\mu$). In addition, although it is assumed that a very low subcarrier spacing is not used in a very high carrier frequency, a used numerology may be selected independently from a frequency band. In addition, a variety of frame structures according to a plurality of numerologies may be supported in a NR system.

Hereinafter, an OFDM numerology and frame structure which may be considered in a NR system will be described. A plurality of OFDM numerologies supported in a NR system may be defined as in the following Table 1.

[Table 1]

| $\mu$ | $\Delta f = 2^{\mu} \cdot 15$ [kHz] | CP |
|---|---|---|
| 0 | 15 | Normal |
| 1 | 30 | Normal |
| 2 | 60 | Normal, Extended |
| 3 | 120 | Normal |
| 4 | 240 | Normal |

NR supports a plurality of numerologies (or subcarrier spacings (SCS)) for supporting a variety of 5G services. For example, when a SCS is 15kHz, a wide area in traditional cellular bands is supported, and when a SCS is 30kHz/60kHz, dense-urban, lower latency and a wider carrier bandwidth are supported, and when a SCS is 60kHz or higher, a bandwidth wider than 24.25GHz is supported to overcome a phase noise.

An NR frequency band is defined as a frequency range in two types (FR1, FR2). FR1, FR2 may be configured as in the following Table 2. In addition, FR2 may mean a millimeter wave (mmW).

[Table 2]

| Frequency Range designation | Corresponding frequency range | Subcarrier Spacing |
|---|---|---|
| FR1 | 410MHz - 7125MHz | 15, 30, 60kHz |
| FR2 | 24250MHz - 52 600MHz | 60, 120, 240kHz |

Regarding a frame structure in an NR system, a size of a variety of fields in a time domain is expresses as a multiple of a time unit of $T_c = 1/(\Delta f_{max} \cdot N_f)$. Here, $\Delta f_{max}$ is $480 \cdot 10^3$ Hz and $N_f$ is 4096. Downlink and uplink transmission is configured (organized) with a radio frame having a duration of $T_f = 1/(\Delta f_{max} N_f / 100) \cdot T_c = 10$ms. Here, a radio frame is configured with 10 subframes having a duration of $T_{sf} = (\Delta f_{max} N_f / 1000) \cdot T_c = 1$ms, respectively. In this case, there may be one set of frames for an uplink and one set of frames for a downlink. In addition, transmission in an uplink frame No. i from a terminal should start earlier by $T_{TA} = (N_{TA} + N_{TA,offset}) T_c$ than a corresponding downlink frame in a corresponding terminal starts. For a subcarrier spacing configuration $\mu$, slots are numbered in an increasing order of $n_s^{\mu} \in \{0,..., N_{slot}^{subframe,\mu} - 1\}$ in a subframe and are numbered in an increasing order of $n_{s,f}^{\mu} \in \{0,..., N_{slot}^{frame,\mu} - 1\}$ in a radio frame. One slot is configured with $N_{symb}^{slot}$ consecutive OFDM symbols and $N_{symb}^{slot}$ is determined according to CP. A start of a slot $n_s^{\mu}$ in a subframe is temporally arranged with a start of an OFDM symbol $n_s^{\mu} N_{symb}^{slot}$ in the same subframe. All terminals may not perform transmission and reception at the same time, which means that all OFDM symbols of a downlink slot or an uplink slot may not be used.

Table 3 represents the number of OFDM symbols per slot ($N_{symb}^{slot}$), the number of slots per radio frame ($N_{slot}^{frame,\mu}$) and the number of slots per subframe ($N_{slot}^{subframe,\mu}$) in a normal CP and Table 4 represents the number of OFDM symbols per slot, the number of slots per radio frame and the number of slots per subframe in an extended CP.

[Table 3]

| $\mu$ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

[Table 4]

| $\mu$ | $N_{symb}^{slot}$ | $N_{slot}^{frame,\mu}$ | $N_{slot}^{subframe,\mu}$ |
|---|---|---|---|
| 2 | 12 | 40 | 4 |

FIG. 2 is an example on $\mu$=2 (SCS is 60kHz), 1 subframe may include 4 slots referring to Table 3. 1 subframe= {1,2,4} slot shown in FIG. 2 is an example, the number of slots which may be included in 1 subframe is defined as in Table 3 or Table 4. In addition, a mini-slot may include 2, 4 or 7 symbols or more or less symbols.

Regarding a physical resource in a NR system, an antenna port, a resource grid, a resource element, a resource block, a carrier part, etc. may be considered. Hereinafter, the physical resources which may be considered in an NR system will be described in detail.

First, in relation to an antenna port, an antenna port is defined so that a channel where a symbol in an antenna port is carried can be inferred from a channel where other symbol in the same antenna port is carried. When a large-scale property of a channel where a symbol in one antenna port is carried may be inferred from a channel where a symbol in other antenna port is carried, it may be said that 2 antenna ports are in a QC/QCL(quasi co-located or quasi co-location) relationship. In this case, the large-scale property includes at least one of delay spread, doppler spread, frequency shift, average received power, received timing.

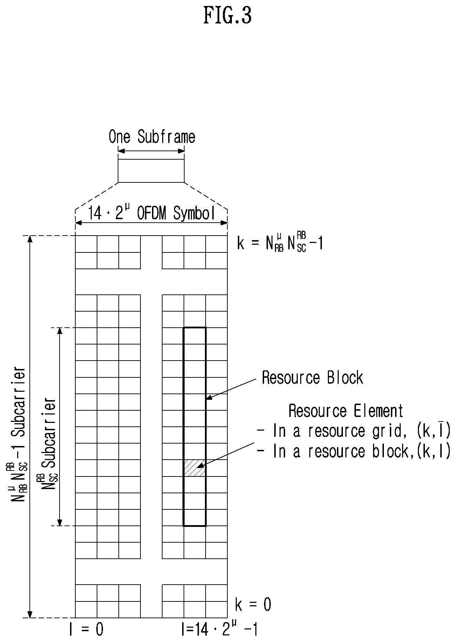

FIG. 3 illustrates a resource grid in a wireless communication system to which the present disclosure may be applied.

In reference to FIG. 3, it is illustratively described that a resource grid is configured with $N_{RB}^{\mu}N_{sc}^{RB}$ subcarriers in a frequency domain and one subframe is configured with 14 -$2^{\mu}$ OFDM symbols, but it is not limited thereto. In an NR system, a transmitted signal is described by OFDM symbols of $2^{\mu}N_{symb}^{(\mu)}$ and one or more resource grids configured with $N_{RB}^{\mu}N_{sc}^{RB}$ subcarriers. Here, $N_{RB}^{\mu} \leq N_{RB}^{max,\mu}$. The $N_{RB}^{max,\mu}$ represents a maximum transmission bandwidth, which may be different between an uplink and a downlink as well as between numerologies. In this case, one resource grid may be configured per $\mu$ and antenna port p. Each element of a resource grid for $\mu$ and an antenna port p is referred to as a resource element and is uniquely identified by an index pair (k,l'). Here, k=0,..., $N_{RB}^{\mu}N_{sc}^{RB}$-1 is an index in a frequency domain and l'=0,..., $2^{\mu}N_{symb}^{(\mu)}$-1 refers to a position of a symbol in a subframe. When referring to a resource element in a slot, an index pair (k,l) is used. Here, l=0,..., $N_{symb}^{\mu}$-1. A resource element (k,l') for $\mu$ and an antenna port p corresponds to a complex value, $a_{k,l'}^{(p,\mu)}$. When there is no risk of confusion or when a specific antenna port or numerology is not specified, indexes p and $\mu$ may be dropped, whereupon a complex value may be $a_{k,l'}^{(p)}$ or $a_{k,l'}$. In addition, a resource block (RB) is defined as $N_{sc}^{RB}$=12 consecutive subcarriers in a frequency domain.

Point A plays a role as a common reference point of a resource block grid and is obtained as follows.

-    offsetToPointA for a primary cell (PCell) downlink represents a frequency offset between point A and the lowest subcarrier of the lowest resource block overlapped with a SS/PBCH block which is used by a terminal for an initial cell selection. It is expressed in resource block units assuming a 15kHz subcarrier spacing for FR1 and a 60kHz subcarrier spacing for FR2.

-    absoluteFrequencyPointA represents a frequency-position of point A expressed as in ARFCN (absolute radiofrequency channel number).

Common resource blocks are numbered from 0 to the top in a frequency domain for a subcarrier spacing configuration $\mu$. The center of subcarrier 0 of common resource block 0 for a subcarrier spacing configuration $\mu$ is identical to 'point A'. A relationship between a common resource block number $n_{CRB}^{\mu}$ and a resource element (k,l) for a subcarrier spacing configuration $\mu$ in a frequency domain is given as in the following Equation 1.

【Equation 1】

$$n^{\mu}_{CRB} = \left\lfloor \frac{k}{N^{RB}_{sc}} \right\rfloor$$

In Equation 1, k is defined relatively to point A so that k=0 corresponds to a subcarrier centering in point A. Physical resource blocks are numbered from 0 to $N_{BWP,i}^{size,\mu}$-1 in a bandwidth part (BWP) and i is a number of a BWP. A relationship between a physical resource block $n_{PRB}$ and a common resource block $n_{CRB}$ in BWP i is given by the following Equation 2.

【Equation 2】

$$n^{\mu}_{CRB} = n^{\mu}_{PRB} + N^{start,\mu}_{BWP,i}$$

$N_{BWP,i}^{start,\mu}$ is a common resource block that a BWP starts relatively to common resource block 0.

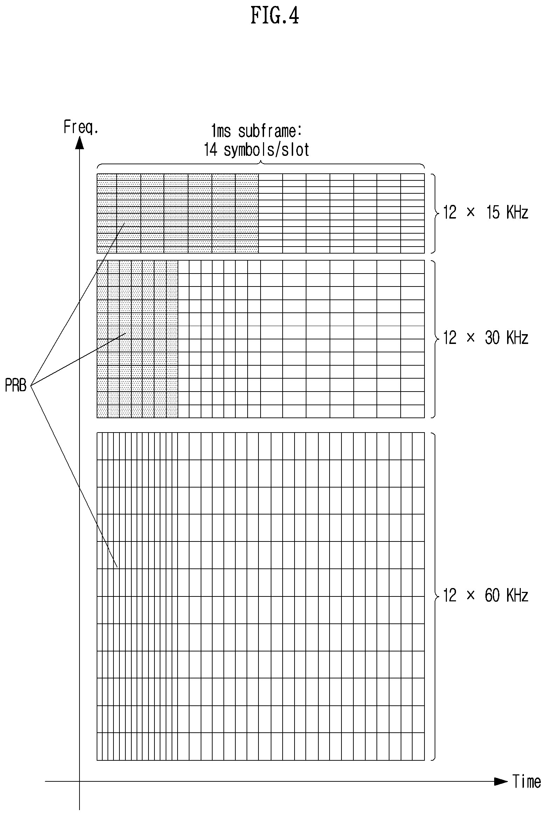

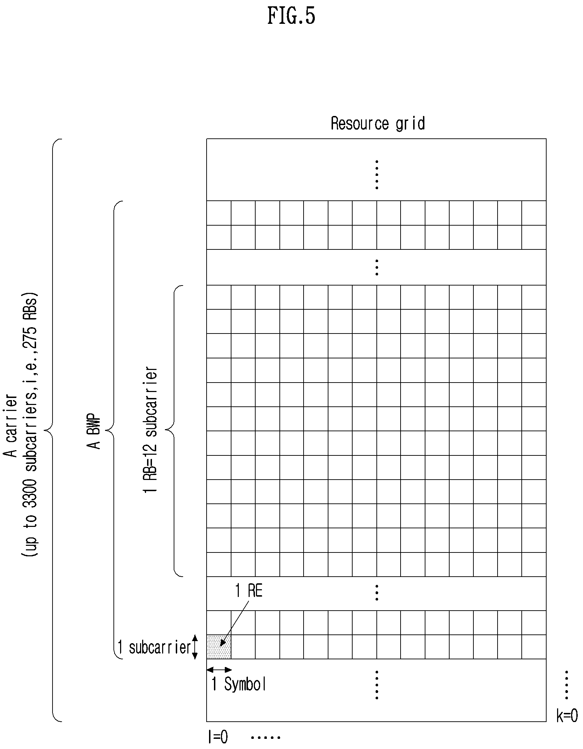

FIG. 4 illustrates a physical resource block in a wireless communication system to which the present disclosure may be applied. And, FIG. 5 illustrates a slot structure in a wireless communication system to which the present disclosure may be applied.

In reference to FIG. 4 and FIG. 5, a slot includes a plurality of symbols in a time domain. For example, for a normal CP, one slot includes 7 symbols, but for an extended CP, one slot includes 6 symbols.

A carrier includes a plurality of subcarriers in a frequency domain. An RB (Resource Block) is defined as a plurality of (e.g., 12) consecutive subcarriers in a frequency domain. A BWP(Bandwidth Part) is defined as a plurality of consecutive (physical) resource blocks in a frequency domain and may correspond to one numerology (e.g., an SCS, a CP length, etc.). A carrier may include a maximum N (e.g., 5) BWPs. A data communication may be performed through an activated BWP and only one BWP may be activated for one terminal. In a resource grid, each element is referred to as a resource element (RE) and one complex symbol may be mapped.

In an NR system, up to 400 MHz may be supported per component carrier (CC). If a terminal operating in such a wideband CC always operates turning on a radio frequency (FR) chip for the whole CC, terminal battery consumption may increase. Alternatively, when several application cases operating in one wideband CC (e.g., eMBB, URLLC, Mmtc, V2X, etc.) are considered, a different numerology (e.g., a subcarrier spacing, etc.) may be supported per frequency band in a corresponding CC. Alternatively, each terminal may have a different capability for the maximum bandwidth. By considering it, a base station may indicate a terminal to operate only in a partial bandwidth, not in a full bandwidth of a wideband CC, and a corresponding partial bandwidth is defined as a bandwidth part (BWP) for convenience. A BWP may be configured with consecutive RBs on a frequency axis and may correspond to one numerology (e.g., a subcarrier spacing, a CP length, a slot/a mini-slot duration).

Meanwhile, a base station may configure a plurality of BWPs even in one CC configured to a terminal. For example, a BWP occupying a relatively small frequency domain may be configured in a PDCCH monitoring slot, and a PDSCH indicated by a PDCCH may be scheduled in a greater BWP. Alternatively, when UEs are congested in a specific BWP, some terminals may be configured with other BWP for load balancing. Alternatively, considering frequency domain inter-cell interference cancellation between neighboring cells, etc., some middle spectrums of a full bandwidth may be excluded and BWPs on both edges may be configured in the same slot. In other words, a base station may configure at least one DL/UL BWP to a terminal associated with a wideband CC. A base station may activate at least one DL/UL BWP of configured DL/UL BWP(s) at a specific time (by L1 signaling or MAC CE (Control Element) or RRC signaling, etc.). In addition, a base station may indicate switching to other configured DL/UL BWP (by L1 signaling or MAC CE or RRC signaling, etc.). Alternatively, based on a timer, when a timer value is expired, it may be switched to a determined DL/UL BWP. Here, an activated DL/UL BWP is defined as an active DL/UL BWP. But, a configuration on a DL/UL BWP may not be received when a terminal performs an initial access procedure or before a RRC connection is set up, so a DL/UL BWP which is assumed by a terminal under these situations is defined as an initial active DL/UL BWP.

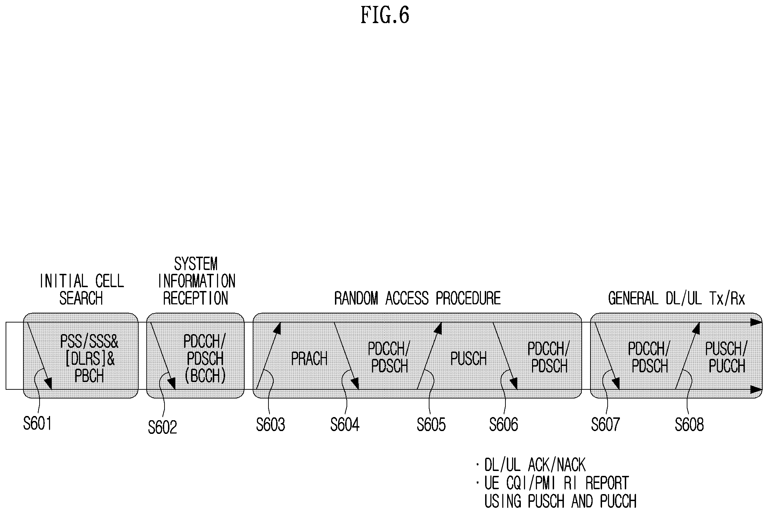

FIG. 6 illustrates physical channels used in a wireless communication system to which the present disclosure may be applied and a general signal transmission and reception method using them.

In a wireless communication system, a terminal receives information through a downlink from a base station and transmits information through an uplink to a base station. Information transmitted and received by a base station and a terminal includes data and a variety of control information and a variety of physical channels exist according to a type/a usage of information transmitted and received by them.

When a terminal is turned on or newly enters a cell, it performs an initial cell search including synchronization with a base station or the like (S601). For the initial cell search, a terminal may synchronize with a base station by receiving a primary synchronization signal (PSS) and a secondary synchronization signal (SSS) from a base station and obtain information such as a cell identifier (ID), etc. After that, a terminal may obtain broadcasting information in a cell by receiving a physical broadcast channel (PBCH) from a base station. Meanwhile, a terminal may check out a downlink channel state by receiving a downlink reference signal (DL RS) at an initial cell search stage.

A terminal which completed an initial cell search may obtain more detailed system information by receiving a physical downlink control channel (PDCCH) and a physical downlink shared channel (PDSCH) according to information carried in the PDCCH (S602).

Meanwhile, when a terminal accesses to a base station for the first time or does not have a radio resource for signal transmission, it may perform a random access (RACH) procedure to a base station (S603 to S606). For the random access procedure, a terminal may transmit a specific sequence as a preamble through a physical random access channel (PRACH) (S603 and S605) and may receive a response message for a preamble through a PDCCH and a corresponding PDSCH (S604 and S606). A contention based RACH may additionally perform a contention resolution procedure.

A terminal which performed the above-described procedure subsequently may perform PDCCH/PDSCH reception (S607) and PUSCH(Physical Uplink Shared Channel)/PUCCH(physical uplink control channel) transmission (S608) as a general uplink/downlink signal transmission procedure. In particular, a terminal receives downlink control information (DCI) through a PDCCH. Here, DCI includes control information such as resource allocation information for a terminal and a format varies depending on its purpose of use.

Meanwhile, control information which is transmitted by a terminal to a base station through an uplink or is received by a terminal from a base station includes a downlink/uplink ACK/NACK(Acknowledgement/Non-Acknowledgement) signal, a CQI(Channel Quality Indicator), a PMI(Precoding Matrix Indicator), a RI(Rank Indicator), etc. For a 3GPP LTE system, a terminal may transmit control information of the above-described CQI/PMI/RI, etc. through a PUSCH and/or a PUCCH.

Table 5 represents an example of a DCI format in an NR system.

[Table 5]

| DCI Format | Use |
|---|---|
| 0_0 | Scheduling of a PUSCH in one cell |
| 0_1 | Scheduling of one or multiple PUSCHs in one cell, or indication of cell group downlink feedback information to a UE |
| 0_2 | Scheduling of a PUSCH in one cell |
| 1_0 | Scheduling of a PDSCH in one DL cell |
| 1_1 | Scheduling of a PDSCH in one cell |
| 1_2 | Scheduling of a PDSCH in one cell |

In reference to Table 5, DCI formats 0_0, 0_1 and 0_2 may include resource information (e.g., UL/SUL(Supplementary UL), frequency resource allocation, time resource allocation, frequency hopping, etc.), information related to a transport block(TB) (e.g., MCS(Modulation Coding and Scheme), a NDI (New Data Indicator), a RV (Redundancy Version), etc.), information related to a HARQ(Hybrid - Automatic Repeat and request) (e.g., a process number, a DAI (Downlink Assignment Index), PDSCH-HARQ feedback timing, etc.), information related to multiple antennas (e.g., DMRS sequence initialization information, an antenna port, a CSI request, etc.), power control information (e.g., PUSCH power control, etc.) related to scheduling of a PUSCH and control information included in each DCI format may be pre-defined.

DCI format 0_0 is used for scheduling of a PUSCH in one cell. Information included in DCI format 0_0 is CRC (cyclic redundancy check) scrambled by a C-RNTI(Cell Radio Network Temporary Identifier) or a CS-RNTI (Configured Scheduling RNTI) or a MCS-C-RNTI(Modulation Coding Scheme Cell RNTI) and transmitted.

DCI format 0_1 is used to indicate scheduling of one or more PUSCHs or configure grant (CG) downlink feedback information to a terminal in one cell. Information included in DCI format 0_1 is CRC scrambled by a C-RNTI or a CS-RNTI or a SP-CSI-RNTI(Semi-Persistent CSI RNTI) or a MCS-C-RNTI and transmitted.

DCI format 0_2 is used for scheduling of a PUSCH in one cell. Information included in DCI format 0_2 is CRC scrambled by a C-RNTI or a CS-RNTI or a SP-CSI-RNTI or a MCS-C-RNTI and transmitted.

Next, DCI formats 1_0, 1_1 and 1_2 may include resource information (e.g., frequency resource allocation, time resource allocation, VRB (virtual resource block) -PRB (physical resource block) mapping, etc.), information related to a transport block (TB) (e. g., MCS, NDI, RV, etc.), information related to a HARQ (e.g., a process number, DAI, PDSCH-HARQ feedback timing, etc.), information related to multiple antennas (e.g., an antenna port, a TCI(transmission configuration indicator), a SRS(sounding reference signal) request, etc.), information related to a PUCCH (e.g., PUCCH power control, a PUCCH resource indicator, etc.) related to scheduling of a PDSCH and control information included in each DCI format may be pre-defined.

DCI format 1_0 is used for scheduling of a PDSCH in one DL cell. Information included in DCI format 1_0 is CRC scrambled by a C-RNTI or a CS-RNTI or a MCS-C-RNTI and transmitted.

DCI format 1_1 is used for scheduling of a PDSCH in one cell. Information included in DCI format 1_1 is CRC scrambled by a C-RNTI or a CS-RNTI or a MCS-C-RNTI and transmitted.

DCI format 1_2 is used for scheduling of a PDSCH in one cell. Information included in DCI format 1_2 is CRC scrambled by a C-RNTI or a CS-RNTI or a MCS-C-RNTI and transmitted.

CSI-related Operation

In an NR (New Radio) system, a CSI-RS(channel state information-reference signal) is used for time and/or frequency tracking, CSI computation, L1 (layer 1)-RSRP (reference signal received power) computation and mobility. Here, CSI computation is related to CSI acquisition and L1-RSRP computation is related to beam management (BM).

CSI (channel state information) collectively refers to information which may represent quality of a radio channel (or also referred to as a link) formed between a terminal and an antenna port.

- To perform one of the usages of a CSI-RS, a terminal (e.g., user equipment, UE) receives configuration information related to CSI from a base station (e.g., general Node B, gNB) through RRC(radio resource control) signaling.

The configuration information related to CSI may include at least one of information related to a CSI-IM (interference management) resource, information related to CSI measurement configuration, information related to CSI resource configuration, information related to a CSI-RS resource or information related to CSI report configuration.

i) Information related to a CSI-IM resource may include CSI-IM resource information, CSI-IM resource set information, etc. A CSI-IM resource set is identified by a CSI-IM resource set ID (identifier) and one resource set includes at least one CSI-IM resource. Each CSI-IM resource is identified by a CSI-IM resource ID.

ii) Information related to CSI resource configuration may be expressed as CSI-ResourceConfig IE. Information related to a CSI resource configuration defines a group which includes at least one of an NZP(non zero power) CSI-RS resource set, a CSI-IM resource set or a CSI-SSB resource set. In other words, the information related to a CSI resource configuration may include a CSI-RS resource set list and the CSI-RS resource set list may include at least one of a NZP CSI-RS resource set list, a CSI-IM resource set list or a CSI-SSB resource set list. A CSI-RS resource set is identified by a CSI-RS resource set ID and one resource set includes at least one CSI-RS resource. Each CSI-RS resource is identified by a CSI-RS resource ID.

Parameters representing a usage of a CSI-RS (e.g., a 'repetition' parameter related to BM, a 'trs-Info' parameter related to tracking) may be configured per NZP CSI-RS resource set.

iii) Information related to a CSI report configuration includes a report configuration type (reportConfigType) parameter representing a time domain behavior and a report quantity (reportQuantity) parameter representing CSI-related quantity for a report. The time domain behavior may be periodic, aperiodic or semi-persistent.

- A terminal measures CSI based on the configuration information related to CSI.

The CSI measurement may include (1) a process in which a terminal receives a CSI-RS and (2) a process in which CSI is computed through a received CSI-RS and detailed description thereon is described after.

For a CSI-RS, RE(resource element) mapping of a CSI-RS resource in a time and frequency domain is configured by higher layer parameter CSI-RS-ResourceMapping.

- A terminal reports the measured CSI to a base station.

In this case, when quantity of CSI-ReportConfig is configured as 'none (or No report)', the terminal may omit the report. But, although the quantity is configured as 'none (or No report)', the terminal may perform a report to a base station. When the quantity is configured as 'none', an aperiodic TRS is triggered or repetition is configured. In this case, only when repetition is configured as 'ON', a report of the terminal may be omitted.

CSI Measurement

An NR system supports more flexible and dynamic CSI measurement and reporting. Here, the CSI measurement may include a procedure of receiving a CSI-RS and acquiring CSI by computing a received CSI-RS.

As a time domain behavior of CSI measurement and reporting, aperiodic/semi-persistent/periodic CM (channel measurement) and IM (interference measurement) are supported. 4-port NZP CSI-RS RE pattern is used for CSI-IM configuration.

CSI-IM based IMR of NR has a design similar to CSI-IM of LTE and is configured independently from ZP CSI-RS resources for PDSCH rate matching. In addition, each port emulates an interference layer having (a desirable channel and) a precoded NZP CSI-RS in NZP CSI-RS-based IMR. As it is about intra-cell interference measurement for a multi-user case, MU interference is mainly targeted.

A base station transmits a precoded NZP CSI-RS to a terminal in each port of configured NZP CSI-RS based IMR.

A terminal assumes a channel/interference layer and measures interference for each port in a resource set.

When there is no PMI and RI feedback for a channel, a plurality of resources are configured in a set and a base station or a network indicates a subset of NZP CSI-RS resources through DCI for channel/interference measurement.

A resource setting and a resource setting configuration are described in more detail.

Resource Setting

Each CSI resource setting 'CSI-ResourceConfig' includes a configuration for a S≥1 CSI resource set (given by a higher layer parameter csi-RS-ResourceSetList). A CSI resource setting corresponds to CSI-RS- resourcesetlist. Here, S represents the number of configured CSI-RS resource sets. Here, a configuration for a S≥1 CSI resource set includes each CSI resource set including CSI-RS resources (configured with a NZP CSI-RS or CSI-IM) and a SS/PBCH block (SSB) resource used for L1-RSRP computation.

Each CSI resource setting is positioned at a DL BWP(bandwidth part) identified by a higher layer parameter bwp-id. In addition, all CSI resource settings linked to a CSI reporting setting have the same DL BWP.

A time domain behavior of a CSI-RS resource in a CSI resource setting included in a CSI-ResourceConfig IE may be indicated by a higher layer parameter resourceType and may be configured to be aperiodic, periodic or semi-persistent. For a periodic and semi-persistent CSI resource setting, the number (S) of configured CSI-RS resource sets is limited to '1'. For a periodic and semi-persistent CSI resource setting, configured periodicity and a slot offset are given by a numerology of an associated DL BWP as given by bwp-id.

When UE is configured with a plurality of CSI-ResourceConfigs including the same NZP CSI-RS resource ID, the same time domain behavior is configured for CSI-ResourceConfig.

When UE is configured with a plurality of CSI-ResourceConfigs including the same CSI-IM resource ID, the same time domain behavior is configured for CSI-ResourceConfig.

One or more CSI resource settings for channel measurement (CM) and interference measurement (IM) are configured through higher layer signaling as follows.

- CSI-IM resource for interference measurement
- NZP CSI-RS resource for interference measurement
- NZP CSI-RS resource for channel measurement

In other words, a CMR (channel measurement resource) may be a NZP CSI-RS for CSI acquisition and an IMR(Interference measurement resource) may be a NZP CSI-RS for CSI-IM and IM.

In this case, CSI-IM(or a ZP CSI-RS for IM) is mainly used for inter-cell interference measurement.

In addition, an NZP CSI-RS for IM is mainly used for intra-cell interference measurement from multi-users.

UE may assume that CSI-RS resource(s) for channel measurement and CSI-IM / NZP CSI-RS resource(s) for interference measurement configured for one CSI reporting are 'QCL-TypeD' per resource.

Resource Setting Configuration

As described, a resource setting may mean a resource set list.

For aperiodic CSI, each trigger state configured by using a higher layer parameter CSI-AperiodicTriggerState is associated with one or a plurality of CSI-ReportConfigs that each CSI-ReportConfig is linked to a periodic, semi-persistent or aperiodic resource setting.

One reporting setting may be connected to up to 3 resource settings.

- When one resource setting is configured, a resource setting (given by a higher layer parameter resourcesForChannelMeasurement) is about channel measurement for L1-RSRP computation.
- When two resource settings are configured, a first resource setting (given by a higher layer parameter resources-ForChannelMeasurement) is for channel measurement and a second resource setting (given by csi-IM-Resources-ForInterference or nzp-CSI-RS - ResourcesForInterference) is for interference measurement performed in CSI-IM or a NZP CSI-RS.

- When three resource settings are configured, a first resource setting (given by resourcesForChannelMeasurement) is for channel measurement, a second resource setting (given by csi-IM-ResourcesForInterference) is for CSI-IM based interference measurement and a third resource setting (given by nzp-CSI-RS-ResourcesForInterference) is for NZP CSI-RS based interference measurement.

For semi-persistent or periodic CSI, each CSI-ReportConfig is linked to a periodic or semi-persistent resource setting.

- When one resource setting (given by resourcesForChannelMeasurement) is configured, the resource setting is about channel measurement for L1-RSRP computation.
- When two resource settings are configured, a first resource setting (given by resourcesForChannelMeasurement) is for channel measurement and a second resourece setting (given by a higher layer parameter csi-IM-ResourcesFor-Interference) is used for interference measurement performed in CSI-IM.

CSI Computation

When interference measurement is performed in CSI-IM, each CSI-RS resource for channel measurement is associated with a CSI-IM resource per resource in an order of CSI-RS resources and CSI-IM resources in a corresponding resource set. The number of CSI-RS resources for channel measurement is the same as the number of CSI-IM resources.

In addition, when interference measurement is performed in an NZP CSI-RS, UE does not expect to be configured with one or more NZP CSI-RS resources in an associated resource set in a resource setting for channel measurement.

A terminal configured with a higher layer parameter nzp-CSI-RS-ResourcesForInterference does not expect that 18 or more NZP CSI-RS ports will be configured in a NZP CSI-RS resource set.

For CSI measurement, a terminal assumes the followings.

- Each NZP CSI-RS port configured for interference measurement corresponds to an interference transmission layer.
- All interference transmission layers of an NZP CSI-RS port for interference measurement consider EPRE (energy per resource element) ratio.
- A different interference signal in RE(s) of an NZP CSI-RS resource for channel measurement, an NZP CSI-RS resource for interference measurement or a CSI-IM resource for interference measurement

CSI Report

For a CSI report, a time and frequency resource which may be used by UE are controlled by a base station.

CSI(channel state information) may include at least one of a channel quality indicator (CQI), a precoding matrix indicator(PMI), a CSI-RS resource indicator (CRI), a SS/PBCH block resource indicator (SSBRI), a layer indicator (LI), a rank indicator (RI) or L1-RSRP.

For CQI, PMI, CRI, SSBRI, LI, RI, L1-RSRP, a terminal is configured by a higher layer with N≥1 CSI-ReportConfig reporting setting, M≥1 CSI-ResourceConfig resource setting and a list of one or two trigger states (provided by aperiodicTriggerStateList and semiPersistentOnPUSCH-TriggerStateList). Each trigger state in the aperiodicTrigger-StateList includes a associated CSI-ReportConfigs list which indicates a channel and optional resource set IDs for interference. In semiPersistentOnPUSCH-TriggerStateList, one associated CSI-ReportConfig is included in each trigger state.

In addition, a time domain behavior of CSI reporting supports periodic, semi-persistent, aperiodic.

i) Periodic CSI reporting is performed in a short PUCCH, a long PUCCH. Periodicity and a slot offset of periodic CSI reporting may be configured by RRC and refers to a CSI-ReportConfig IE.

ii) SP(semi-periodic) CSI reporting is performed in a short PUCCH, a long PUCCH, or a PUSCH.

For SP CSI in a short/long PUCCH, periodicity and a slot offset are configured by RRC and a CSI report is activated/deactivated by separate MAC CE / DCI.

For SP CSI in a PUSCH, periodicity of SP CSI reporting is configured by RRC, but a slot offset is not configured by RRC and SP CSI reporting is activated/deactivated by DCI (format 0_1). For SP CSI reporting in a PUSCH, a separated RNTI (SP-CSI C-RNTI) is used.

An initial CSI report timing follows a PUSCH time domain allocation value indicated by DCI and a subsequent CSI report timing follows a periodicity configured by RRC.

DCI format 0_1 may include a CSI request field and activate/deactivate a specific configured SP-CSI trigger state. SP CSI reporting has activation/deactivation equal or similar to a mechanism having data transmission in a SPS PUSCH.

iii) Aperiodic CSI reporting is performed in a PUSCH and is triggered by DCI. In this case, information related to trigger of aperiodic CSI reporting may be delivered/indicated/configured through MAC-CE.

For AP CSI having an AP CSI-RS, AP CSI-RS timing is configured by RRC and timing for AP CSI reporting is dynamically controlled by DCI.

In NR, a method of dividing and reporting CSI in a plurality of reporting instances applied to a PUCCH based CSI report in LTE (e.g., transmitted in an order of RI, WB PMI/CQI, SB PMI/CQI) is not applied. Instead, in NR, there is a limit that a specific CSI report is not configured in a short/long PUCCH and a CSI omission rule is defined. In addition, regarding AP CSI reporting timing, a PUSCH symbol/slot location is dynamically indicated by DCI. In addition, candidate slot offsets are configured by RRC. For CSI reporting, a slot offset(Y) is configured per reporting setting. For UL-SCH, a slot offset K2 is separately configured.

2 CSI latency classes (low latency class, high latency class) are defined with regard to CSI computation complexity. Low latency CSI is WB CSI which includes up to 4 ports Type-I codebooks or up to 4 ports non-PMI feedback CSI. High latency CSI refers to CSI other than low latency CSI. For a normal terminal, (Z, Z') is defined in a unit of OFDM symbols. Here, Z represents the minimum CSI processing time until a CSI report is performed after receiving aperiodic CSI triggering DCI. In addition, Z' refers to the minimum CSI processing time until a CSI report is performed after receiving a CSI-RS for a channel/interference.

Additionally, a terminal reports the number of CSI which may be calculated at the same time.

Hereinafter, the CSI reporting configuration defined in 38.214 is described.

A UE calculates CSI parameters by assuming the following dependencies between CSI parameters.

- LI is calculated conditional on the reported CQI, PMI, RI and CRI.
- CQI is calculated conditional on the reported PMI, RI, and CRI.
- PMI is calculated conditional on the reported RI and CRI.
- RI is calculated conditional on the reported CRI.

The reporting configuration for CSI may be aperiodic (using PUSCH), periodic (using PUCCH), or semi-persistent (using PUCCH, and PUSCH activated by DCI), and CSI-RS resources may be periodic, semi-persistent or aperiodic. Table 6 below illustrates the supported combinations between CSI reporting configurations and CSI resource configurations and how CSI reporting is triggered for each CSI resource configuration. A periodic CSI-RS is configured by the higher layer. A semi-persistent CSI-RS is activated or deactivated according to the behavior defined in TS 38.214. An aperiodic CSI-RS is configured and triggered/activated according to the operations defined in TS 38.214.

Table 6 illustrates triggering/activation of CSI reporting for possible CSI-RS configurations.

[Table 6]

| CSI-RS configuration | Periodic CSI reporting | Semi-persistent CSI reporting | Aperiodic CSI reporting |
|---|---|---|---|
| Periodic CSI-RS | No dynamic triggering/act ivation | In reporting on a PUCCH, a UE receives an activation command. For reporting on a PUSCH, a UE receives triggering on DCI. | Triggered by DCI; Additionally, an activation command is possible. |
| Semi-persistent CSI-RS | Not supported | In reporting on a PUCCH, a UE receives an activation command. For reporting on a PUSCH, a UE receives triggering on DCI. | Triggered by DCI; Additionally, an activation command is possible. |
| Aperiodic CSI-RS | Not supported | Not supported | Triggered by DCI; Additionally, an activation command is possible. |

Hereinafter, information related to activation/deactivation/triggering by MAC-CE related to semi-persistent/aperiodic CSI reporting defined in TS 38.321 is exemplified.

- Activation/deactivation of semi-persistent CSI-RS/CSI-IM resource set

By transmitting a semi-persistent (SP) CSI-RS/CSI-IM Resource Set Activation/Deactivation MAC CE, a network may activate and/or deactivate the semi-persistent CSI-RS/CSI-IM resource set configured in a serving cell. The configured semi-persistent CSI-RS/CSI-IM resource set is deactivated initially upon configuration and after handover.

A MAC entity does

i) When the MAC entity receives a SP CSI-RS/CSI-IM Resource Set Activation/Deactivation MAC CE on a serving cell,

ii) Indicates information related to a SP CSI-RS/CSI-IM Resource Set Activation/Deactivation MAC CE to a lower layer.

- Aperiodic CSI trigger state sub-selection

By transmitting an Aperiodic CSI Trigger State Subselection MAC CE, a network may select among the configured aperiodic CSI trigger states of a serving cell.

A MAC entity does

i) When the MAC entity receives an Aperiodic CSI Trigger State Subselection MAC CE on a serving cell,

ii) Indicates information related to an Aperiodic CSI Trigger State Subselection MAC CE to a lower layer.

Quasi-co Locaton (QCL)

An antenna port is defined so that a channel where a symbol in an antenna port is transmitted can be inferred from a channel where other symbol in the same antenna port is transmitted. When a property of a channel where a symbol in one antenna port is carried may be inferred from a channel where a symbol in other antenna port is carried, it may be said that 2 antenna ports are in a QC/QCL (quasi co-located or quasi co-location) relationship.

Here, the channel property includes at least one of delay spread, doppler spread, frequency/doppler shift, average received power, received timing/average delay, or a spatial RX parameter. Here, a spatial Rx parameter means a spatial (Rx) channel property parameter such as an angle of arrival.

A terminal may be configured at list of up to M TCI-State configurations in a higher layer parameter PDSCH-Config to decode a PDSCH according to a detected PDCCH having intended DCI for a corresponding terminal and a given serving cell. The M depends on UE capability.

Each TCI-State includes a parameter for configuring a quasi co-location relationship between ports of one or two DL reference signals and a DM-RS(demodulation reference signal) of a PDSCH.

A quasi co-location relationship is configured by a higher layer parameter qcl-Type1 for a first DL RS and qcl-Type2 for a second DL RS (if configured). For two DL RSs, a QCL type is not the same regardless of whether a reference is a same DL RS or a different DL RS.

A QCL type corresponding to each DL RS is given by a higher layer parameter qcl-Type of QCL-Info and may take one of the following values.

- 'QCL-TypeA': {Doppler shift, Doppler spread, average delay, delay spread}
- 'QCL-TypeB': {Doppler shift, Doppler spread}
- 'QCL-TypeC': {Doppler shift, average delay}
- 'QCL-TypeD': {Spatial Rx parameter}

For example, when a target antenna port is a specific NZP CSI-RS, it may be indicated/configured that a corresponding NZP CSI-RS antenna port is quasi-colocated with a specific TRS with regard to QCL-Type A and is quasi-colocated with a specific SSB with regard to QCL-Type D. A terminal received such indication/configuration may receive a corresponding NZP CSI-RS by using a doppler, delay value measured in a QCL-TypeA TRS and apply a Rx beam used for receiving QCL-TypeD SSB to reception of a corresponding NZP CSI-RS.

UE may receive an activation command by MAC CE signaling used to map up to 8 TCI states to a codepoint of a DCI field 'Transmission Configuration Indication'.

Type-II codebook

Table 7 illustrates the Type II codebook described in 3GPP TS 38.214 in Rel-15 and Rel-16.

【Table 7】

### 5.2.2.2.3 Type II Codebook

For 4 antenna ports {3000, 3001, ..., 3003}, 8 antenna ports {3000, 3001, ..., 3007}, 12 antenna ports {3000, 3001, ..., 3011}, 16 antenna ports {3000, 3001, ..., 3015}, 24 antenna ports {3000, 3001, ..., 3023}, and 32 antenna ports {3000, 3001, ..., 3031}, and the UE configured with higher layer parameter *codebookType* set to 'typeII'

- The values of $N_1$ and $N_2$ are configured with the higher layer parameter *n1-n2-codebookSubsetRestriction*. The supported configurations of $(N_1, N_2)$ for a given number of CSI-RS ports and the corresponding values of $(O_1, O_2)$ are given in Table 5.2.2.2.1-2. The number of CSI-RS ports, $P_{\text{CSI-RS}}$, is $2N_1N_2$.

- The value of $L$ is configured with the higher layer parameter *numberOfBeams*, where $L = 2$ when $P_{\text{CSI-RS}} = 4$ and $L \in \{2, 3, 4\}$ when $P_{\text{CSI-RS}} > 4$.

- The value of $N_{\text{PSK}}$ is configured with the higher layer parameter *phaseAlphabetSize*, where $N_{\text{PSK}} \in \{4, 8\}$.

- The UE is configured with the higher layer parameter *subbandAmplitude* set to 'true' or 'false'.

- The UE shall not report RI > 2.

When $\upsilon \leq 2$, where $\upsilon$ is the associated RI value, each PMI value corresponds to the codebook indices $i_1$ and $i_2$ where

$$i_1 = \begin{cases} \begin{bmatrix} i_{1,1} & i_{1,2} & i_{1,3,1} & i_{1,4,1} \end{bmatrix} & \upsilon = 1 \\ \begin{bmatrix} i_{1,1} & i_{1,2} & i_{1,3,1} & i_{1,4,1} & i_{1,3,2} & i_{1,4,2} \end{bmatrix} & \upsilon = 2 \end{cases}$$

- $$i_2 = \begin{cases} \begin{bmatrix} i_{2,1,1} \end{bmatrix} & subbandAmplitude = \text{'false'}, \ \upsilon = 1 \ .. \\ \begin{bmatrix} i_{2,1,1} & i_{2,1,2} \end{bmatrix} & subbandAmplitude = \text{'false'}, \ \upsilon = 2 \\ \begin{bmatrix} i_{2,1,1} & i_{2,2,1} \end{bmatrix} & subbandAmplitude = \text{'true'}, \ \upsilon = 1 \\ \begin{bmatrix} i_{2,1,1} & i_{2,2,1} & i_{2,1,2} & i_{2,2,2} \end{bmatrix} & subbandAmplitude = \text{'true'}, \ \upsilon = 2 \end{cases}$$

The $L$ vectors combined by the codebook are identified by the indices $i_{1,1}$ and $i_{1,2}$, where

- $$i_{1,1} = \begin{bmatrix} q_1 & q_2 \end{bmatrix}$$
$$q_1 \in \{0, 1, ..., O_1 - 1\}$$
$$q_2 \in \{0, 1, ..., O_2 - 1\}$$

- $$i_{1,2} \in \left\{ 0, 1, ..., \binom{N_1 N_2}{L} - 1 \right\}.$$

Let

- $$n_1 = \begin{bmatrix} n_1^{(0)}, ..., n_1^{(L-1)} \end{bmatrix}$$
$$n_2 = \begin{bmatrix} n_2^{(0)}, ..., n_2^{(L-1)} \end{bmatrix}$$
$$n_1^{(i)} \in \{0, 1, ..., N_1 - 1\}$$
$$n_2^{(i)} \in \{0, 1, ..., N_2 - 1\}$$

and

- $$C(x, y) = \begin{cases} \binom{x}{y} & x \geq y \\ 0 & x < y \end{cases}.$$

where the values of $C(x, y)$ are given in Table 5.2.2.2.3-1.

Then the elements of $n_1$ and $n_2$ are found from $i_{1,2}$ using the algorithm:

$$s_{-1} = 0$$

for $i = 0, \ldots, L-1$

  Find the largest $x^* \in \{L-1-i, \ldots, N_1 N_2 - 1 - i\}$ in Table 5.2.2.2.3-1 such that $i_{1,2} - s_{i-1} \geq C\left(x^*, L-i\right)$

$$e_i = C\left(x^*, L-i\right)$$

$$s_i = s_{i-1} + e_i$$

$$n^{(i)} = N_1 N_2 - 1 - x^*$$

$$n_1^{(i)} = n^{(i)} \bmod N_1$$

$$n_2^{(i)} = \frac{\left(n^{(i)} - n_1^{(i)}\right)}{N_1}$$

When $n_1$ and $n_2$ are known, $i_{1,2}$ is found using:

$$n^{(i)} = N_1 n_2^{(i)} + n_1^{(i)}$$ where the indices $i = 0, 1, \ldots, L-1$ are assigned such that $n^{(i)}$ increases as $i$ increases

$$i_{1,2} = \sum_{i=0}^{L-1} C\left(N_1 N_2 - 1 - n^{(i)}, L-i\right),$$ where $C(x, y)$ is given in Table 5.2.2.2.3-1.

- If $N_2 = 1$, $q_2 = 0$ and $n_2^{(i)} = 0$ for $i = 0, 1, \ldots, L-1$, and $q_2$ is not reported.

- When $(N_1, N_2) = (2, 1)$, $n_1 = [0, 1]$ and $n_2 = [0, 0]$, and $i_{1,2}$ is not reported.

- When $(N_1, N_2) = (4, 1)$ and $L = 4$, $n_1 = [0, 1, 2, 3]$ and $n_2 = [0, 0, 0, 0]$, and $i_{1,2}$ is not reported.

- When $(N_1, N_2) = (2, 2)$ and $L = 4$, $n_1 = [0, 1, 0, 1]$ and $n_2 = [0, 0, 1, 1]$, and $i_{1,2}$ is not reported.

**Table 5.2.2.2.3-1: Combinatorial coefficients $C(x, y)$**

| $x$ \ $y$ | 1 | 2 | 3 | 4 |
|---|---|---|---|---|
| 0 | 0 | 0 | 0 | 0 |
| 1 | 1 | 0 | 0 | 0 |
| 2 | 2 | 1 | 0 | 0 |
| 3 | 3 | 3 | 1 | 0 |
| 4 | 4 | 6 | 4 | 1 |
| 5 | 5 | 10 | 10 | 5 |
| 6 | 6 | 15 | 20 | 15 |
| 7 | 7 | 21 | 35 | 35 |
| 8 | 8 | 28 | 56 | 70 |
| 9 | 9 | 36 | 84 | 126 |
| 10 | 10 | 45 | 120 | 210 |
| 11 | 11 | 55 | 165 | 330 |
| 12 | 12 | 66 | 220 | 495 |
| 13 | 13 | 78 | 286 | 715 |
| 14 | 14 | 91 | 364 | 1001 |
| 15 | 15 | 105 | 455 | 1365 |

The strongest coefficient on layer $l, l = 1, ..., \upsilon$ is identified by $i_{1,3,l} \in \{0, 1, ..., 2L - 1\}$.

The amplitude coefficient indicators $i_{1,4,l}$ and $i_{2,2,l}$ are

- 
$$i_{1,4,l} = \left[ k_{l,0}^{(1)}, k_{l,1}^{(1)}, ..., k_{l,2L-1}^{(1)} \right]$$
$$i_{2,2,l} = \left[ k_{l,0}^{(2)}, k_{l,1}^{(2)}, ..., k_{l,2L-1}^{(2)} \right]$$
$$k_{l,i}^{(1)} \in \{0, 1, ..., 7\}$$
$$k_{l,i}^{(2)} \in \{0, 1\}$$

for $l = 1, ..., \upsilon$. The mapping from $k_{l,i}^{(1)}$ to the amplitude coefficient $p_{l,i}^{(1)}$ is given in Table 5.2.2.2.3-2 and the mapping from $k_{l,i}^{(2)}$ to the amplitude coefficient $p_{l,i}^{(2)}$ is given in Table 5.2.2.2.3-3. The amplitude coefficients are represented by

- 
$$p_l^{(1)} = \left[ p_{l,0}^{(1)}, p_{l,1}^{(1)}, ..., p_{l,2L-1}^{(1)} \right]$$
$$p_l^{(2)} = \left[ p_{l,0}^{(2)}, p_{l,1}^{(2)}, ..., p_{l,2L-1}^{(2)} \right]$$

for $l = 1, ..., \upsilon$.

**Table 5.2.2.2.3-2: Mapping of elements of $i_{1,4,l}$: $k_{l,i}^{(1)}$ to $p_{l,i}^{(1)}$**

| $k_{l,i}^{(1)}$ | $p_{l,i}^{(1)}$ |
|---|---|
| 0 | 0 |
| 1 | $\sqrt{1/64}$ |
| 2 | $\sqrt{1/32}$ |
| 3 | $\sqrt{1/16}$ |
| 4 | $\sqrt{1/8}$ |
| 5 | $\sqrt{1/4}$ |
| 6 | $\sqrt{1/2}$ |
| 7 | 1 |

**Table 5.2.2.2.3-3: Mapping of elements of $i_{2,2,l}$: $k_{l,i}^{(2)}$ to $p_{l,i}^{(2)}$**

| $k_{l,i}^{(2)}$ | $p_{l,i}^{(2)}$ |
|---|---|
| 0 | $\sqrt{1/2}$ |
| 1 | 1 |

The phase coefficient indicators are

- 
$$i_{2,1,l} = \left[ c_{l,0}, c_{l,1}, ..., c_{l,2L-1} \right]$$

for $l = 1,\ldots,\upsilon$.

The amplitude and phase coefficient indicators are reported as follows:

- The indicators $k^{(1)}_{l,i_{1,3,l}} = 7$, $k^{(2)}_{l,i_{1,3,l}} = 1$, and $c_{l,i_{1,3,l}} = 0$ ($l = 1,\ldots,\upsilon$). $k^{(1)}_{l,i_{1,3,l}}$, $k^{(2)}_{l,i_{1,3,l}}$, and $c_{l,i_{1,3,l}}$ are not reported for $l = 1,\ldots,\upsilon$.

- The remaining $2L-1$ elements of $i_{1,4,l}$ ($l = 1,\ldots,\upsilon$) are reported, where $k^{(1)}_{l,i} \in \{0,1,\ldots,7\}$. Let $M_l$ ($l = 1,\ldots,\upsilon$) be the number of elements of $i_{1,4,l}$ that satisfy $k^{(1)}_{l,i} > 0$.

- The remaining $2L-1$ elements of $i_{2,1,l}$ and $i_{2,2,l}$ ($l = 1,\ldots,\upsilon$) are reported as follows:

  - When *subbandAmplitude* is set to 'false',

    - $k^{(2)}_{l,i} = 1$ for $l = 1,\ldots,\upsilon$, and $i = 0,1,\ldots,2L-1$. $i_{2,2,l}$ is not reported for $l = 1,\ldots,\upsilon$.

    - For $l = 1,\ldots,\upsilon$, the elements of $i_{2,1,l}$ corresponding to the coefficients that satisfy $k^{(1)}_{l,i} > 0$, $i \neq i_{1,3,l}$, as determined by the reported elements of $i_{1,4,l}$, are reported, where $c_{l,i} \in \{0,1,\ldots,N_{PSK}-1\}$ and the remaining $2L - M_l$ elements of $i_{2,1,l}$ are not reported and are set to $c_{l,i} = 0$.

  - When *subbandAmplitude* is set to 'true',

    - For $l = 1,\ldots,\upsilon$, the elements of $i_{2,2,l}$ and $i_{2,1,l}$ corresponding to the $\min(M_l, K^{(2)}) - 1$ strongest coefficients (excluding the strongest coefficient indicated by $i_{1,3,l}$), as determined by the corresponding reported elements of $i_{1,4,l}$, are reported, where $k^{(2)}_{l,i} \in \{0,1\}$ and $c_{l,i} \in \{0,1,\ldots,N_{PSK}-1\}$. The values of $K^{(2)}$ are given in Table 5.2.2.2.3-4. The remaining $2L - \min(M_l, K^{(2)})$ elements of $i_{2,2,l}$ are not reported and are set to $k^{(2)}_{l,i} = 1$. The elements of $i_{2,1,l}$ corresponding to the $M_l - \min(M_l, K^{(2)})$ weakest non-zero coefficients are reported, where $c_{l,i} \in \{0,1,2,3\}$. The remaining $2L - M_l$ elements of $i_{2,1,l}$ are not reported and are set to $c_{l,i} = 0$.

    - When two elements, $k^{(1)}_{l,x}$ and $k^{(1)}_{l,y}$, of the reported elements of $i_{1,4,l}$ are identical ($k^{(1)}_{l,x} = k^{(1)}_{l,y}$), then element $\min(x,y)$ is prioritized to be included in the set of the $\min(M_l, K^{(2)}) - 1$ strongest coefficients for $i_{2,1,l}$ and $i_{2,2,l}$ ($l = 1,\ldots,\upsilon$) reporting.

**Table 5.2.2.2.3-4: Full resolution subband coefficients when *subbandAmplitude* is set to 'true'**

| $L$ | $K^{(2)}$ |
|-----|-----------|
| 2 | 4 |
| 3 | 4 |
| 4 | 6 |

The codebooks for 1-2 layers are given in Table 5.2.2.2.3-5, where the indices $m_1^{(i)}$ and $m_2^{(i)}$ are given by

$$m_1^{(i)} = O_1 n_1^{(i)} + q_1$$
$$m_2^{(i)} = O_2 n_2^{(i)} + q_2$$

for $i = 0,1,...,L-1$, and the quantities $\varphi_{l,i}$, $u_m$, and $v_{l,m}$ are given by

$$\varphi_{l,i} = \begin{cases} e^{j2\pi c_{l,i}/N_{PSK}} & subbandAmplitude = \text{'false'} \\ e^{j2\pi c_{l,i}/N_{PSK}} & subbandAmplitude = \text{'true'}, \ \min\left(M_l, K^{(2)}\right) \text{ strongest coefficients (including } i_{1,3,l}) \text{ with } k_{l,i}^{(1)} > 0 \\ e^{j2\pi c_{l,i}/4} & subbandAmplitude = \text{'true'}, \ M_l - \min\left(M_l, K^{(2)}\right) \text{ weakest coefficients with } k_{l,i}^{(1)} > 0 \\ 1 & subbandAmplitude = \text{'true'}, \ 2L - M_l \text{ coefficients with } k_{l,i}^{(1)} = 0 \end{cases}$$

• $u_m = \begin{cases} \begin{bmatrix} 1 & e^{j\frac{2\pi m}{O_2 N_2}} & \cdots & e^{j\frac{2\pi m(N_2-1)}{O_2 N_2}} \end{bmatrix} & N_2 > 1 \\ 1 & N_2 = 1 \end{cases}$

$$v_{l,m} = \begin{bmatrix} u_m & e^{j\frac{2\pi l}{O_1 N_1}} u_m & \cdots & e^{j\frac{2\pi l(N_1-1)}{O_1 N_1}} u_m \end{bmatrix}^T$$

**Table 5.2.2.2.3-5: Codebook for 1-layer and 2-layer CSI reporting using antenna ports 3000 to 2999+$P_{CSI-RS}$**

| Layers | |
|--------|---|
| $\upsilon = 1$ | $W^{(1)}_{q_1,q_2,n_1,n_2,p_1^{(1)},p_1^{(2)},i_{2,1,1}} = W^1_{q_1,q_2,n_1,n_2,p_1^{(1)},p_1^{(2)},i_{2,1,1}}$ |
| $\upsilon = 2$ | $W^{(2)}_{q_1,q_2,n_1,n_2,p_1^{(1)},p_1^{(2)},i_{2,1,1},p_2^{(1)},p_2^{(2)},i_{2,1,2}} = \frac{1}{\sqrt{2}}\begin{bmatrix} W^1_{q_1,q_2,n_1,n_2,p_1^{(1)},p_1^{(2)},i_{2,1,1}} & W^2_{q_1,q_2,n_1,n_2,p_2^{(1)},p_2^{(2)},i_{2,1,2}} \end{bmatrix}$ |

where $W^l_{q_1,q_2,n_1,n_2,p_l^{(1)},p_l^{(2)},c_l} = \dfrac{1}{\sqrt{N_1 N_2 \sum\limits_{i=0}^{2L-1}\left(p_{l,i}^{(1)} p_{l,i}^{(2)}\right)^2}} \begin{bmatrix} \sum\limits_{i=0}^{L-1} v_{m_1^{(i)},m_2^{(i)}} p_{l,i}^{(1)} p_{l,i}^{(2)} \varphi_{l,i} \\ \sum\limits_{i=0}^{L-1} v_{m_1^{(i)},m_2^{(i)}} p_{l,i+L}^{(1)} p_{l,i+L}^{(2)} \varphi_{l,i+L} \end{bmatrix}$, $l = 1,2$,

and the mappings from $i_1$ to $q_1$, $q_2$, $n_1$, $n_2$, $p_1^{(1)}$, and $p_2^{(1)}$, and from $i_2$ to $i_{2,1,1}$, $i_{2,1,2}$, $p_1^{(2)}$ and $p_2^{(2)}$ are as described above, including the ranges of the constituent indices of $i_1$ and $i_2$.

When the UE is configured with higher layer parameter *codebookType* set to 'typeII', the bitmap parameter *typeII-RI-Restriction* forms the bit sequence $r_1, r_0$ where $r_0$ is the LSB and $r_1$ is the MSB. When $r_i$ is zero, $i \in \{0,1\}$, PMI and RI reporting are not allowed to correspond to any precoder associated with $\upsilon = i+1$ layers. The bitmap parameter *n1-n2-codebookSubsetRestriction* forms the bit sequence $B = B_1 B_2$ where bit sequences $B_1$, and $B_2$ are concatenated to form $B$. To define $B_1$ and $B_2$, first define the $O_1 O_2$ vector groups $G(r_1,r_2)$ as

• $G(r_1,r_2) = \left\{ v_{N_1 r_1 + x_1, N_2 r_2 + x_2} : x_1 = 0,1,...,N_1-1; x_2 = 0,1,...,N_2-1 \right\}$

for

• $r_1 \in \{0,1,...,O_1-1\}$
$r_2 \in \{0,1,...,O_2-1\}$.

The UE shall be configured with restrictions for 4 vector groups indicated by $\left(r_1^{(k)}, r_2^{(k)}\right)$ for $k = 0,1,2,3$ and identified by the group indices

$$g^{(k)} = O_1 r_2^{(k)} + r_1^{(k)}$$

for $k = 0,1,...,3$, where the indices are assigned such that $g^{(k)}$ increases as $k$ increases. The remaining vector groups are not restricted.

- If $N_2 = 1$, $g^{(k)} = k$ for $k = 0,1,...,3$, and $B_1$ is empty.

- If $N_2 > 1$, $B_1 = b_1^{(10)} \cdots b_1^{(0)}$ is the binary representation of the integer $\beta_1$ where $b_1^{(10)}$ is the MSB and $b_1^{(0)}$ is the LSB. $\beta_1$ is found using:

$$\beta_1 = \sum_{k=0}^{3} C\left(O_1 O_2 - 1 - g^{(k)}, 4 - k\right),$$

where $C(x, y)$ is defined in Table 5.2.2.2.3-1. The group indices $g^{(k)}$ and indicators $\left(r_1^{(k)}, r_2^{(k)}\right)$ for $k = 0,1,2,3$ may be found from $\beta_1$ using the algorithm:

$s_{-1} = 0$

for $k = 0,...,3$

    Find the largest $x^* \in \{3-k,...,O_1 O_2 - 1 - k\}$ such that $\beta_1 - s_{k-1} \geq C\left(x^*, 4-k\right)$

    $e_k = C\left(x^*, 4-k\right)$

    $s_k = s_{k-1} + e_k$

    $g^{(k)} = O_1 O_2 - 1 - x^*$

    $r_1^{(k)} = g^{(k)} \bmod O_1$

    $r_2^{(k)} = \dfrac{\left(g^{(k)} - r_1^{(k)}\right)}{O_1}$

The bit sequence $B_2 = B_2^{(0)} B_2^{(1)} B_2^{(2)} B_2^{(3)}$ is the concatenation of the bit sequences $B_2^{(k)}$ for $k = 0,1,...,3$, corresponding to the group indices $g^{(k)}$. The bit sequence $B_2^{(k)}$ is defined as

$$B_2^{(k)} = b_2^{(k, 2N_1 N_2 - 1)} \cdots b_2^{(k,0)}$$

Bits $b_2^{(k, 2(N_1 x_2 + x_1) + 1)} b_2^{(k, 2(N_1 x_2 + x_1))}$ indicate the maximum allowed amplitude coefficient $p_{l,i}^{(1)}$ for the vector in group $g^{(k)}$ indexed by $x_1, x_2$, where the maximum amplitude coefficients are given in Table 5.2.2.2.3-6. A UE that does not report parameter *amplitudeSubsetRestriction* = 'supported' in its capability signaling is not expected to be configured with $b_2^{(k, 2(N_1 x_2 + x_1) + 1)} b_2^{(k, 2(N_1 x_2 + x_1))}$ = 01 or 10.

**Table 5.2.2.2.3-6: Maximum allowed amplitude coefficients for restricted vectors**

| Bits $b_2^{(k, 2(N_1 x_2 + x_1) + 1)} b_2^{(k, 2(N_1 x_2 + x_1))}$ | Maximum Amplitude Coefficient $p_{l,i}^{(1)}$ |
|---|---|
| 00 | 0 |
| 01 | $\sqrt{1/4}$ |

| 10 | $\sqrt{1/2}$ |
|----|------|
| 11 | 1 |

## 5.2.2.2.4 Type II Port Selection Codebook

For 4 antenna ports {3000, 3001, ..., 3003}, 8 antenna ports {3000, 3001, ..., 3007}, 12 antenna ports {3000, 3001, ..., 3011}, 16 antenna ports {3000, 3001, ..., 3015}, 24 antenna ports {3000, 3001, ..., 3023}, and 32 antenna ports {3000, 3001, ..., 3031}, and the UE configured with higher layer parameter *codebookType* set to 'typeII-PortSelection'

- The number of CSI-RS ports is given by $P_{CSI\text{-}RS} \in \{4, 8, 12, 16, 24, 32\}$ as configured by higher layer parameter *nrofPorts*.

- The value of $L$ is configured with the higher layer parameter *numberOfBeams*, where $L = 2$ when $P_{CSI\,RS} = 4$ and $L \in \{2, 3, 4\}$ when $P_{CSI\text{-}RS} > 4$.

- The value of $d$ is configured with the higher layer parameter *portSelectionSamplingSize*, where $d \in \{1, 2, 3, 4\}$ and $d \leq \min\left(\frac{P_{CSI\text{-}RS}}{2}, L\right)$.

- The value of $N_{PSK}$ is configured with the higher layer parameter *phaseAlphabetSize*, where $N_{PSK} \in \{4, 8\}$.

- The UE is configured with the higher layer parameter *subbandAmplitude* set to 'true' or 'false'.

- The UE shall not report RI > 2.

The UE is also configured with the higher layer parameter *typeII-PortSelectionRI-Restriction*. The bitmap parameter *typeII-PortSelectionRI-Restriction* forms the bit sequence $r_1, r_0$ where $r_0$ is the LSB and $r_1$ is the MSB. When $r_i$ is zero, $i \in \{0, 1\}$, PMI and RI reporting are not allowed to correspond to any precoder associated with $\upsilon = i + 1$ layers.

When $\upsilon \leq 2$, where $\upsilon$ is the associated RI value, each PMI value corresponds to the codebook indices $i_1$ and $i_2$ where

$$i_1 = \begin{cases} \begin{bmatrix} i_{1,1} & i_{1,3,1} & i_{1,4,1} \end{bmatrix} & \upsilon = 1 \\ \begin{bmatrix} i_{1,1} & i_{1,3,1} & i_{1,4,1} & i_{1,3,2} & i_{1,4,2} \end{bmatrix} & \upsilon = 2 \end{cases}$$

- $$i_2 = \begin{cases} \begin{bmatrix} i_{2,1,1} \end{bmatrix} & subbandAmplitude = \text{'false'}, \upsilon = 1 \\ \begin{bmatrix} i_{2,1,1} & i_{2,1,2} \end{bmatrix} & subbandAmplitude = \text{'false'}, \upsilon = 2 \\ \begin{bmatrix} i_{2,1,1} & i_{2,2,1} \end{bmatrix} & subbandAmplitude = \text{'true'}, \upsilon = 1 \\ \begin{bmatrix} i_{2,1,1} & i_{2,2,1} & i_{2,1,2} & i_{2,2,2} \end{bmatrix} & subbandAmplitude = \text{'true'}, \upsilon = 2 \end{cases}$$

The $L$ antenna ports per polarization are selected by the index $i_{1,1}$, where

- $$i_{1,1} \in \left\{ 0, 1, ..., \left\lceil \frac{P_{CSI\text{-}RS}}{2d} \right\rceil - 1 \right\}.$$

The strongest coefficient on layer $l, l = 1, ..., \upsilon$ is identified by $i_{1,3,l} \in \{0, 1, ..., 2L - 1\}$.

The amplitude coefficient indicators $i_{1,4,l}$ and $i_{2,2,l}$ are

$$i_{1,4,l} = \left[ k_{l,0}^{(1)}, k_{l,1}^{(1)}, \ldots, k_{l,2L-1}^{(1)} \right]$$

$$i_{2,2,l} = \left[ k_{l,0}^{(2)}, k_{l,1}^{(2)}, \ldots, k_{l,2L-1}^{(2)} \right]$$

$$k_{l,i}^{(1)} \in \{0,1,\ldots,7\}$$

$$k_{l,i}^{(2)} \in \{0,1\}$$

for $l = 1, \ldots, \upsilon$. The mapping from $k_{l,i}^{(1)}$ to the amplitude coefficient $p_{l,i}^{(1)}$ is given in Table 5.2.2.2.3-2 and the mapping from $k_{l,i}^{(2)}$ to the amplitude coefficient $p_{l,i}^{(2)}$ is given in Table 5.2.2.2.3-3. The amplitude coefficients are represented by

$$p_l^{(1)} = \left[ p_{l,0}^{(1)}, p_{l,1}^{(1)}, \ldots, p_{l,2L-1}^{(1)} \right]$$

$$p_l^{(2)} = \left[ p_{l,0}^{(2)}, p_{l,1}^{(2)}, \ldots, p_{l,2L-1}^{(2)} \right]$$

for $l = 1, \ldots, \upsilon$.

The phase coefficient indicators are

$$i_{2,1,l} = \left[ c_{l,0}, c_{l,1}, \ldots, c_{l,2L-1} \right]$$

for $l = 1, \ldots, \upsilon$.

The amplitude and phase coefficient indicators are reported as follows:

- The indicators $k_{l,i_{1,3,l}}^{(1)} = 7$, $k_{l,i_{1,3,l}}^{(2)} = 1$, and $c_{l,i_{1,3,l}} = 0$ ($l = 1, \ldots, \upsilon$). $k_{l,i_{1,3,l}}^{(1)}$, $k_{l,i_{1,3,l}}^{(2)}$, and $c_{l,i_{1,3,l}}$ are not reported for $l = 1, \ldots, \upsilon$.

- The remaining $2L-1$ elements of $i_{1,4,l}$ ($l = 1, \ldots, \upsilon$) are reported, where $k_{l,i}^{(1)} \in \{0,1,\ldots,7\}$. Let $M_l$ ($l = 1, \ldots, \upsilon$) be the number of elements of $i_{1,4,l}$ that satisfy $k_{l,i}^{(1)} > 0$.

- The remaining $2L-1$ elements of $i_{2,1,l}$ and $i_{2,2,l}$ ($l = 1, \ldots, \upsilon$) are reported as follows:

  - When *subbandAmplitude* is set to 'false',

    - $k_{l,i}^{(2)} = 1$ for $l = 1, \ldots, \upsilon$, and $i = 0, 1, \ldots, 2L-1$. $i_{2,2,l}$ is not reported for $l = 1, \ldots, \upsilon$.

    - For $l = 1, \ldots, \upsilon$, the $M_l - 1$ elements of $i_{2,1,l}$ corresponding to the coefficients that satisfy $k_{l,i}^{(1)} > 0$, $i \neq i_{1,3,l}$, as determined by the reported elements of $i_{1,4,l}$, are reported, where $c_{l,i} \in \{0,1,\ldots,N_{PSK}-1\}$ and the remaining $2L - M_l$ elements of $i_{2,1,l}$ are not reported and are set to $c_{l,i} = 0$.

  - When *subbandAmplitude* is set to 'true',

    - For $l = 1, \ldots, \upsilon$, the elements of $i_{2,2,l}$ and $i_{2,1,l}$ corresponding to the $\min\left(M_l, K^{(2)}\right) - 1$ strongest coefficients (excluding the strongest coefficient indicated by $i_{1,3,l}$), as determined by the corresponding reported elements of $i_{1,4,l}$, are reported, where $k_{l,i}^{(2)} \in \{0,1\}$ and $c_{l,i} \in \{0,1,\ldots,N_{PSK}-1\}$. The values of $K^{(2)}$ are given in Table 5.2.2.2.3-4. The remaining $2L - \min\left(M_l, K^{(2)}\right)$ elements of $i_{2,2,l}$ are not reported and are set to $k_{l,i}^{(2)} = 1$. The elements of $i_{2,1,l}$ corresponding to the $M_l - \min\left(M_l, K^{(2)}\right)$ weakest

non-zero coefficients are reported, where $c_{l,i} \in \{0,1,2,3\}$. The remaining $2L - M_l$ elements of $i_{2,1,l}$ are not reported and are set to $c_{l,i} = 0$.

- When two elements, $k_{l,x}^{(1)}$ and $k_{l,y}^{(1)}$, of the reported elements of $i_{1,4,l}$ are identical ($k_{l,x}^{(1)} = k_{l,y}^{(1)}$), then element $\min(x,y)$ is prioritized to be included in the set of the $\min\left(M_l, K^{(2)}\right) - 1$ strongest coefficients for $i_{2,1,l}$ and $i_{2,2,l}$ ($l = 1, \ldots, \upsilon$) reporting.

The codebooks for 1-2 layers are given in Table 5.2.2.2.4-1, where the quantity $\varphi_{l,i}$ is given by

$$\bullet \quad \varphi_{l,i} = \begin{cases} e^{j2\pi c_{l,i}/N_{PSK}} & subbandAmplitude = \text{'false'} \\ e^{j2\pi c_{l,i}/N_{PSK}} & subbandAmplitude = \text{'true'}, \ \min\left(M_l, K^{(2)}\right) \text{ strongest coefficients (including } i_{1,3,l}) \text{ with } k_{l,i}^{(1)} > 0 \\ e^{j2\pi c_{l,i}/4} & subbandAmplitude = \text{'true'}, \ M_l - \min\left(M_l, K^{(2)}\right) \text{ weakest coefficients with } k_{l,i}^{(1)} > 0 \\ 1 & subbandAmplitude = \text{'true'}, \ 2L - M_l \text{ coefficients with } k_{l,i}^{(1)} = 0 \end{cases}$$

and $v_m$ is a $P_{\text{CSI-RS}}/2$ -element column vector containing a value of 1 in element $(m \bmod P_{\text{CSI-RS}}/2)$ and zeros elsewhere (where the first element is element 0).

**Table 5.2.2.2.4-1: Codebook for 1-layer and 2-layer CSI reporting using antenna ports 3000 to 2999+$P_{\text{CSI-RS}}$**

| Layers | |
|--------|--|
| $\upsilon = 1$ | $W_{i_{1,1}, p_1^{(1)}, p_1^{(2)}, i_{2,1,1}}^{(1)} = W_{i_{1,1}, p_1^{(1)}, p_1^{(2)}, i_{2,1,1}}^{1}$ |
| $\upsilon = 2$ | $W_{i_{1,1}, p_1^{(1)}, p_1^{(2)}, i_{2,1,1}, p_2^{(1)}, p_2^{(2)}, i_{2,1,2}}^{(2)} = \dfrac{1}{\sqrt{2}}\left[ W_{i_{1,1}, p_1^{(1)}, p_1^{(2)}, i_{2,1,1}}^{1} \quad W_{i_{1,1}, p_2^{(1)}, p_2^{(2)}, i_{2,1,2}}^{2} \right]$ |

$$\text{where } W_{i_{1,1}, p_l^{(1)}, p_l^{(2)}, i_{2,1,l}}^{l} = \frac{1}{\sqrt{\displaystyle\sum_{i=0}^{2L-1}\left( p_{l,i}^{(1)} p_{l,i}^{(2)} \right)^2}} \left[ \begin{array}{c} \displaystyle\sum_{i=0}^{L-1} v_{i_{1,1}d+i} \, p_{l,i}^{(1)} p_{l,i}^{(2)} \varphi_{l,i} \\ \displaystyle\sum_{i=0}^{L-1} v_{i_{1,1}d+i} \, p_{l,i+L}^{(1)} p_{l,i+L}^{(2)} \varphi_{l,i+L} \end{array} \right], \quad l = 1,2,$$

and the mappings from $i_1$ to $i_{1,1}$, $p_l^{(1)}$, and $p_2^{(1)}$ and from $i_2$ to $i_{2,1,1}$, $i_{2,1,2}$, $p_1^{(2)}$, and $p_2^{(2)}$ are as described above, including the ranges of the constituent indices of $i_1$ and $i_2$.

## 5.2.2.2.5 Enhanced Type II Codebook

For 4 antenna ports {3000, 3001, ..., 3003}, 8 antenna ports {3000, 3001, ..., 3007}, 12 antenna ports {3000, 3001, ..., 3011}, 16 antenna ports {3000, 3001, ..., 3015}, 24 antenna ports {3000, 3001, ..., 3023}, and 32 antenna ports {3000, 3001, ..., 3031}, and UE configured with higher layer parameter *codebookType* set to ' typeII-r16'

- The values of $N_1$ and $N_2$ are configured with the higher layer parameter *n1-n2-codebookSubsetRestriction-r16*. The supported configurations of $(N_1, N_2)$ for a given number of CSI-RS ports and the corresponding values of $(O_1, O_2)$ are given in Table 5.2.2.2.1-2. The number of CSI-RS ports, $P_{\text{CSI-RS}}$, is $2N_1N_2$.

- The values of $L$, $\beta$ and $p_\upsilon$ are determined by the higher layer parameter *paramCombination-r16*, where the mapping is given in Table 5.2.2.2.5-1.

  - The UE is not expected to be configured with *paramCombination-r16* equal to

    - 3, 4, 5, 6, 7, or 8 when $P_{\text{CSI-RS}} = 4$,

    - 7 or 8 when $P_{\text{CSI-RS}} < 32$

- 7 or 8 when higher layer parameter *typeII-RI-Restriction-r16* is configured with $r_i = 1$ for any $i > 1$.

- 7 or 8 when $R = 2$.

- The parameter $R$ is configured with the higher-layer parameter *numberOfPMISubbandsPerCQISubband*. This parameter controls the total number of precoding matrices $N_3$ indicated by the PMI as a function of the number of subbands in *csi-ReportingBand*, the subband size configured by the higher-level parameter *subbandSize* and of the total number of PRBs in the bandwidth part according to Table 5.2.1.4-2, as follows:

  - When $R = 1$:

    - One precoding matrix is indicated by the PMI for each subband in *csi-ReportingBand*.

  - When $R = 2$:

    - For each subband in *csi-ReportingBand* that is not the first or last subband of a BWP, two precoding matrices are indicated by the PMI: the first precoding matrix corresponds to the first $N_{PRB}^{SB}/2$ PRBs of the subband and the second precoding matrix corresponds to the last $N_{PRB}^{SB}/2$ PRBs of the subband.

    - For each subband in *csi-ReportingBand* that is the first or last subband of a BWP

      - If $\left(N_{BWP,i}^{start} \bmod N_{PRB}^{SB}\right) \geq \frac{N_{PRB}^{SB}}{2}$, one precoding matrix is indicated by the PMI corresponding to the first subband. If $\left(N_{BWP,i}^{start} \bmod N_{PRB}^{SB}\right) < \frac{N_{PRB}^{SB}}{2}$, two precoding matrices are indicated by the PMI corresponding to the first subband: the first precoding matrix corresponds to the first $\frac{N_{PRB}^{SB}}{2} - \left(N_{BWP,i}^{start} \bmod N_{PRB}^{SB}\right)$ PRBs of the first subband and the second precoding matrix corresponds to the last $\frac{N_{PRB}^{SB}}{2}$ PRBs of the first subband.

      - If $\left(N_{BWP,i}^{start} + N_{BWP,i}^{size}\right) \bmod N_{PRB}^{SB} \leq \frac{N_{PRB}^{SB}}{2}$, one precoding matrix is indicated by the PMI corresponding to the last subband. If $\left(N_{BWP,i}^{start} + N_{BWP,i}^{size}\right) \bmod N_{PRB}^{SB} > \frac{N_{PRB}^{SB}}{2}$, two precoding matrices are indicated by the PMI corresponding to the last subband: the first precoding matrix corresponds to the first $\frac{N_{PRB}^{SB}}{2}$ PRBs of the last subband and the second precoding matrix corresponds to the last $\left(N_{BWP,i}^{start} + N_{BWP,i}^{size}\right) \bmod N_{PRB}^{SB} - \frac{N_{PRB}^{SB}}{2}$ PRBs of the last subband.

**Table 5.2.2.2.5-1: Codebook parameter configurations for $L$, $\beta$ and $p_v$**

| paramCombination-r16 | $L$ | $p_v$ | | $\beta$ |
|---|---|---|---|---|
| | | $v \in \{1,2\}$ | $v \in \{3,4\}$ | |
| 1 | 2 | ¼ | 1/8 | ¼ |
| 2 | 2 | ¼ | 1/8 | ½ |
| 3 | 4 | ¼ | 1/8 | ¼ |
| 4 | 4 | ¼ | 1/8 | ½ |
| 5 | 4 | ¼ | ¼ | ¾ |
| 6 | 4 | ½ | ¼ | ½ |
| 7 | 6 | ¼ | – | ½ |
| 8 | 6 | ¼ | – | ¾ |

- The UE shall report the RI value $v$ according to the configured higher layer parameter *typeII-RI-Restriction-r16*. The UE shall not report $v > 4$.

The PMI value corresponds to the codebook indices of $i_1$ and $i_2$ where

$$i_1 = \begin{cases} [i_{1,1} \quad i_{1,2} \quad i_{1,5} \quad i_{1,6,1} \quad i_{1,7,1} \quad i_{1,8,1}] & v = 1 \\ [i_{1,1} \quad i_{1,2} \quad i_{1,5} \quad i_{1,6,1} \quad i_{1,7,1} \quad i_{1,8,1} \quad i_{1,6,2} \quad i_{1,7,2} \quad i_{1,8,2}] & v = 2 \\ [i_{1,1} \quad i_{1,2} \quad i_{1,5} \quad i_{1,6,1} \quad i_{1,7,1} \quad i_{1,8,1} \quad i_{1,6,2} \quad i_{1,7,2} \quad i_{1,8,2} \quad i_{1,6,3} \quad i_{1,7,3} \quad i_{1,8,3}] & v = 3 \\ [i_{1,1} \quad i_{1,2} \quad i_{1,5} \quad i_{1,6,1} \quad i_{1,7,1} \quad i_{1,8,1} \quad i_{1,6,2} \quad i_{1,7,2} \quad i_{1,8,2} \quad i_{1,6,3} \quad i_{1,7,3} \quad i_{1,8,3} \quad i_{1,6,4} \quad i_{1,7,4} \quad i_{1,8,4}] & v = 4 \end{cases}$$

$$i_2 = \begin{cases} [i_{2,3,1} \quad i_{2,4,1} \quad i_{2,5,1}] & v = 1 \\ [i_{2,3,1} \quad i_{2,4,1} \quad i_{2,5,1} \quad i_{2,3,2} \quad i_{2,4,2} \quad i_{2,5,2}] & v = 2 \\ [i_{2,3,1} \quad i_{2,4,1} \quad i_{2,5,1} \quad i_{2,3,2} \quad i_{2,4,2} \quad i_{2,5,2} \quad i_{2,3,3} \quad i_{2,4,3} \quad i_{2,5,3}] & v = 3 \\ [i_{2,3,1} \quad i_{2,4,1} \quad i_{2,5,1} \quad i_{2,3,2} \quad i_{2,4,2} \quad i_{2,5,2} \quad i_{2,3,3} \quad i_{2,4,3} \quad i_{2,5,3} \quad i_{2,3,4} \quad i_{2,4,4} \quad i_{2,5,4}] & v = 4 \end{cases}$$

The precoding matrices indicated by the PMI are determined from $L + M_v$ vectors.

$L$ vectors, $v_{m_1^{(i)},m_2^{(i)}}, i = 0,1,\dots,L-1$, are indentified by the indices $q_1, q_2, n_1, n_2$, indicated by $i_{1,1}, i_{1,2}$, obtained as in 5.2.2.2.3, where the values of $C(x,y)$ are given in Table 5.2.2.2.5-4.

$M_v = \left\lceil p_v \frac{N_3}{R} \right\rceil$ vectors, $\left[ y_{0,l}^{(f)}, y_{1,l}^{(f)}, \dots, y_{N_3-1,l}^{(f)} \right]^T$, $f = 0,1,\dots,M_v-1$, are identified by $M_{initial}$ (for $N_3 > 19$) and $n_{3,l}$ ($l = 1,\dots,v$) where

$$M_{initial} \in \{-2M_v + 1, -2M_v + 2, \dots, 0\}$$

$$n_{3,l} = \left[ n_{3,l}^{(0)}, \dots, n_{3,l}^{(M_v-1)} \right]$$

$$n_{3,l}^{(f)} \in \{0,1,\dots,N_3-1\}$$

which are indicated by means of the indices $i_{1,5}$ (for $N_3 > 19$) and $i_{1,6,l}$ ($l = 1,\dots,v$), where

$$i_{1,5} \in \{0,1,\dots,2M_v-1\}$$

$$i_{1,6,l} \in \begin{cases} \left\{0,1,\dots,\binom{N_3-1}{M_v-1}-1\right\} & N_3 \le 19 \\ \left\{0,1,\dots,\binom{2M_v-1}{M_v-1}-1\right\} & N_3 > 19 \end{cases}.$$

The amplitude coefficient indicators $i_{2,3,l}$ and $i_{2,4,l}$ are

$$i_{2,3,l} = \left[ k_{l,0}^{(1)} \quad k_{l,1}^{(1)} \right]$$

$$i_{2,4,l} = \left[ k_{l,0}^{(2)} \dots k_{l,M_v-1}^{(2)} \right]$$

$$k_{l,f}^{(2)} = \left[ k_{l,0,f}^{(2)} \dots k_{l,2L-1,f}^{(2)} \right]$$

$$k_{l,p}^{(1)} \in \{1,\dots,15\}$$

$$k_{l,i,f}^{(2)} \in \{0,\dots,7\}$$

for $l = 1,\dots,v$.

The phase coefficient indicator $i_{2,5,l}$ is

- $$i_{2,5,l} = \left[ c_{l,0} \dots c_{l,M_v-1} \right]$$

- $$c_{l,f} = \left[ c_{l,0,f} \dots c_{l,2L-1,f} \right]$$

- $$c_{l,i,f} \in \{0,\dots,15\}$$

for $l = 1,\dots,v$.

Let $K_0 = \lceil \beta 2LM_1 \rceil$. The bitmap whose nonzero bits identify which coefficients in $i_{2,4,l}$ and $i_{2,5,l}$ are reported, is indicated by $i_{1,7,l}$

$$i_{1,7,l} = \left[ k_{l,0}^{(3)} \dots k_{l,M_v-1}^{(3)} \right]$$

$$k_{l,f}^{(3)} = \left[ k_{l,0,f}^{(3)} \dots k_{l,2L-1,f}^{(3)} \right]$$

$$k_{l,i,f}^{(3)} \in \{0,1\}$$

for $l = 1, \dots, v$, such that $K_l^{NZ} = \sum_{i=0}^{2L-1} \sum_{f=0}^{M_v-1} k_{l,i,f}^{(3)} \le K_0$ is the number of nonzero coefficients for layer $l = 1, \dots, v$ and $K^{NZ} = \sum_{l=1}^{v} K_l^{NZ} \le 2K_0$ is the total number of nonzero coefficients.

The indices of $i_{2,4,l}$, $i_{2,5,l}$ and $i_{1,7,l}$ are associated to the $M_v$ codebook indices in $n_{3,l}$.

The mapping from $k_{l,p}^{(1)}$ to the amplitude coefficient $p_{l,p}^{(1)}$ is given in Table 5.2.2.2.5-2 and the mapping from $k_{l,i,f}^{(2)}$ to the amplitude coefficient $p_{l,i,f}^{(2)}$ is given in Table 5.2.2.2.5-3. The amplitude coefficients are represented by

$$p_l^{(1)} = \left[ p_{l,0}^{(1)} \quad p_{l,1}^{(1)} \right]$$

$$p_l^{(2)} = \left[ p_{l,0}^{(2)} \dots p_{l,M_v-1}^{(2)} \right]$$

$$p_{l,f}^{(2)} = \left[ p_{l,0,f}^{(2)} \dots p_{l,2L-1,f}^{(2)} \right]$$

for $l = 1, \dots, v$.

Let $f_l^* \in \{0,1, \dots, M_v - 1\}$ be the index of $i_{2,4,l}$ and $i_l^* \in \{0,1, \dots, 2L - 1\}$ be the index of $k_{l,f_l^*}^{(2)}$ which identify the strongest coefficient of layer $l$, i.e., the element $k_{l,i_l^*,f_l^*}^{(2)}$ of $i_{2,4,l}$, for $i = 0,1, \dots, 2L - 1$ and $f = 0,1, \dots, M_v - 1$. The codebook indices of $n_{3,l}$ are remapped with respect to $n_{3,l}^{(f_l^*)}$ as $n_{3,l}^{(f)} = \left( n_{3,l}^{(f)} - n_{3,l}^{(f_l^*)} \right) \bmod N_3$, such that $n_{3,l}^{(f_l^*)} = 0$, after remapping. The index $f$ is remapped with respect to $f_l^*$ as $f = (f - f_l^*) \bmod M_v$, such that the index of the strongest coefficient is $f_l^* = 0$ $(l = 1, \dots, v)$, after remapping. The indices of $i_{2,4,l}$, $i_{2,5,l}$ and $i_{1,7,l}$ indicate amplitude coefficients, phase coefficients and bitmap after remapping.

The strongest coefficient of layer $l$ is identified by $i_{1,8,l} \in \{0,1, \dots, 2L - 1\}$, which is obtained as follows

$$\bullet \qquad i_{1,8,l} = \begin{cases} \sum_{i=0}^{i_1^*} k_{1,i,0}^{(3)} - 1 & v = 1 \\ i_l^* & 1 < v \le 4 \end{cases}$$

for $l = 1, \dots, v$.

**Table 5.2.2.2.5-2: Mapping of elements of $i_{2,3,l}$: $k_{l,p}^{(1)}$ to $p_{l,p}^{(1)}$**

| $k_{l,p}^{(1)}$ | $p_{l,p}^{(1)}$ | $k_{l,p}^{(1)}$ | $p_{l,p}^{(1)}$ | $k_{l,p}^{(1)}$ | $p_{l,p}^{(1)}$ | $k_{l,p}^{(1)}$ | $p_{l,p}^{(1)}$ |
|---|---|---|---|---|---|---|---|
| 0 | Reserved | 4 | $\left(\frac{1}{2048}\right)^{1/4}$ | 8 | $\left(\frac{1}{128}\right)^{1/4}$ | 12 | $\left(\frac{1}{8}\right)^{1/4}$ |
| 1 | $\frac{1}{\sqrt{128}}$ | 5 | $\frac{1}{2\sqrt{8}}$ | 9 | $\frac{1}{\sqrt{8}}$ | 13 | $\frac{1}{\sqrt{2}}$ |
| 2 | $\left(\frac{1}{8192}\right)^{1/4}$ | 6 | $\left(\frac{1}{512}\right)^{1/4}$ | 10 | $\left(\frac{1}{32}\right)^{1/4}$ | 14 | $\left(\frac{1}{2}\right)^{1/4}$ |

| | | | | | | | |
|---|---|---|---|---|---|---|---|
| 3 | $\dfrac{1}{8}$ | 7 | $\dfrac{1}{4}$ | 11 | $\dfrac{1}{2}$ | 15 | 1 |

The amplitude and phase coefficient indicators are reported as follows:

- $k^{(1)}_{l,\left\lfloor \frac{i^*_l}{L} \right\rfloor} = 15$, $k^{(2)}_{l,i^*_l,0} = 7$, $k^{(3)}_{l,i^*_l,0} = 1$ and $c_{l,i^*_l,0} = 0$ $(l = 1, \dots, v)$. The indicators $k^{(1)}_{l,\left\lfloor \frac{i^*_l}{L} \right\rfloor}$, $k^{(2)}_{l,i^*_l,0}$ and $c_{l,i^*_l,0}$ are not reported for $l = 1, \dots, v$.

- The indicator $k^{(1)}_{l,\left( \left\lfloor \frac{i^*_l}{L} \right\rfloor + 1 \right) \bmod 2}$ is reported for $l = 1, \dots, v$.

- The $K^{NZ} - v$ indicators $k^{(2)}_{l,i,f}$ for which $i \neq i^*_l, f \neq 0$ and $k^{(3)}_{l,i,f} = 1$ are reported.

- The $K^{NZ} - v$ indicators $c_{l,i,f}$ for which $i \neq i^*_l, f \neq 0$ and $k^{(3)}_{l,i,f} = 1$ are reported.

- The remaining $2L \cdot M_v \cdot v - K^{NZ}$ indicators $k^{(2)}_{l,i,f} = 0$ are not reported and the corresponding $k^{(3)}_{l,i,f} = 0$ are reported.

- The remaining $2L \cdot M_v \cdot v - K^{NZ}$ indicators $c_{l,i,f} = 0$ are not reported and the corresponding $k^{(3)}_{l,i,f} = 0$ are reported.

**Table 5.2.2.2.5-3: Mapping of elements of $i_{2,4,l}$: $k^{(2)}_{l,i,f}$ to $p^{(2)}_{l,i,f}$**

| $k^{(2)}_{l,i,f}$ | $p^{(2)}_{l,i,f}$ |
|---|---|
| 0 | $\dfrac{1}{8\sqrt{2}}$ |
| 1 | $\dfrac{1}{8}$ |
| 2 | $\dfrac{1}{4\sqrt{2}}$ |
| 3 | $\dfrac{1}{4}$ |
| 4 | $\dfrac{1}{2\sqrt{2}}$ |
| 5 | $\dfrac{1}{2}$ |
| 6 | $\dfrac{1}{\sqrt{2}}$ |
| 7 | 1 |

The elements of $n_1$ and $n_2$ are found from $i_{1,2}$ using the algorithm described in 5.2.2.2.3, where the values of $C(x, y)$ are given in Table 5.2.2.2.5-.

For $N_3 > 19$, $M_{initial}$ is identified by $i_{1,5}$.

For all values of $N_3$, $n_{3,l}^{(0)} = 0$ for $l = 1, \ldots, v$. The nonzero elements of $n_{3,l}$, identified by $n_{3,l}^{(1)}, \ldots, n_{3,l}^{(M_v-1)}$, are found from $i_{1,6,l}$ $(l = 1, \ldots, v)$, for $N_3 \leq 19$, and from $i_{1,6,l}$ $(l = 1, \ldots, v)$ and $M_{initial}$, for $N_3 > 19$, using $C(x, y)$ as defined in 5.2.2.2.3 and the algorithm:

$$s_0 = 0$$

for $f = 1, \ldots, M_v - 1$

Find the largest $x^* \in \{M_v - 1 - f, \ldots, N_3 - 1 - f\}$ in Table 5.2.2.2.5-4 such that

$$i_{1,6,l} - s_{f-1} \geq C(x^*, M_v - f)$$

$$e_f = C(x^*, M_v - f)$$

$$s_f = s_{f-1} + e_f$$

if $N_3 \leq 19$

$$n_{3,l}^{(f)} = N_3 - 1 - x^*$$

else

$$n_l^{(f)} = 2M_v - 1 - x^*$$

if $n_l^{(f)} \leq M_{initial} + 2M_v - 1$

$$n_{3,l}^{(f)} = n_l^{(f)}$$

else

$$n_{3,l}^{(f)} = n_l^{(f)} + (N_3 - 2M_v)$$

end if

end if

### Table 5.2.2.2.5-4: Combinatorial coefficients $C(x, y)$

| $x$ \ $y$ | 1 | 2 | 3 | 4 | 5 | 6 | 7 | 8 | 9 |
|---|---|---|---|---|---|---|---|---|---|
| 0 | 0 | 0 | 0 | 0 | 0 | 0 | 0 | 0 | 0 |
| 1 | 1 | 0 | 0 | 0 | 0 | 0 | 0 | 0 | 0 |
| 2 | 2 | 1 | 0 | 0 | 0 | 0 | 0 | 0 | 0 |
| 3 | 3 | 3 | 1 | 0 | 0 | 0 | 0 | 0 | 0 |
| 4 | 4 | 6 | 4 | 1 | 0 | 0 | 0 | 0 | 0 |
| 5 | 5 | 10 | 10 | 5 | 1 | 0 | 0 | 0 | 0 |
| 6 | 6 | 15 | 20 | 15 | 6 | 1 | 0 | 0 | 0 |
| 7 | 7 | 21 | 35 | 35 | 21 | 7 | 1 | 0 | 0 |
| 8 | 8 | 28 | 56 | 70 | 56 | 28 | 8 | 1 | 0 |
| 9 | 9 | 36 | 84 | 126 | 126 | 84 | 36 | 9 | 1 |
| 10 | 10 | 45 | 120 | 210 | 252 | 210 | 120 | 45 | 10 |
| 11 | 11 | 55 | 165 | 330 | 462 | 462 | 330 | 165 | 55 |
| 12 | 12 | 66 | 220 | 495 | 792 | 924 | 792 | 495 | 220 |
| 13 | 13 | 78 | 286 | 715 | 1287 | 1716 | 1716 | 1287 | 715 |
| 14 | 14 | 91 | 364 | 1001 | 2002 | 4004 | 3432 | 3003 | 2002 |

| 15 | 15 | 105 | 455 | 1365 | 3003 | 5005 | 6435 | 6435 | 5005 |
|----|----|-----|-----|------|------|-------|-------|-------|-------|
| 16 | 16 | 120 | 560 | 1820 | 4368 | 8008 | 11440 | 12870 | 11440 |
| 17 | 17 | 136 | 680 | 2380 | 6188 | 12376 | 19448 | 24310 | 24310 |
| 18 | 18 | 153 | 816 | 3060 | 8568 | 18564 | 31824 | 43758 | 48620 |

When $n_{3,l}$ and $M_{initial}$ are known, $i_{1,5}$ and $i_{1,6,l}$ ($l = 1, \ldots, v$) are found as follows:

- If $N_3 \leq 19$, $i_{1,5} = 0$ and is not reported. $i_{1,6,l} = \sum_{f=1}^{M_v-1} C\left(N_3 - 1 - n_{3,l}^{(f)}, M_v - f\right)$, where $C(x,y)$ is given in Table 5.2.2.2.5-4 and where the indices $f = 1, \ldots, M_v - 1$ are assigned such that $n_{3,l}^{(f)}$ increases as $f$ increases.

- If $N_3 > 19$, $M_{initial}$ is indicated by $i_{1,5}$, which is reported and given by

$$i_{1,5} = \begin{cases} M_{initial} & M_{initial} = 0 \\ M_{initial} + 2M_v & M_{initial} < 0 \end{cases}$$

Only the nonzero indices $n_{3,l}^{(f)} \in IntS$, where $IntS = \{(M_{initial} + i) \bmod N_3, i = 0,1, \ldots, 2M_v - 1\}$, are reported, where the indices $f = 1, \ldots, M_v - 1$ are assigned such that $n_{3,l}^{(f)}$ increases as $f$ increases. Let

$$n_l^{(f)} = \begin{cases} n_{3,l}^{(f)} & n_{3,l}^{(f)} \leq M_{initial} + 2M_v - 1 \\ n_{3,l}^{(f)} - (N_3 - 2M_v) & n_{3,l}^{(f)} > M_{initial} + N_3 - 1 \end{cases},$$

then $i_{1,6,l} = \sum_{f=1}^{M_v-1} C\left(2M_v - 1 - n_l^{(f)}, M_v - f\right)$, where $C(x,y)$ is given in Table 5.2.2.2.5-4.

The codebooks for 1-4 layers are given in Table 5.2.2.2.5-5, where $m_1^{(i)}$, $m_2^{(i)}$, for $i = 0,1, \ldots, L - 1$, $u_n$ and $v_{m,n}$ are obtained as in clause 5.2.2.2.3, and the quantities $\varphi_{l,i,f}$ and $y_{t,l}$ are given by

$$\varphi_{l,i,f} = e^{j\frac{2\pi c_{l,i,f}}{16}}$$

$$y_{t,l} = \left[ y_{t,l}^{(0)} \quad y_{t,l}^{(1)} \quad \cdots \quad y_{t,l}^{(M_v-1)} \right]$$

where $t = \{0,1, \ldots, N_3 - 1\}$, is the index associated with the precoding matrix, $l = \{1, \ldots, v\}$, and with

$$y_{t,l}^{(f)} = e^{j\frac{2\pi t n_{3,l}^{(f)}}{N_3}}$$

for $f = 0,1, \ldots, M_v - 1$.

**Table 5.2.2.2.5-5: Codebook for 1-layer. 2-layer, 3-layer and 4-layer CSI reporting using antenna ports 3000 to 2999+$P_{CSI-RS}$**

| Layers | |
|--------|---|
| $v = 1$ | $W^{(1)}_{q_1,q_2,n_1,n_2,n_{3,1},p_1^{(1)},p_1^{(2)},i_{2,5,1},t} = W^1_{q_1,q_2,n_1,n_2,n_{3,1},p_1^{(1)},p_1^{(2)},i_{2,5,1},t}$ |
| $v = 2$ | $W^{(2)}_{q_1,q_2,n_1,n_2,n_{3,1},p_1^{(1)},p_1^{(2)},i_{2,5,1},n_{3,2},p_2^{(1)},p_2^{(2)},i_{2,5,2},t} = \frac{1}{\sqrt{2}}\left[ W^1_{q_1,q_2,n_1,n_2,n_{3,1},p_1^{(1)},p_1^{(2)},i_{2,5,1},t} \quad W^2_{q_1,q_2,n_1,n_2,n_{3,2},p_2^{(1)},p_2^{(2)},i_{2,5,2},t} \right]$ |
| $v = 3$ | $W^{(3)}_{q_1,q_2,n_1,n_2,n_{3,1},p_1^{(1)},p_1^{(2)},i_{2,5,1},n_{3,2},p_2^{(1)},p_2^{(2)},i_{2,5,2},n_{3,3},p_3^{(1)},p_3^{(2)},i_{2,5,3},t}$ $= \frac{1}{\sqrt{3}}\left[ W^1_{q_1,q_2,n_1,n_2,n_{3,1},p_1^{(1)},p_1^{(2)},i_{2,5,1},t} \quad W^2_{q_1,q_2,n_1,n_2,n_{3,2},p_2^{(1)},p_2^{(2)},i_{2,5,2},t} \quad W^3_{q_1,q_2,n_1,n_2,n_{3,3},p_3^{(1)},p_3^{(2)},i_{2,5,3},t} \right]$ |
| $v = 4$ | $W^{(4)}_{q_1,q_2,n_1,n_2,n_{3,1},p_1^{(1)},p_1^{(2)},i_{2,5,1},n_{3,2},p_2^{(1)},p_2^{(2)},i_{2,5,2},n_{3,3},p_3^{(1)},p_3^{(2)},i_{2,5,3},n_{3,4},p_4^{(1)},p_4^{(2)},i_{2,5,4},t}$ $= \frac{1}{2}\left[ W^1_{q_1,q_2,n_1,n_2,n_{3,1},p_1^{(1)},p_1^{(2)},i_{2,5,1},t} \quad W^2_{q_1,q_2,n_1,n_2,n_{3,2},p_2^{(1)},p_2^{(2)},i_{2,5,2},t} \quad W^3_{q_1,q_2,n_1,n_2,n_{3,3},p_3^{(1)},p_3^{(2)},i_{2,5,3},t} \quad W^4_{q_1,q_2,n_1,n_2,n_{3,4},p_4^{(1)},p_4^{(2)},i_{2,5,4},t} \right]$ |

Where $W^l_{q_1,q_2,n_1,n_2,n_3,p_l^{(1)},p_i^{(2)},i_{2,5,l},t} = \frac{1}{\sqrt{N_1 N_2 \gamma_{t,l}}} \begin{bmatrix} \sum_{i=0}^{L-1} v_{m_1^{(i)},m_2^{(i)}} p_{l,0}^{(1)} \sum_{f=0}^{M_v-1} y_{t,l}^{(f)} p_{l,i,f}^{(2)} \varphi_{l,i,f} \\ \sum_{i=0}^{L-1} v_{m_1^{(i)},m_2^{(i)}} p_{l,1}^{(1)} \sum_{f=0}^{M_v-1} y_{t,l}^{(f)} p_{l,i+L,f}^{(2)} \varphi_{l,i+L,f} \end{bmatrix}, l = 1,2,3,4,$

$$\gamma_{t,l} = \sum_{i=0}^{2L-1} \left(p_{l,\lfloor\frac{i}{L}\rfloor}^{(1)}\right)^2 \left|\sum_{f=0}^{M_v-1} y_{t,l}^{(f)} p_{l,i,f}^{(2)} \varphi_{l,i,f}\right|^2$$

and the mappings from $i_1$ to $q_1$, $q_2$, $n_1$, $n_2$, $n_{3,1}$, $n_{3,2}$, $n_{3,3}$, $n_{3,4}$, $p_1^{(1)}$, $p_2^{(1)}$, $p_3^{(1)}$ and $p_4^{(1)}$, and from $i_2$ to $i_{2,5,1}$, $i_{2,5,2}$, $i_{2,5,3}$, $i_{2,5,4}$, $p_1^{(2)}$, $p_2^{(2)}$, $p_3^{(2)}$ and $p_4^{(2)}$ are as described above, including the ranges of the constituent indices of $i_1$ and $i_2$.

For coefficients with $k_{l,i,f}^{(3)} = 0$, amplitude and phase are set to zero, i.e., $p_{l,i,f}^{(2)} = 0$ and $\varphi_{l,i,f} = 0$.

The bitmap parameter *typeII-RI-Restriction-r16* forms the bit sequence $r_3, r_2, r_1, r_0$ where $r_0$ is the LSB and $r_3$ is the MSB. When $r_i$ is zero, $i \in \{0,1,...,3\}$, PMI and RI reporting are not allowed to correspond to any precoder associated with $v = i + 1$ layers.

The bitmap parameter *n1-n2-codebookSubsetRestriction-r16* forms the bit sequence $B = B_1 B_2$ and configures the vector group indices $g^{(k)}$ as in clause 5.2.2.2.3. Bits $b_2^{(k,2(N_1 x_2 + x_1)+1)} b_2^{(k,2(N_1 x_2 + x_1))}$ indicate the maximum allowed average amplitude, $\gamma_{i+pL}$ $(p = 0,1)$, with $i \in \{0,1,...,L-1\}$, of the coefficients associated with the vector in group $g^{(k)}$ indexed by $x_1, x_2$, where the maximum amplitudes are given in Table 5.2.2.2.5-6 and the average coefficient amplitude is restricted as follows

$$\bullet \qquad \sqrt{\frac{1}{\sum_{f=0}^{M_v-1} k_{l,i+pL,f}^{(3)}} \sum_{f=0}^{M_v-1} k_{l,i+pL,f}^{(3)} \left(p_{i,p}^{(1)} p_{l,i+pL,f}^{(2)}\right)^2} \leq \gamma_{i+pL}$$

for $l = 1,...,v$, and $p = 0,1$. A UE that does not report the parameter *amplitudeSubsetRestriction*='supported' in its capability signaling is not expected to be configured with $b_2^{(k,2(N_1 x_2 + x_1)+1)} b_2^{(k,2(N_1 x_2 + x_1))} = 01$ or $10$.

### Table 5.2.2.2.5-6: Maximum allowed average coefficient amplitudes for restricted vectors

| Bit $b_2^{(k,2(N_1 x_2 + x_1)+1)} b_2^{(k,2(N_1 x_2 + x_1))}$ | Maximum Average Coefficient Amplitude $\gamma_{i+pL}$ |
|---|---|
| 00 | 0 |
| 01 | $\sqrt{1/4}$ |
| 10 | $\sqrt{1/2}$ |
| 11 | 1 |

## 5.2.2.2.6      Enhanced Type II Port Selection Codebook

For 4 antenna ports {3000, 3001, ..., 3003}, 8 antenna ports {3000, 3001, ..., 3007}, 12 antenna ports {3000, 3001, ..., 3011}, 16 antenna ports {3000, 3001, ..., 3015}, 24 antenna ports {3000, 3001, ..., 3023}, and 32 antenna ports {3000, 3001, ..., 3031}, and the UE configured with higher layer parameter *codebookType* set to ' typeII-PortSelection-r16 '

- The number of CSI-RS ports is configured as in Clause 5.2.2.2.4

- The value of $d$ is configured with the higher layer parameter *portSelectionSamplingSize-r16*, where $d \in \{1,2,3,4\}$ and $d \leq L$.

- The values $L$, $\beta$ and $p_v$ are configured as in Clause 5.2.2.2.5, where the supported configurations are given in Table 5.2.2.2.6-1.

### Table 5.2.2.2.6-1: Codebook parameter configurations for $L$, $\beta$ and $p_v$

| | $L$ | $p_v$ | $\beta$ |
|---|---|---|---|

| paramCombination-r16 | | $v \in \{1,2\}$ | $v \in \{3,4\}$ | |
|---|---|---|---|---|
| 1 | 2 | ¼ | 1/8 | ¼ |
| 2 | 2 | ¼ | 1/8 | ½ |
| 3 | 4 | ¼ | 1/8 | ¼ |
| 4 | 4 | ¼ | 1/8 | ½ |
| 5 | 4 | ¼ | ¼ | ¾ |
| 6 | 4 | ½ | ¼ | ½ |

- The UE shall report the RI value $v$ according to the configured higher layer parameter *typeII-PortSelectionRI-Restriction-r16*. The UE shall not report $v > 4$.

- The values of $R$ is configured as in Clause 5.2.2.2.5.

The UE is also configured with the higher layer bitmap parameter *typeII-PortSelectionRI-Restriction-r16*, which forms the bit sequence $r_3, r_2, r_1, r_0$, where $r_0$ is the LSB and $r_3$ is the MSB. When $r_i$ is zero, $i \in \{0, 1, ..., 3\}$, PMI and RI reporting are not allowed to correspond to any precoder associated with $v = i + 1$ layers.

The PMI value corresponds to the codebook indices $i_1$ and $i_2$ where

$$i_1 = \begin{cases} [i_{1,1} \quad i_{1,5} \quad i_{1,6,1} \quad i_{1,7,1} \quad i_{1,8,1}] & v = 1 \\ [i_{1,1} \quad i_{1,5} \quad i_{1,6,1} \quad i_{1,7,1} \quad i_{1,8,1} \quad i_{1,6,2} \quad i_{1,7,2} \quad i_{1,8,2}] & v = 2 \\ [i_{1,1} \quad i_{1,5} \quad i_{1,6,1} \quad i_{1,7,1} \quad i_{1,8,1} \quad i_{1,6,2} \quad i_{1,7,2} \quad i_{1,8,2} \quad i_{1,6,3} \quad i_{1,7,3} \quad i_{1,8,3}] & v = 3 \\ [i_{1,1} \quad i_{1,5} \quad i_{1,6,1} \quad i_{1,7,1} \quad i_{1,8,1} \quad i_{1,6,2} \quad i_{1,7,2} \quad i_{1,8,2} \quad i_{1,6,3} \quad i_{1,7,3} \quad i_{1,8,3} \quad i_{1,6,4} \quad i_{1,7,4} \quad i_{1,8,4}] & v = 4 \end{cases}$$

$$i_2 = \begin{cases} [i_{2,3,1} \quad i_{2,4,1} \quad i_{2,5,1}] & v = 1 \\ [i_{2,3,1} \quad i_{2,4,1} \quad i_{2,5,1} \quad i_{2,3,2} \quad i_{2,4,2} \quad i_{2,5,2}] & v = 2 \\ [i_{2,3,1} \quad i_{2,4,1} \quad i_{2,5,1} \quad i_{2,3,2} \quad i_{2,4,2} \quad i_{2,5,2} \quad i_{2,3,3} \quad i_{2,4,3} \quad i_{2,5,3}] & v = 3 \\ [i_{2,3,1} \quad i_{2,4,1} \quad i_{2,5,1} \quad i_{2,3,2} \quad i_{2,4,2} \quad i_{2,5,2} \quad i_{2,3,3} \quad i_{2,4,3} \quad i_{2,5,3} \quad i_{2,3,4} \quad i_{2,4,4} \quad i_{2,5,4}] & v = 4 \end{cases}$$

The $2L$ antenna ports are selected by the index $i_{1,1}$ as in clause 5.2.2.2.4.

Parameters $N_3, M_v, M_{initial}$ (for $N_3 > 19$) and $K_0$ are defined as in clause 5.2.2.2.5.

For layer $l$, $l = 1, ..., v$, the strongest coefficient $i_{1,8,l}$, the amplitude coefficient indicators $i_{2,3,l}$ and $i_{2,4,l}$, the phase coefficient indicator $i_{2,5,l}$ and the bitmap indicator $i_{1,7,l}$ are defined and indicated as in clause 5.2.2.2.5, where the mapping from $k_{l,p}^{(1)}$ to the amplitude coefficient $p_{l,p}^{(1)}$ is given in Table 5.2.2.2.5-2 and the mapping from $k_{l,i,f}^{(2)}$ to the amplitude coefficient $p_{l,i,f}^{(2)}$ is given inTable 5.2.2.2.5-3.

The number of nonzero coefficients for layer $l$, $K_l^{NZ}$, and the total number of nonzero coefficients $K^{NZ}$ are defined as in Clause 5.2.2.2.5.

The amplitude coefficients $p_l^{(1)}$ and $p_l^{(2)}$ ($l = 1, ..., v$) are represented as in clause 5.2.2.2.5.

The amplitude and phase coefficient indicators are reported as in clause 5.2.2.2.5.

Codebook indicators $i_{1,5}$ and $i_{1,6,l}$ ($l = 1, ..., v$) are found as in clause 5.2.2.2.5.

The codebooks for 1-4 layers are given in Table 5.2.2.2.6-2, where $v_m$ is a $P_{CSI-RS}/2$-element column vector containing a value of 1 in element ($m \bmod P_{CSI-RS}/2$) and zeros elsewhere (where the first element is element 0), and the quantities $\varphi_{l,i,f}$ and $y_t$ are defined as in clause 5.2.2.2.5.

31

**Table 5.2.2.2.6-2: Codebook for 1-layer. 2-layer, 3-layer and 4-layer CSI reporting using antenna ports 3000 to 2999+$P_{CSI-RS}$**

| Layers | |
|---|---|
| $v=1$ | $W^{(1)}_{i_{1,1},n_{3,1},p_1^{(1)},p_1^{(2)},i_{2,5,1},t} = W^1_{i_{1,1},n_{3,1},p_1^{(1)},p_1^{(2)},i_{2,5,1},t}$ |
| $v=2$ | $W^{(2)}_{i_{1,1},n_{3,1},p_1^{(1)},p_1^{(2)},i_{2,5,1},n_{3,2},p_2^{(1)},p_2^{(2)},i_{2,5,2},t} = \frac{1}{\sqrt{2}}\left[W^1_{i_{1,1},n_{3,1},p_1^{(1)},p_1^{(2)},i_{2,5,1},t} \quad W^2_{i_{1,1},n_{3,2},p_2^{(1)},p_2^{(2)},i_{2,5,2},t}\right]$ |
| $v=3$ | $W^{(3)}_{i_{1,1},n_{3,1},p_1^{(1)},p_1^{(2)},i_{2,5,1},n_{3,2},p_2^{(1)},p_2^{(2)},i_{2,5,2},n_{3,3},p_3^{(1)},p_3^{(2)},i_{2,5,3},t}$ <br> $= \frac{1}{\sqrt{3}}\left[W^1_{i_{1,1},n_{3,1},p_1^{(1)},p_1^{(2)},i_{2,5,1},t} \quad W^2_{i_{1,1},n_{3,2},p_2^{(1)},p_2^{(2)},i_{2,5,2},t} \quad W^3_{i_{1,1},n_{3,3},p_3^{(1)},p_3^{(2)},i_{2,5,3},t}\right]$ |
| $v=4$ | $W^{(4)}_{i_{1,1},n_{3,1},p_1^{(1)},p_1^{(2)},i_{2,5,1},n_{3,2},p_2^{(1)},p_2^{(2)},i_{2,5,2},n_{3,3},p_3^{(1)},p_3^{(2)},i_{2,5,3},n_{3,4},p_4^{(1)},p_4^{(2)},i_{2,5,4},t}$ <br> $= \frac{1}{2}\left[W^1_{i_{1,1},n_{3,1},p_1^{(1)},p_1^{(2)},i_{2,5,1},t} \quad W^2_{i_{1,1},n_{3,2},p_2^{(1)},p_2^{(2)},i_{2,5,2},t} \quad W^3_{i_{1,1},n_{3,3},p_3^{(1)},p_3^{(2)},i_{2,5,3},t} \quad W^4_{i_{1,1},n_{3,4},p_4^{(1)},p_4^{(2)},i_{2,5,4},t}\right]$ |

Where $W^l_{i_{1,1},n_3,p_l^{(1)},p_l^{(2)},i_{2,5,l},t} = \frac{1}{\sqrt{N_1 N_2 \gamma_{t,l}}}\left[\begin{array}{c}\sum_{i=0}^{L-1} v_{i_{1,1}d+i}p_{l,0}^{(1)}\sum_{f=0}^{M_v-1} y_{t,l}^{(f)}p_{l,i,f}^{(2)}\varphi_{l,i,f} \\ \sum_{i=0}^{L-1} v_{i_{1,1}d+i}p_{l,1}^{(1)}\sum_{f=0}^{M_v-1} y_{t,l}^{(f)}p_{l,i+L,f}^{(2)}\varphi_{l,i+L,f}\end{array}\right]$, $l=1,2,3,4,$

$$\gamma_{t,l} = \sum_{i=0}^{2L-1}\left(p_{l,\left[\frac{i}{L}\right]}^{(1)}\right)^2 \left|\sum_{f=0}^{M_v-1} y_{t,l}^{(f)}p_{l,i,f}^{(2)}\varphi_{l,i,f}\right|^2$$

and the mappings from $i_1$ to $i_{1,1}$, $n_{3,1}$, $n_{3,2}$, $n_{3,3}$, $n_{3,4}$, $p_1^{(1)}$, $p_2^{(1)}$, $p_3^{(1)}$ and $p_4^{(1)}$, and from $i_2$ to $i_{2,5,1}$, $i_{2,5,2}$, $i_{2,5,3}$, $i_{2,5,4}$, $p_1^{(2)}$, $p_2^{(2)}$, $p_3^{(2)}$ and $p_4^{(2)}$ are as described above, including the ranges of the constituent indices of $i_1$ and $i_2$.

For coefficients with $k_{l,i,f}^{(3)} = 0$, amplitude and phase are set to zero, i.e., $p_{l,i,f}^{(2)} = 0$ and $\varphi_{l,i,f} = 0$.

Operation related to Multi-TRPs

A coordinated multi point (CoMP) scheme refers to a scheme in which a plurality of base stations effectively control interference by exchanging (e.g., using an X2 interface) or utilizing channel information (e.g., RI/CQI/PMI/LI(layer indicator), etc.) fed back by a terminal and cooperatively transmitting to a terminal. According to a scheme used, a CoMP may be classified into joint transmission (JT), coordinated Scheduling(CS), coordinated Beamforming(CB), dynamic Point Selection(DPS), dynamic Point Blocking(DPB), etc.

M-TRP transmission schemes that M TRPs transmit data to one terminal may be largely classified into i) eMBB M-TRP transmission, a scheme for improving a transfer rate, and ii) URLLC M-TRP transmission, a scheme for increasing a reception success rate and reducing latency.

In addition, with regard to DCI transmission, M-TRP transmission schemes may be classified into i) M-TRP transmission based on M-DCI(multiple DCI) that each TRP transmits different DCIs and ii) M-TRP transmission based on S-DCI(single DCI) that one TRP transmits DCI. For example, for S-DCI based M-TRP transmission, all scheduling information on data transmitted by M TRPs should be delivered to a terminal through one DCI, it may be used in an environment of an ideal BackHaul (ideal BH) where dynamic cooperation between two TRPs is possible.

A UE may recognize PUSCH (or PUCCH) scheduled by DCI received in different control resource sets(CORESETs) (or CORESETs belonging to different CORESET groups) as PUSCH (or PUCCH) transmitted to different TRPs or may recognize PDSCH (or PDCCH) from different TRPs. In addition, the below-described method for UL transmission (e.g., PUSCH/PUCCH) transmitted to different TRPs may be applied equivalently to UL transmission (e.g., PUSCH/-PUCCH)transmitted to different panels belonging to the same TRP.

Hereinafter, a CORESET group ID described/mentioned in the present disclosure may mean an index/identification information (e.g., an ID, etc.) for distinguishing a CORESET for each TRP/panel. In addition, a CORESET group may be a group/union of CORESET distinguished by an index/identification information (e.g., an ID)/the CORESET group ID, etc. for distinguishing a CORESET for each TRP/panel. In an example, a CORESET group ID may be specific index information defined in a CORESET configuration. In this case, a CORESET group may be configured/indicated/defined by an index defined in a CORESET configuration for each CORESET. Additionally/alternatively, a CORESET group ID may mean an index/identification information/an indicator, etc. for distinguishment/identification between CORESETs configured/associated with each TRP/panel. Hereinafter, a CORESET group ID described/mentioned in the present disclosure may be expressed by being substituted with a specific index/specific identification information/a specific indicator for distinguishment/identification between CORESETs configured/associated with each TRP/panel. The CORESET group ID, i.e., a specific index/specific identification information/a specific indicator for distinguishment/identification between CORESETs configured/associated with each TRP/panel may be configured/indicated to a terminal through higher layer signaling (e.g., RRC signaling)/L2 signaling (e.g., MAC-CE)/L1 signaling (e.g., DCI), etc. In an example, it may be configured/indicated so that PDCCH detection will be performed per each TRP/panel in a unit of a corresponding CORESET group (i.e., per TRP/panel belonging to the same CORESET group). Additionally/alternatively, it may be configured/indicated so that uplink control information (e.g., CSI, HARQ-A/N(ACK/NACK), SR(scheduling request)) and/or uplink physical channel resources (e.g., PUCCH/PRACH/SRS resources) are separated and managed/controlled per each TRP/panel in a unit of a corresponding CORESET group (i.e., per TRP/panel belonging to the same CORESET group). Additionally/alternatively, HARQ A/N(process/retransmission) for PDSCH/PUSCH, etc. scheduled per each TRP/panel may be managed per corresponding CORESET group (i.e., per TRP/panel belonging to the same CORESET group).

For example, a higher layer parameter, ControlResourceSet information element (IE), is used to configure a time/frequency control resource set (CORESET). In an example, the control resource set (CORESET) may be related to detection and reception of downlink control information. The ControlResourceSet IE may include a CORESET-related ID (e.g., controlResourceSetID)/an index of a CORESET pool for a CORESET (e.g., CORESETPoolIndex)/a time/frequency resource configuration of a CORESET/TCI information related to a CORESET, etc. In an example, an index of a CORESET pool (e.g., CORESETPoolIndex) may be configured as 0 or 1. In the description, a CORESET group may correspond to a CORESET pool and a CORESET group ID may correspond to a CORESET pool index (e.g., CORESETPoolIndex).

The Rel-17 NR standard supports (1) MTRP PDCCH repeat transmission, (2) MTRP PDCCH single frequency network (SFN) transmission, (3) MTRP PDSCH SFN transmission, (4) MTRP PUSCH repeat transmission based on S-DCI, and (4) MTRP PUCCH repeat transmission based on single PUCCH resource. All of these transmission techniques are URLLC target enhancements for increasing reliability, and the same contents (i.e., DCI or UL/DL TB or UCI) are repeatedly transmitted. In the case of MTRP PDCCH repeat transmission, it is repeatedly transmitted in TDM or FDM, MTRP PDCCH/PDSCH SFN is repeatedly transmitted at the same time/frequency/layer, S-DCI-based MTRP PUSCH repeat transmission is repeatedly transmitted in TDM, and single PUCCH resource-based MTRP PUCCH repeat transmission is repeatedly transmitted in TDM.

(1) MTRP PDCCH Repeat Transmission

For MTRP PDCCH repeat transmission, multiple CORESETs with different TCI states (i.e., different QCL RSs) are configured to a UE, and multiple SS sets each connected/associated to the corresponding CORESETs are configured to the UE. A base station indicates/configures a UE that a search space set (SS set) associated to one CORESET and an SS set associated to another CORESET are linked for repeat transmission, so that the UE can know that PDCCH candidates of the corresponding SS set are repeatedly transmitted.

For example, it is assumed that two CORESETs, CORESET 0 and 1, are configured to a UE, and CORESET 0 and 1 are associated to SS set 0 and 1, respectively, and that SS set 0 and 1 are linked. The UE can recognize that a PDCCH candidate of SS set 0 and a PDCCH candidate of SS set 1 are repeatedly transmitting the same DCI, and through a specific rule, and the UE can recognize that a specific PDCCH candidate of SS set 0 and a specific PDCCH candidate of SS set 1 are a pair established for repeatedly transmitting the same DCI. These two PDCCH candidates are referred to as linked PDCCH candidates, and a UE can successfully decode the corresponding DCI if it correctly receives either of the two PDCCH candidates. However, when receiving the PDCCH candidate of SS set 0, a QCL RS (i.e., DL beam) of a TCI state of COERSET 0 associated to SS set 0 is used, and when receiving the PDCCH candidate of SS set 1, a QCL RS (i.e., DL beam) of a TCI state of COERSET 1 associated to SS set 1 is used, thereby receiving the linked PDCCH candidates with different beams.

(2) MTRP SFN PDCCH Repeat Transmission

As a special case of MTRP PDCCH repeat transmission, multiple TRPs can repeatedly transmit the same DCI through the same time/frequency/DMRS port, which can be referred to as SFN PDCCH transmission. However, for SFN PDCCH transmission, instead of configuring multiple CORESETs with different TCI states to a UE, a base station sets multiple TCI states to one CORESET. When a UE receives a PDCCH candidate through a SS set associated to one CORESET, it performs channel estimation of a PDCCH DMRS using all of the multiple TCI states and attempts to decode.

(3) MTRP SFN PDSCH Repeat Transmission

When the MTRP PDSCH is repeatedly transmitted, two TRPs repeatedly transmit a corresponding PDSCH on different resources. However, as a special case, if a resource used by two TRPs are the same, that is, if the same channel is repeatedly transmitted through the same frequency, time, and layer (i.e., DMRS port), the reliability of the corresponding channel can be improved. In this case, the same channel that is repeatedly transmitted is received by combining it in the air because the resources are not distinguished, so it is recognized as one channel from the receiver's perspective. For PDSCH SFN transmission, two DL TCI states for PDSCH DMRS reception can be configured.

(4) S-DCI based MTRP PUSCH repeat transmission

For S-DCI based MTRP PUSCH transmission, a base station configured two SRS sets to the UE, where each set is used to indicate a UL Tx port and UL beam/QCL information toward TRP 1 and TRP 2, respectively. In addition, a base station performs SRS resource indication for each SRS set through two SRI fields in one DCI, and can indicate up to two power control (PC) parameter sets. For example, the first SRI field can indicate an SRS resource and a PC parameter set defined in SRS set 0, and the second SRI field can indicate an SRS resource and a PC parameter set defined in SRS set 1. A UE is indicated with UL Tx port, PC parameter set, and UL beam/QCL information toward TRP 1 through the first SRI field, and performs PUSCH transmission at the transmission occasion (TO) corresponding to SRS set 0 through these. Similarly, a UE is indicated with UL Tx port, PC parameter set, and UL beam/QCL information toward TRP 2 through the second SRI field, and performs PUSCH transmission in the TO corresponding to SRS set 1. Similarly, a UE is instructed with the UL Tx port, PC parameter set, and UL beam/QCL information toward TRP 2 through the second SRI field, and performs PUSCH transmission in the TO corresponding to SRS set 1. Here, the TO corresponding to SRS set 0,1 is determined by one of the mapping methods configured by a base station among cyclic (beam) mapping and sequential (beam) mapping. For example, in the case of cyclic beam mapping, SRS set 0 and SRS set 1 are mapped alternately in TO order. For example, if TO=4, TOs 1,2,3,4 are mapped to SRS sets 0, 1, 0, 1, respectively. On the other hand, sequential beam mapping maps one SRS set to two adjacent TOs, and then another SRS set to the next two adjacent TOs. For example, when TO=8, TOs 1,2,3,4,5,6,7,8 are mapped to SRS sets 0,0, 1,1, 0,0, 1,1, respectively. This mapping method is also applied to PUCCH repetition.

In addition to a SRI field, transmit PMI (TPMI), phase tracking reference signal (PTRS), and transmission power control (TPC) fields can also be indicated for each TRP, so that the existing one field has been expanded to two fields. In addition, by introducing a 2-bit SRS resource set indication field, STRP PUSCH repeat transmission can be performed by selecting a specific one of the two SRS sets, and MTRP PUSCH repeat transmission can be performed by selecting both. That is, if the field is 00, 01, SRS set 0 and SRS set 1 are indicated respectively, and STRP PUSCH transmission corresponding to each SRS set is performed, and if it is 10, (SRS set 0, SRS set 1) is indicated, and MTRP PUSCH transmission is performed in the indicated order of SRS set pairs. That is, set 0 corresponds to the first PUSCH TO. In the case of 11, (SRS set 1, SRS set 0) is indicated, and MTRP PUSCH transmission is performed in the order in which the set pairs are indicated. That is, set 1 corresponds to the first PUSCH TO.

(5) MTRP PUCCH repeated transmission based on a single PUCCH resource

A base station activates/configures two spatial relation information in a single PUCCH resource for a UE for MTRP PUCCH transmission based on a single PUCCH resource. In this case, two PC (power control) parameter sets can be activated/configured in the case of FR1. When a UE transmits UL UCI through the corresponding PUCCH resource, each spatial relation info is used to indicate spatial relation info toward TRP 1 and TRP 2, respectively. For example, a UE is indicated Tx beam/PC parameters toward TRP 1 through a value indicated in a first spatial relation info, and the UE performs PUCCH transmission in a TO corresponding to TRP 1 using this information. Similarly, a UE is indicated Tx beam/PC parameters toward TRP 2 through a value indicated in a second spatial relation info, and the UE performs PUCCH transmission in a TO corresponding to TRP 2 using this information.

In addition, for MTRP PUCCH repeat transmission, a configuration method has been improved so that two spatial relation info can be configured in the PUCCH resource. That is, if PC parameters such as PLRS, Alpha, P0, and Closed loop index are set for each spatial relation info, spatial relation RS can be configured. As a result, PC information and spatial relation RS information corresponding to two TRPs can be configured through two spatial relation info, UE transmits UCI (i.e., CSI, HARQ-ACK, scheduling request (SR)) in a PUCCH using the first spatial relation info in TO 1, and transmits the same UCI (i.e., CSI, HARQ-ACK, SR) in a PUCCH using the second spatial relation info in TO 2. In the present disclosure, a PUCCH resource with two spatial relation information set is referred to as an MTRP PUCCH resource, and a PUCCH resource with one spatial relation information set is referred to as a STRP PUCCH resource.

In the methods proposed in this disclosure, using (/mapping) a specific TCI state (or TCI) when receiving data/DCI/UCI for a certain frequency/time/space resource may mean that in the case of DL, a channel is estimated from a DMRS using a QCL type and QCL RS indicated by a corresponding TCI state in the frequency/time/space resource, and data/DCI is received/demodulated with the estimated channel. In the case of UL, it can mean that a DMRS and data/UCI are transmitted/modulated using a Tx beam and/or Tx power indicated by a corresponding TCI state in the frequency/-time/space resource.

The UL TCI state includess Tx beam and/or Tx power information of a UE, and may be configured for the UE through other parameters such as spatial relation info instead of a TCI state. A UL TCI state may be directly indicated in UL grant DCI, or may mean spatial relation info of an SRS resource indicated through an SRS resource indicator (SRI) field of UL grant DCI. Alternatively, it may mean an open loop (OL) Tx power control parameter (j: index for open loop parameter Po and alpha (up to 32 parameter value sets per cell), q_d: index of DL RS for path loss (PL) measurement (up to 3 measurements per cell), l: closed loop power control process index (up to 2 processes per cell)) linked to a value indicated via an SRI field of UL grant DCI.

In addition, in Rel-17, not only a DL TCI state but also a UL TCI state can be indicated through DL DCI (e.g., DCI format 1-1 or 1-2), or only a UL TCI state can be indicated without a DL TCI state indication. Therefore, the methods used for UL beam and PC (power control) configuration in existing Rel-15/16 are replaced in R-17 with the UL TCI state indication method. More specifically, in R17, one UL TCI state can be indicated through a TCI field of DL DCI, and the corresponding UL TCI state is applied to all PUSCHs and all PUCCHs after a certain time called beam application time, and can be applied to some or all of the indicated SRS resource sets.

Meanwhile, Rel-18 discusses a method for UEs to simultaneously transmit multiple channels/reference signals (RS) of the same type or multiple channels/RSs of different types. In the case of existing UEs, an operation of transmitting multiple channels/RS at one time is restricted (e.g., it is possible to simultaneously transmit multiple SRS resources of different SRS sets for UL beam measurement, but it is impossible to simultaneously transmit multiple PUSCHs), however in the case of advanced UEs in the future, this restriction will be relaxed and multiple channels or RSs can be transmitted simultaneously using multiple transmission panels, and this transmission method can be referred to as simultaneous transmission across multiple panels (STxMP), and such UEs can also be referred to as STxMP UEs. For example, two PUSCHs corresponding to two UL TBs are scheduled on the same resource, and spatial relation RS 1 and PC parameter set 1 (i.e., UL TCI state 1) and spatial relation RS 2 and PC parameter set 2 (i.e., UL TCI state 2) can be configured for PUSCH 1 and 2 transmission, respectively. In this case, a UE can transmit PUSCH 1 using panel 1 corresponding to UL TCI state 1, and simultaneously transmit PUSCH 2 using panel 2 corresponding to UL TCI state 2.

When a base station schedules a PUSCH through DCI, it can indicate whether the PUSCH will be transmitted as STxMP, single panel, MTRP PUSCH repetition, etc. Of course, a UE must have STxMP capability and the STxMP mode must be enabled in advance through RRC signaling, etc. For this purpose, the existing SRS resource set indication field can be redefined and used, or a new DCI field can be introduced.

For convenience of explanation, this disclosure assumes cooperative transmission/reception between 2 TRPs and applies the proposed method, but it can be expanded to a multi-TRP environment of 3 or more, and can be expanded to a multi-panel environment. Different TRPs can be recognized by a UE as different TCI states, and when a UE receives/transmits data/DCI/UCI using TCI state 1, it means that the UE receives/transmits data/DCI/UCI from/to TRP 1.

In the present disclosure, a transmission occasion (TO) may mean each channel transmitted at a different time when multiple channels are TDMed, or each channel transmitted on a different frequency/RB when FDMed, or each channel transmitted on a different layer/beam/DMRS port when SDMed. One TCI state may be mapped to each TO. When the same channel is repeatedly transmitted, a complete DCI/data/UCI is transmitted to one TO, and a receiving end may receive multiple TOs to increase the reception success rate.

<u>Method for transmitting and receiving channel state information</u>

In the present disclosure, '/' may mean including all of the contents separated by / (and) or including only some of the contents separated by / (or).

In the present disclosure, when a plurality of base stations or a base station equipped with a plurality of panels performs downlink transmission of a UE based on coherent joint transmission (CJT) (it can be assumed that a plurality of base stations are connected with an ideal backhaul, and therefore, it is assumed that the synchronization between base stations is matched), in order to improve the performance, a sophisticated codebook design is considered, and a method for configuring antenna ports and CSI-RS for this is proposed.

The codebooks supported by NR are largely divided into two types (e.g., Type 1 CSI and Type 2 CSI). In the case of Type 1 CSI, it can be divided into a single panel codebook (CB) and a multi panel CB. Type 1 CSI CB can be mainly targeted and configured for single user (SU)-MIMO, and the codebook is configured to select/indicate a single or multiple preferred DFT vector(s) from a set of oversampled DFT vectors based on the spatial domain (SD) and to instruct the co-phase for the cross polarization of the base station antenna. For Type 2 CSI, a UE selects multiple DFT vectors based on SD and linearly combines them to form a high-resolution codebook, which is mainly used for the purpose of improving multi-user (MU)-MIMO performance. In order to improve the high payload, which is a shortcoming of Type 2 CSI introduced in Release 15 NR, eType 2 (enhanced Type 2) CSI, which reduces the payload of the codebook by considering the correlation of the frequency axis, was introduced in Release 16 NR.

In this disclosure, a codebook design considering CJT is proposed. In particular, a CJT codebook design using a type 2 series codebook based on linear combining is proposed.

Hereinafter, in the method proposed in the present disclosure, the operation of the Type II codebook introduced in Rel(release)-15/16, exemplified in Table 7 described above, can be applied supplementarily/together for the operation/implementation of the proposed method of the present disclosure. Therefore, in explaining the proposed method of the present disclosure below, the standard operation exemplified in Table 7 can be referred to.

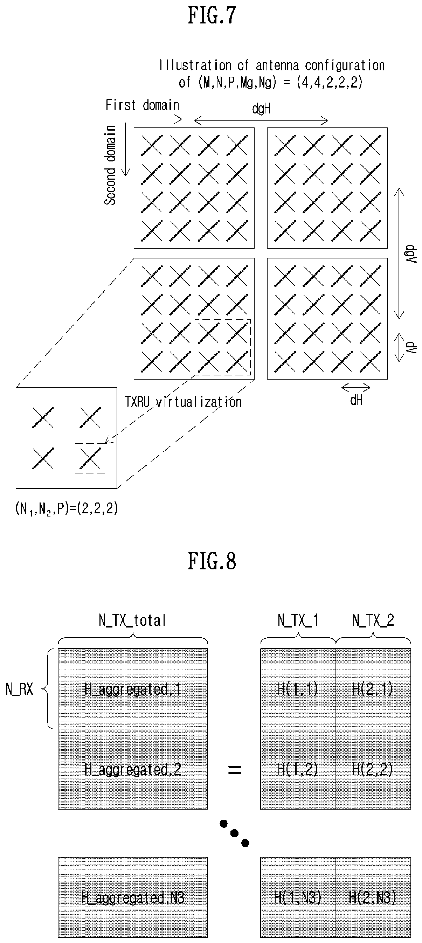

FIG. 7 illustrates an antenna configuration in a wireless communication system to which the present disclosure can be applied.

FIG. 7 illustrates an antenna configuration of (M,N,P,Mg,Ng)=(4,4,2,2,2). FIG. 7 illustrates an antenna configuration in a total of four panels, and one box represents one panel. M represents the number of columns in the panel, and N represents the number of rows in the panel. P represents polarization, and 1 represents the co-polarization (co-pol), and 2 represents cross polarization (X-pol). Mg represents the number of panels in a first domain, and Ng represents the number of panels in a second domain. Here, the total number of antenna elements is P*M*N*Mg*Ng (in FIG. 7, 2*4*4*2*2=128).

dgH represents panel spacing in a first domain, and dgV represents panel spacing in a second domain. dH represents antenna spacing in a first domain, and dV represents antenna spacing in a second domain.

Transceiver unit (or transmit/receive unit) (TXRU) virtualization can define the relationship between signals in the TXRU and signals in the antenna elements. In the antenna port configuration within the panel according to TXRU virtualization, $N_1$ represents the number of columns in a first domain, and $N_2$ represents the number of rows in a second domain. Here, the total number of CSI-RS ports within the panel is P*N1*N2 (in FIG. 7, 2*2*2=8).

FIG. 8 illustrates an aggregated channel for CJT in a wireless communication system to which the present disclosure can be applied.

Referring to FIG. 8, N_TX_total means the sum of the number of transmit antennas (Tx antennas) of TRPs participating in CJT, and N_TX_i means the number of Tx antennas of the i-th TRP. In the example of FIG. 8, N_TX_total = N_TX_1 + N_TX_2. In addition, N_RX means the receive antenna of a UE. N3 means the number of frequency units configured for a UE. In the example of FIG. 8, it can be interpreted as N3 subbands, but this is just one example, and the value of N3 can also be defined as the number of resource blocks (RBs) or resource elements (REs) or groups of RBs/REs.

H(i,j) is a channel value (matrix) corresponding to the j-th frequency unit of a UE and the i-th TRP. H_aggregated_j is a channel value (matrix) corresponding to the j-th frequency unit of the TRPs participating in a UE and CJT.

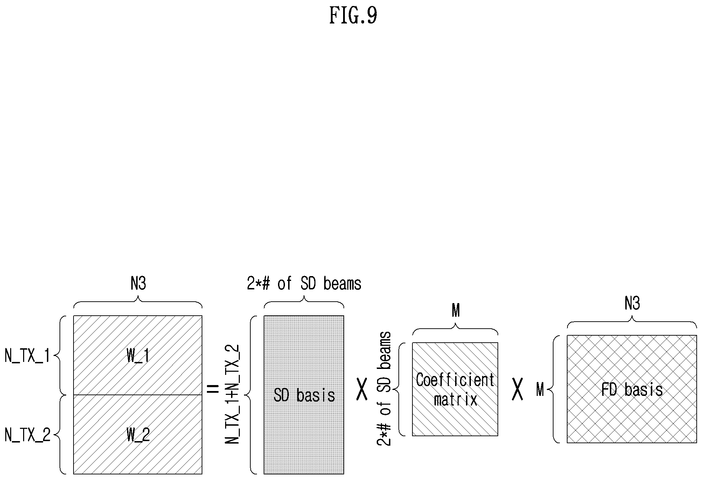

If a Rel-16 (eType II) codebook is constructed using the channel of FIG. 8, it is as shown in FIG. 9 below.

FIG. 9 illustrates an eType II codebook for CJT in a wireless communication system to which the present disclosure can be applied.

Referring to FIG. 9, W_1 and W_2 are the final precoding matrices corresponding to the Tx antennas of each TRP, and the equation for this is as shown in Equation 3 below.

【Equation 3】

$$W = \frac{1}{\sqrt{\eta}} \, W_{SD} * \widetilde{W} * W_{FD}^H$$

Here, H can mean a Hermitian operation (conjugate transpose), and depending on the frequency domain (FD) basis design, it can be simply replaced by a transpose operation. $\eta$ is a normalization term.

The spatial domain (SD) basis and the frequency domain (FD) basis (basis vector) are composed of DFT-based vectors (basis vectors), and in particular, the SD basis can be determined as 2D DFT or 1D DFT depending on the antenna structure of the TRP. Here, the DFT vector is an example, and other basis vectors can be used. In addition, M is the number of FD basis.

In the Rel-15 Type II codebook, among the oversampled discrete Fourier transform (DFT) vectors, L basis DFT vectors are used per specific pole (polarization). Then, a precoding matrix is configured by applying a wide band (WB) amplitude coefficient and a sub-band (SB) amplitude/phase coefficient to the basis DFT vectors. Among the oversampled DFT vectors, a specific vector is $v_{l,m}$ and is defined in the standard as shown in the following Equation 4.

【Equation 4】

$$u_m = \begin{bmatrix} 1 & e^{j\frac{2\pi m}{O_2 N_2}} & \cdots & e^{j\frac{2\pi m(N_2-1)}{O_2 N_2}} \end{bmatrix} \ when \ N_2 > 1, \ u_m = 1 \ when \ N_2 = 1$$

$$v_{l,m} = \begin{bmatrix} 1 & e^{j\frac{2\pi l}{O_1 N_1}} u_m & \cdots & e^{j\frac{2\pi l(N_1-1)}{O_1 N_1}} u_m \end{bmatrix}$$

Here, $N_1$ and $N_2$ represent the number (per polarization) of 1st domain and 2nd domain antennas per TRP, respectively (i.e., the number of antenna ports), which can be configured by the higher layer parameter n1-n2-codebookSubsetRestriction. $O_1$ and $O_2$ represent the oversampling factors of the 1st domain (or 1st dimension) and the 2nd domain (or 2nd dimension), respectively. The supported configurations of ($N_1$, $N_2$) and ($O_1$, $O_2$) for a given number of CSI-RS ports can be defined in the standard.

L represents the number of beams, and the L value is configured by the higher layer parameter numberOfBeams. Here, when $P_{CSI-RS}$=4, L=2, and when $P_{CSI-RS}$>4, L $\in${2,3,4} can be.

Here, the indices $m_1^{(i)}$ and $m_2^{(i)}$ as in the following Equation 5 are applied to l and m in the Equation 4, respectively, and a precoding matrix can be constructed based on this DFT basis vector.

【Equation 5】

$$m_1^{(i)} = O_1 n_1^{(i)} + q_1$$

$$m_2^{(i)} = O_2 n_2^{(i)} + q_2$$

Here, i is 0,1,...,L-1. $n_1^{(i)} \in${0,1,...,$N_1$-1}, $n_2^{(i)} \in${0,1,...,$N_2$-1}. $q_1 \in${0,1,...,$O_1$-1}, $q_2 \in${0,1,...,$O_2$-1}. The values of $n_1^{(i)}$ and $n_2^{(i)}$ are determined according to the algorithm defined in the standard.

In the Rel-16 Type II codebook, a UE compresses and reports codebook information using frequency domain correlation for the above-described Rel-15 Type II codebook. Here, the compressed information may be configured based on a set of some vectors of the oversampled DFT codebook to compress the codebook information. Here, the set of some vectors of the oversampled DFT codebook may be referred to as 'frequency domain (FD) basis vectors'.

$M_\upsilon$ FD basis vectors are defined in the standard as shown in the Equation 6 below.

【Equation 6】

$$\begin{bmatrix} y_{0,l}^{(f)}, y_{1,l}^{(f)}, \dots, y_{N_3-1,l}^{(f)} \end{bmatrix}^T$$

Here, f=0,1,...,$M_\upsilon$-1. $N_3$ is the total number of precoding matrices. l=1,...,$\upsilon$, and $\upsilon$ is the rank indicator (RI) value.

Among the $M_\upsilon$ FD basis vectors above, the t-th element of the f-th vector (where t=0,...,$N_3$-1) is equal to $y_{t,l}^{(f)}$, and is defined in the standard as shown in the following Equation 7.

【Equation 7】

$$y_{t,l}^{(f)} = e^{j\frac{2\pi t n_{3,l}^{(f)}}{N_3}}$$

Here, $n_{3,l}$ are defined in the standard as in Equation 8 below.

【Equation 8】

$$n_{3,l} = \begin{bmatrix} n_{3,l}^{(0)}, \dots, n_{3,l}^{(M_\upsilon-1)} \end{bmatrix}$$

$$n_{3,l}^{(f)} \in \{0,1,\dots,N_3-1\}$$

Here, f = 0, 1, ..., $M_\upsilon$-1. In the above Equation, through the values of $n_{3,l}^{(f)}$, Mu combinations of FD basis vectors selected by a UE from among the oversampled DFT codebooks of size $N_3$ (i.e., among the total number of precoding matrices) can be reported to a base station.

In addition, in the enhanced Type II codebook of Table 7 above, a precoding matrix can be indicated by a PMI that a UE reports to a base station, and the precoding matrix can be determined from L vectors (i.e., the L value represents the number of beams and is configured by the higher layer parameter numberOfBeams) + $M_\upsilon$ vectors (i.e., the number of FD basis vectors configured by a base station). Here, the L vectors are $n_1 \in \{0,1,...,N_1-1\}$ (the number of antenna ports in a first dimension) and $n_2 \in \{0,1,...,N_2-1\}$ (the number of antenna ports in a second dimension) indicated by $i_{1,1}$, $i_{1,2}$. $q_1 \in \{0,1,...,O_1-1\}$ (an oversampling value in a first dimension) and $q_2 \in \{0,1,...,O_2-1\}$ (an oversampling value in a second dimension) can be identified by indices.

Here, PMI corresponds to codebook indices $i_1$ and $i_2$. $i_1$ and $i_2$ may each be composed of multiple indices according to the number of ranks ($\upsilon$), as described in Table 7. That is, PMI may include indices included in $i_1$ and $i_2$ (or indicators for indicating the corresponding indices). For example, in an enhanced Type II codebook, when $\upsilon$=1, $i_1$ may include $i_{1,1}$, $i_{1,2}$, $i_{1,5}$, $i_{1,6,1}$, $i_{1,7,1}$, $i_{1,8,1}$. As another example, when $\upsilon$=2, $i_2$ may include $i_{2,3,1}$, $i_{2,4,1}$, $i_{2,5,1}$, $i_{2,3,2}$, $i_{2,4,2}$, $i_{2,5,2}$. Here, $i_{2,4,l}$(l=1,2,3,4) correspond to the amplitude coefficient indicator for indicating the amplitude coefficient. Here, $i_{2,5,l}$ (l=1,2,3,4) corresponds to the phase coefficient indicator for indicating the phase coefficient.

Referring back to FIG. 9, the codebook considered in this disclosure can be largely composed of three parts. That is, the SD basis part, the coefficient matrix part, and the FD basis part.

First, the SD basis (i.e., $\mathbf{W_{SD}}$) will be described. Hereinafter, for the convenience of explanation, it is assumed that two TRPs are associated with each other, but this is only one example and the disclosure is not limited thereto.

【Equation 9】

$$W_{SD} = \begin{bmatrix} b_1 & \cdots & b_L & & \mathbf{0} \\ \mathbf{0} & & b_1 & \cdots & b_L \end{bmatrix}$$

In the Equation 9, $b_i \in C^{\frac{N_{Tx}}{2} \times 1}$ is the i-th SD basis vector, its size is $N_{Tx}$/2, and can be replaced with $v_{l,m}$ of the Equation 4 above. The size of the linearly combined vector (b1 ... $b_L$) is $N_{Tx}$, where L is the number of basis vectors that are linearly combined. The reason why the Equation 9 is configured in the form of a block diagonalization matrix is because it considers the cross-polarization (X-pol) antenna that a base station (or TRP) is equipped with. In FIG. 9, the same number of basis vectors and the same basis vector are considered for each polarization, and it is a form suitable for the case where a single TRP is considered. However, this is one example, and the present disclosure is not limited thereto. If the above form is configured to be suitable for a multi-TRP form, it can be as shown in the Equation 10 below.

【Equation 10】

$$W_{SD} = \begin{bmatrix} b_{1,1} & \cdots & b_{1,L_1} & 0 & \cdots & 0 & 0 & \cdots & 0 & 0 & \cdots & 0 \\ 0 & \cdots & 0 & b_{2,1} & \cdots & b_{2,L_2} & 0 & \cdots & 0 & 0 & \cdots & 0 \\ 0 & \cdots & 0 & 0 & \cdots & 0 & b_{1,1} & \cdots & b_{1,L_1} & 0 & \cdots & 0 \\ 0 & \cdots & 0 & 0 & \cdots & 0 & 0 & \cdots & 0 & b_{2,1} & \cdots & b_{2,L_2} \end{bmatrix}$$

In the Equation 10, is the j-th (j=1,...,$L_i$) SD basis vector ($L_i$ is the number of basis vectors linearly combining for the i-th TRP) corresponding to the i-th (i=1,...,M) TRP (when the number of TRPs is M), its size is $N_{Tx,i}$/2, and can be replaced with $v_{l,m}$ in the Equation 4. As can be seen in the Equation 10, the SD basis can be independently selected for each TRP in terms of basis vector and its number (i.e., $L_i$). For example, $L_i \in \{2,4, 6\}$ can be. In addition, although the Equation 10 exemplifies a case where a basis vector is commonly selected for each polarization, the present disclosure is not limited thereto. In the case where the proposal is configured most flexibly, the formula can be transformed as in the following Equation 11.

【Equation 11】

$$W_{SD} = \begin{bmatrix} b_{1,1,1} & \cdots & b_{1,1,L_{1,1}} & 0 & \cdots & 0 & 0 & \cdots & 0 & 0 & \cdots & 0 \\ 0 & \cdots & 0 & b_{2,1,1} & \cdots & b_{2,1,L_{2,1}} & 0 & \cdots & 0 & 0 & \cdots & 0 \\ 0 & \cdots & 0 & 0 & \cdots & 0 & b_{1,2,1} & \cdots & b_{1,2,L_{1,2}} & 0 & \cdots & 0 \\ 0 & \cdots & 0 & 0 & \cdots & 0 & 0 & \cdots & 0 & b_{2,2,1} & \cdots & b_{2,2,L_{2,2}} \end{bmatrix}$$

In Equation 11, $b_{i,p,j} \in C^{\frac{N_{Tx,i}}{2} \times 1}$ is the j-th (j=1,...,$L_{i,p}$) SD basis vector corresponding to the p-th polarization (p=1,2) in the i-th (i=1,...,M) TRP, its size is $N_{Tx,i}/2$, and can be replaced by $v_{l,m}$ in Equation 4. As can be seen in Equation 11, the SD basis can be independently selected in terms of basis vectors and their number (i.e., $L_{i,p}$) for each TRP and each polarization. Alternatively, the oversampling factor and/or type (e.g., DFT, DCT (discrete cosine transform)) of the basis for constructing the SD basis can also be independently set for each TRP.

In addition, in the above Equations 10 and 11, the order of each block is exemplified as the 1st polarization of TRP1 -> 1st polarization of TRP2 -> 2nd polarization of TRP1 -> 2nd polarization of TRP2, however this is only an example, and the order may vary depending on the CSI-RS configuration and antenna port mapping.

Referring again to FIG. 9, the method of constructing the coefficient matrix (i.e., combining matrix $\tilde{W}$) is described.

The dimension size of the combining matrix is 2L-by-M (the number of rows is 2L and the number of columns is M) based on the Equation 9. If the Equation 10 is considered, the dimension size may be $2\sum_{i=1}^{M} L_i$-by-M , and if the Equation 11 is considered, the dimension size may be $\sum_{i=1}^{M} \sum_{p=1}^{2} L_{i,p}$-by-M .

In the case of the above combining matrix, it is composed of complex values and can be divided into an amplitude part and a phase part.

In the existing legacy codebook configuration, the amplitude is composed of two stages, and is quantized into 4 bits between polarizations (i.e., the strongest coefficient is selected for each polarization, the larger polarization among these two coefficients is assumed to be 1, and the coefficients of the remaining polarizations are quantized into 4 bits), and within the same polarization, it is composed of 3 bits based on the strongest coefficient of each polarization.

Tables 8 and 9 show values corresponding to each quantization payload. Table 8 exemplifies the case of quantization between polarizations, and Table 9 exemplifies the case of quantization within the same polarization.

[Table 8]

| Index | 1 | 2 | 3 | 4 | 5 | ... | 15 | 16 |
|-------|---|---|---|---|---|-----|----|----|
| Value | 1 | $\left(\frac{1}{2}\right)^{\frac{1}{4}}$ | $\left(\frac{1}{4}\right)^{\frac{1}{4}}$ | $\left(\frac{1}{8}\right)^{\frac{1}{4}}$ | $\left(\frac{1}{16}\right)^{\frac{1}{4}}$ | ... | $\left(\frac{1}{2^{14}}\right)^{\frac{1}{4}}$ | 'reserved' |

[Table 9]

| Index | 1 | 2 | 3 | ... | 7 | 8 |
|-------|---|---|---|-----|---|---|
| Value | 1 | $\frac{1}{\sqrt{2}}$ | $\frac{1}{2}$ | ... | $\frac{1}{8}$ | $\frac{1}{8\sqrt{2}}$ |

The phase is configured to 4 bits (e.g., 16PSK), and 4-bit quantization is performed based on the strongest coefficient.

The following can be considered to improve the performance of CSI measurement and reporting in the CJT of M-TRP.

Rel-18 CJT codebook can be RRC-configured as mode 1 or mode 2 by higher layer signaling (e.g. RRC signaling). In case of mode 3, it is restricted to use the same FD basis for all TRPs, and thus the codebook can be expressed as in FIG. 9. On the other hand, in mode 1, the FD basis can be configured differently for each TRP, and each TRP can be expressed as a codebook with a different M by N3 (i.e., the number of rows M and the number of columns N3) basis matrix.

The following was agreed upon in the 3GPP standardization meeting.

    i) In the SD basis selection for Type-II codebook improvement for CJT mTRP, the following is supported for L

parameters:

- $L_n$ parameters per CSI-RS resource

  {$L_n$, n=1, ..., N} may be configured by a base station through a higher layer, or the entire $\sum_{n=1}^{N} L_n$ may be configured by a base station through a higher layer and {$L_n$, n=1, ..., N} may be reported by a UE. One L is configured, and {$L_n$} is determined from the configured L.

The $L_n$ value is determined from a predefined set.

ii) In the Type-II codebook enhancement for CJT mTRP, the supported value(s) of the following parameters for a given CSI-RS resource with respect to the codebook parameters follow the legacy (Rel-16 generic eType-II and Rel-17 PS FeType-II) specifications.

- N1, N2, N3, O1, O2
- M (only for Rel-17 PS FeType-II based designs)

For the following parameters, RAN1#111 will determine whether the supported value(s) follow the legacy (Rel-16 generic eType-II and Rel-17 PS FeType-II) specifications or require further enhancement.

- R: Inclusive, e.g. support only R=1 or support larger R values
- $M_v/p_v$ (Rel-16 generic eType-II): support smaller $p_v$ values, e.g. {1/8, 1/4, 1/2} for v=1,2 or remove larger legacy value(s).
- $\beta$: Inclusive, supports smaller values, e.g. {1/16, 1/8, 3/8}

Note: The supported parameter value(s) combinations are further restricted based on the results of the parameter discussion.

If N>1, whether the maximum $2N_1N_2$ (identical to the number of CSI-RS ports used for channel measurement resources (CMR)) is limited to 32 just as in the legacy specification.

In the legacy NR standard, L, p, beta($\beta$) values are RRC signaled in the form of a combination. For example, parameter combinations are signaled using the RRC parameter paramCombination-r16, and L, p, beta($\beta$) values are determined using the predefined Table 10 below.

Table 10 shows parameter combinations for L, p, beta($\beta$).

[Table 10]

| Parameter combination | L | $p = y_0$ (RI= 1-2) | $p = v_0$ (RI= 3-4) | $\beta$ | Restriction (if any) |
|---|---|---|---|---|---|
| 1 | 2 | ¼ | 1/8 | ¼ | |
| 2 | 2 | ¼ | 1/8 | ½ | |
| 3 | 4 | ¼ | 1/8 | ¼ | |
| 4 | 4 | ¼ | 1/8 | ½ | |
| 5 | 4 | ¼ | ¼ | ¾ | |
| 6 | 4 | ½ | ¼ | ½ | |
| 7 | 6 | ¼ | - | ½ | RI=1-2, 32 ports |
| 8 | 6 | ¼ | - | ¾ | RI=1-2, 32 ports |

Each parameter (L, p, beta($\beta$)) can be used to determine the number M of FD basis or to calculate $K_0$, which represents an upper bound on the number of non-zero coefficients, using the following equation.

As described above, a precoding matrix can be indicated by the PMI that a UE reports to a base station, and the precoding matrix can be determined from L vectors (i.e., the number of SD basis vectors) per TRP + M vectors (i.e., the number of FD basis vectors, where M can be represented as $M_\upsilon$ for each layer). In other words, the precoding matrix can be determined (via linear combination) from the SD basis vectors and the FD basis vectors.

Here, $N_3$ means the DFT size for FD compression, and $N_3 = N_{SB} \times R$. $N_{SB}$ may correspond to the number of subbands, and R may be configured by higher layer signaling. That is, $N_3$ may mean the number of total precoding matrices indicated by PMI.

M may mean the number of FD compression units (i.e., the number of FD basis vectors), and is $M = \left\lceil p \times \frac{N_3}{R} \right\rceil$.

That is, M may be derived/determined using the above p value.

In addition, $K_0$ may mean the total number of non-zero coefficients in one or more amplitude coefficients and one or more phase coefficients, and is $K_0 = \lceil \beta \times 2LM \rceil$. That is, $K_0$ may be derived/determined using the beta ($\beta$) value, the L value, and the M value. As described above, PMI corresponds to the codebook indices $i_1$ and $i_2$, that is, PMI may include codebook indices included in $i_1$ and $i_2$ (or indicators for indicating the corresponding indices). Here, the codebook indices may include an amplitude coefficient indicator (e.g., $i_{2,4,l}$(l=1,...,$\upsilon$)) for indicating an amplitude coefficient and a phase coefficient indicator (e.g., $i_{2,5,l}$(l=1,..., $\upsilon$)) for indicating a phase coefficient. Additionally, the codebook indices may include a bitmap (e.g., $i_{1,7,l}$(l=1,...,$\upsilon$)) to indicate non-zero coefficients (NZC) within the amplitude coefficients and the phase coefficients. Here, $K_0$ may correspond to an upper bound of non-zero coefficients within the amplitude coefficients and the phase coefficients (e.g., for each layer).

More specifically, the bitmap identifies the coefficients reported in $i_{2,4,l}$(l=1,...,$\upsilon$) (i.e., amplitude coefficient indicators) and $i_{2,5,l}$(l=1,...,$\upsilon$) (i.e., phase coefficient indicators), and bits having non-zero values in the bitmap indicate reported coefficients, while bits having zero values indicate unreported coefficients.

The length of the bitmap can be determined based on the number of L vectors and the number of $M_\upsilon$ vectors for each layer. That is, each bit of the bitmap can correspond to an amplitude coefficient and a phase coefficient for each of combinations between the L vectors and the $M_\upsilon$ vectors (i.e., SD basis - FD basis combinations). That is, 1 bit can correspond to an amplitude coefficient, and 1 bit can correspond to a phase coefficient. Here, when the value of a specific bit of the bitmap is 0, the report on the amplitude coefficient or the phase coefficient corresponding to the specific bit can be omitted (i.e., the report of the amplitude coefficient indicator $i_{2,4,l}$ or the phase coefficient indicator $i_{2,5,l}$ is omitted). For each layer, the bitmap can be composed of at most $K_0 = \lceil \beta \times 2LM \rceil$ bits.

As described above, the L value can be configured separately/differently for each TRP, and the L value for the n-th TRP is represented as $L_n$. In addition, the M value can be configrued to a common value for the TRPs. That is, the number of FD basis vectors of each TRP is the same as M. That is, the precoding matrix can be determined from the number of vectors that is the sum of the $L_n$ values for each TRP (i.e., SD basis vectors for all TRPs) and the M vectors (FD basis vectors common to all TRPs). As described above, the M value can be determined using the p value.

In addition, the $K_0$ value can be calculated as $K_0 = \left\lceil \beta \sum_{n=1}^{K} 2LnM \right\rceil$ by applying an upper bound of the sum of the number of NZCs for K (=all) CSI-RS resources (i.e., corresponding to K TRPs) configured as channel measurement resources (CMR) for CJT codebook calculation. In other words, $K_0$ corresponds to an upper bound of the sum of the number of NZCs within the amplitude coefficients and the phase coefficients for all TRPs, and can be derived/determined using the beta ($\beta$) value, the $L_n$ value, and the M value.

Embodiment 1: The following method is proposed to signal/determine a combination of L, p, and beta in the CJT codebook.

Embodiment 1-1) Since a specific $L_n$ value (where n is the total number of TRPs, i.e., n=1,...,$N_{TRP}$) is applied to a TRP, the legacy table of Table 10 with a single L value cannot be used. Therefore, the $L_n$ value may be signaled/determined separately from p and beta (e.g., RRC signaling), and p and beta may be determined through a combination (e.g., RRC signaling). For example, the $L_n$ value may be signaled by each $L_n$ value, or may be determined by signaling single information (e.g., RRC parameter) for indicating a combination of predefined $L_n$ values. The p, beta values can be determined by signaling single information (e.g., an RRC parameter) to indicate a combination of p, beta. For example, the p, beta ($\beta$) values can be determined by an index value indicated by an RRC parameter in a predefined table.

Embodiment 1-2) The $L_n$ value can be separately signaled/determined according to the method of the above-described Embodiment 1-1. Thereafter, a representative value is determined from the signaled/determined $L_n$ value, and a combination of the representative value of $L_n$, p, and beta can be signaled similarly to the existing method.

For example, a representative value is determined among the configured $L_n$ values, and the corresponding representative value can be interpreted as the L value of Table 10. That is, the corresponding representative value can be interpreted as the L value of Table 1 for the p and beta values. For example, if the representative value is 4, the p and beta values can be configured/determined as one of combinations 3,4,5,6 corresponding to L=4. In other words, the base station can indicate/configure one combination among combinations 3,4,5,6, and the p and beta values can be determined according to the indicated/configured combination. Here, the representative value for the $L_n$ values can be determined as the maximum value among the $L_n$ values, and is not limited thereto and can be defined as various values using $L_n$. For example, the representative value for the $L_n$ values can be determined as the minimum value among the $L_n$ values, or the representative value for the $L_n$ values can be determined as the sum of the $L_n$ values. Alternatively, if the base station configures the maximum value of the sum of the $L_n$ values, it can be determined as the configured value. In addition to operations such as max/min/sum being used to determine the representative value for the $L_n$ values, the representative value can be determined using various operations.

In addition, when determining a representative value among $L_n$ values, the first $L_1$ value (= L value corresponding to the first TRP) may be determined as the representative value. In other words, the first $L_1$ value may mean an L value corresponding to the first CSI-RS resource among the K NZP CSI-RS resources configured as CMR for CJT CSI feedback. Alternatively, the first L1 value may mean an L value corresponding to the CSI-RS resource of the lowest identifier (ID) or the highest ID. In this case, $L_1$ may be indicated/configured by being jointly encoded with other codebook parameters (i.e., p, beta) as in the conventional method, and the remaining L values may be indicated/configured through separate signaling (e.g., RRC signaling). Here, each of the remaining L values (e.g., $L_2$, $L_3$, ..., $L_n$) excluding $L_1$ may be restricted to be configuerd to be less than or equal to the $L_1$ value. Alternatively, each L value (e.g., $L_2$, $L_3$, ..., $L_n$) except for $L_1$ may be configured to multiple values instead of one. In this case, when multiple values are configured, a UE may select one value for each L value (e.g., $L_2$, $L_3$, ..., $L_n$) and report it to a base station. In the above example, the first L1 value is assumed as the representative value, but the present disclosure is not limited thereto, and the representative value may be configured to a specific value other than the first value.

Embodiment 1-3) Using the existing method, each $L_n$ value can be signaled/determined as a combination parameter (e.g., paramCombination-r16) of $L_n$, p, and beta (using Table 10 above). For example, combination 1 (i.e., $L_1$=2, p=1/4,1/8, beta=1/4) can be configured for $L_1$, p, and beta, and combination 2 (i.e., $L_2$=2, p=1/4,1/8, beta=1/2) can be configured for $L_2$, p, and beta. Since the number of $L_n$ is plural (2 in the above example) (since it is a multi TRP case), there are plural p and plural beta signaled together with each $L_n$. In this case, the maximum (or minimum) value among the plural p and/or beta can be determined as one representative value. That is, in the above example, since beta is configured to two values, 1/4 and 1/2, the final beta can be determined as the maximum value, 1/2, or the final beta can be determined as the minimum value, 1/4. Similarly, the p value can also be determined. In the above example, since the p value signaled with $L_1$ and the p value signaled with $L_2$ are the same, the representative value may not be calculated as the maximum/minimum value, etc. In addition to operations such as max/min/sum used to determine the representative value for the p and/or beta values, the representative value can be determined using various operations.

Alternatively, in order to determine the remaining codebook parameters (e.g., p, beta) jointly encoded with the L value (i.e., to determine one of a plurality of values), a UE may assume that the values of the remaining codebook parameters (e.g., p, beta) jointly encoded with a specific $L_n$ value are valid values, and ignore the values of the remaining codebook parameters (e.g., p, beta) jointly encoded with the remaining $L_n$ values. Here, the specific $L_n$ value may be determined using a method for determining a representative value among the $L_n$ values proposed in the present disclosure (e.g., a maximum/minimum value among the $L_n$ values, the first L1 value, or an $L_n$ value at a specific position). For example, in the case where $L_1$ among the $L_n$ values is determined as a representative value, a UE may assume that the values of the remaining codebook parameters (e.g., p, beta) jointly encoded with $L_1$ are valid values.

Embodiment 1-4) A base station can configure K (= number of TRPs, i.e. $N_{TRP}$) CSI-RS resources for CJT CSI feedback to a UE. In this case, separate/different configurable parameter combinations for L, p, beta can be defined depending on the K value. For example, in combination with Embodiment 1-1, when a value of $L_n$ (n=1,..., $N_{TRP}$) and a combination of p, beta are separately signaled, a configurable parameter combination can be defined between a value of $L_n$ (n=1,..., $N_{TRP}$) and a combination of p, beta.

For example, a parameter combination table defining configurable parameter combinations for L, p, and beta may be defined separately/differently depending on the K value. As the K value increases, the codebook payload size increases, and considering this feedback overhead, the configurable parameter combinations (or parameter combination table) may be defined separately/differently depending on the K value.

Alternatively, configurable parameter combinations (or parameter combination tables) for L, p, and beta may be commonly defined (for example, using one table). In this case, the L, p, and beta values determined from the configurable parameter combinations (or parameter combination tables) by signaling from a base station may be determined as a function of the K value. For example, when determining the beta (or p) value, the beta (or p) value may be determined by multiplying the value determined from the configurable parameter combinations (or parameter combination tables) by signaling from a base station by 1/K. By doing so, the beta (or p) value may be configured to be smaller as K increases. As another example, the beta (or p) value may be configured to be larger as the K value increases by multiplying the value determined from the configurable parameter combinations (or parameter combination tables) by signaling from a base station.

In addition, in Embodiments 1-1, 1-2, 1-3, and 1-4, a UE may select some (=N, where N is a natural number) of the K TRPs (i.e., the number of TRPs that can participate in CJT transmission) to calculate the CJT CSI, in which case L/beta/p, etc. may be determined based on the N value instead of the K value in the above proposal. That is, separate/different configurable parameter combinations may be defined based on the N value for L, p, and beta. Alternatively, the configurable parameter combinations (or parameter combination table) for L, p, and beta may be commonly defined, and the L, p, and beta values determined in the parameter combinations (or parameter combination table) configurable by signaling by a base station may be determined as a function of the N value. That is, in Embodiments 1-2 and 1-3, Embodiments 1-2 and 1-3 may be applied only to L values corresponding to the N TRPs. For example, when K is configured to 4 and CSI-RS resources 1, 2, 3, and 4 are configured as CJT CMR, a UE may select CSI-RS resources 2, 3 (i.e., N=2) to calculate CJT CSI. In this case, Embodiment 1-2 or Embodiment 1-3 is not applied to $L_1$, $L_2$, $L_3$, and $L_4$ (corresponding to CSI-RS resources 1, 2, 3, and 4, respectively), and Embodiment 1-2 or Embodiment 1-3 may be applied only to $L_2$, $L_3$ (corresponding to CSI-RS resources 2, 3, respectively) corresponding to the CSI-RS resources selected by a UE (i.e., $L_1$ and $L_4$ are assumed/considered not to be configured). For example, in this case, the first L value corresponds to $L_2$, not $L_1$.

Alternatively, in Embodiments 1-1, 1-2, 1-3, and 1-4, a base station may signal to a UE the maximum number of TRPs (= $N_{TRP}$) that can be assumed when calculating CJT CSI. In this case, L/beta/p, etc. may be determined based on the $N_{TRP}$ value instead of the K value in the above proposal. That is, separate/different configurable parameter combinations may be defined based on the $N_{TRP}$ values for L, p, and beta. Alternatively, configurable parameter combinations (or parameter combination table) for L, p, and beta may be commonly defined, and the L, p, and beta values determined in the configurable parameter combinations (or parameter combination table) by signaling by a base station may be determined as a function of the $N_{TRP}$ value.

Meanwhile, in Embodiments 1-1, 1-2, 1-3, and 1-4, each TRP means a CSI-RS having a different QCL source reference signal (RS). That is, a UE can be configrued with K CSI-RSs (K is a natural number greater than or equal to 2) having different QCL source RSs as CMRs (channel measurement resources) to calculate the CJT codebook, which means K TRPs that can participate in CJT transmission in the present disclosure. Therefore, in the present disclosure, each TRP can be interpreted as being replaced with a CSI-RS having a different QCL source RS.

In addition, in Embodiments 1-1, 1-2, 1-3, and 1-4, a base station may configure multiple candidate values for each $L_n$ value (i.e., for each of the $L_1$, $L_2$, ..., Ln values), and a UE may determine/report the $L_n$ value as one of the configured candidate values. As described above, Embodiments 1-1, 1-2, 1-3, and 1-4 assume that each $L_n$ value is configured to one value. Therefore, in cases where multiple $L_n$ values are configured (i.e., multiple candidate values are configured), Embodiments 1-1, 1-2, 1-3, and 1-4 may be applied assuming that each $L_n$ value is the maximum/minimum value among the multiple values, or Embodiments 1-1, 1-2, 1-3, and 1-4 may be applied assuming that each $L_n$ value is a value determined/reported by a UE.

Meanwhile, the bitmap size (= $B_n$) of the non-zero coefficient (NZC) bitmap (e.g., $i_{1,7,l}$(l=1,...,$\upsilon$)) corresponding to the n-th TRP can be determined as $B_n = 2L_n M_v$ (wherein, $M_v$ means the number of FD basis corresponding to layer v). Here, a UE configures a bitmap of size $B_n$ for each of N CSI-RS resources (= N TRPs) out of K selected by the UE. For example, if a UE selects CSI-RS resources 1 and 2 out of CSI-RS resources 1,2,3,4 (i.e., K=4, N=2), the UE configures bitmaps of sizes $B_1$ and $B_2$, respectively, so that $B_3 = B_4 = 0$. Therefore, the total bitmap size is $B_1 + B_2$. As a result, as the N value selected by a UE increases (i.e., as a large number of CSI-RS resources (TRPs) are selected), the total size of the bitmap increases. In order to reduce the increase in the bitmap size, each $L_n$ value may be configured differently according to the N value. For example, for a specific $L_n$, when the N value is 1, the specific $L_n$ may be configured/defined as 6, when the N value is 2, $L_n$ may be configured/defined as 4, and when the N value is 3, $L_n$ may be configured/defined as 2. As another example, a method may be considered to reduce the $L_n$ values by scaling down the $L_n$ values as the N value increases (e.g., scaling down by a certain ratio by multiplying the previous $L_n$ value by a number smaller than 1 whenever the N value increases by 1). Alternatively, conversely, as the value of N decreases, one may consider scaling up the $L_n$ values (e.g., scaling up by a certain ratio by multiplying the previous $L_n$ value by a number greater than 1 whenever the value of N decreases by 1). Alternatively, the $L_n$ values can be configured as a set, and multiple sets of $L_n$ values can be configured. In this case, if a UE selects an N value less than or equal to a certain value (i.e., a small number of CSI-RS resources (TRPs)), a set consisting of relatively large L values (e.g., the largest L values) can be used. On the other hand, if a UE selects an N value greater than a certain value (i.e., a large number of CSI-RS resources (TRPs)), a set consisting of relatively small L values (e.g., the smallest L values) can be used. For example, if set 1 = {$L_1$=4,$L_2$=6,$L_3$=6,$L_4$=6}, set 2 = {$L_1$=2,$L_2$=2,$L_3$=2,$L_4$=2} are configured, if a UE selects an N value less than or equal to a certain value, set 1 consisting of large L values can be used, otherwise, set 2 consisting of small L values can be used.

Meanwhile, a UE can report the maximum value of the sum of $L_n$ values (i.e., $L_1+L_2+L_3+...+L_K$) to a base station as the UE capability. In this case, when a base station configures/indicates the $L_n$ values to the UE, the base station can configure/indicate the $L_n$ values within a range that does not exceed the maximum value reported by the UE. If the sum of $L_n$ values is too large, a UE has to search/select more SD basis vectors and calculate more non-zero coefficients when configuring the codebook. This may increase the UE implementation burden and also increase the feedback overhead. Therefore, a UE can report the maximum value of the sum of $L_n$ values (i.e., $L_1+L_2+L_3+...+L_K$) that matches its capability to a base station as the UE capability. Here, the maximum value of the sum of $L_n$ values can be configured/determined differently depending on the K value.

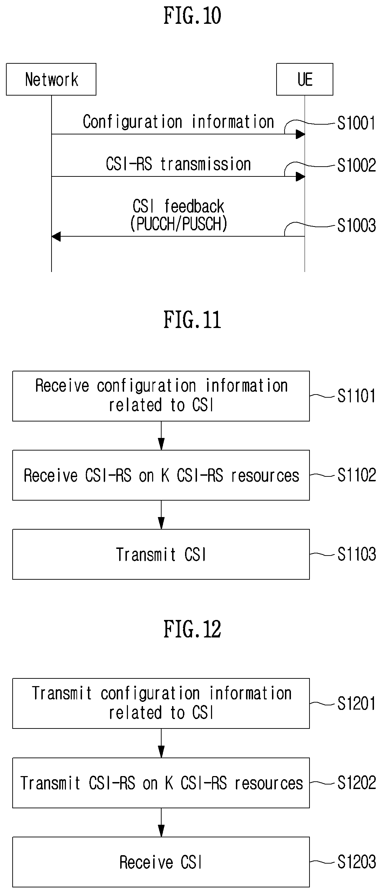

FIG. 10 is a diagram illustrating a signaling procedure between a network and a UE for a method for transmitting and receiving channel state information according to an embodiment of the present disclosure.

FIG. 10 illustrates signaling between a network (e.g., TRP 1, TRP 2) and a terminal (e.g., UE) in a situation of multiple TRPs (i.e., M-TRPs, or multiple cells, all TRPs hereinafter may be replaced with cells) to which the methods proposed in the present disclosure (e.g., one or a combination of one or more of Embodiments 1-1, 1-2, 1-3, and 1-4) may be applied.

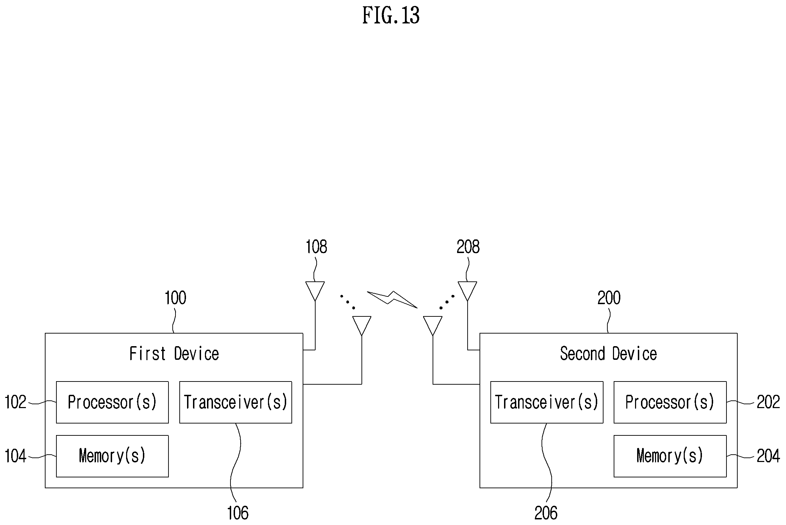

Here, UE/Network are only examples and may be replaced with various devices as described in FIG. 13 below. FIG. 10 is only for convenience of explanation and does not limit the scope of the present disclosure. In addition, some step(s) shown in FIG. 10 may be omitted depending on the situation and/or setting.

In the following description, the network may be one base station including multiple TRPs, and may be one cell including multiple TRPs. For example, an ideal/non-ideal backhaul may be configured between TRP 1 and TRP 2 constituting the network. In addition, the following description is described based on multiple TRPs, but this may be equally extended and applied to transmission through multiple panels. In addition, in the present disclosure, an operation of a UE receiving a signal from TRP1/TRP2 may also be interpreted/described (or may be an operation) as an operation of the UE receiving a signal from the network (via/using TRP1/2), and an operation of the UE transmitting a signal to TRP1/TRP2 may also be interpreted/described (or may be an operation) as an operation of the UE transmitting a signal to the network (via/using TRP1/TRP2), and vice versa.

In addition, as described above, "TRP" may be replaced with expressions such as panel, antenna array, cell (e.g., macro cell / small cell / pico cell, etc.), transmission point (TP), base station (gNB, etc.). As described above, TRP may be distinguished according to information (e.g., index, identifier (ID)) on a CORESET group (or CORESET pool). For example, when one UE is configured to perform transmission and reception with multiple TRPs (or cells), this may mean that multiple CORESET groups (or CORESET pools) are configured for one UE. Such configuration of CORESET groups (or CORESET pools) may be performed via higher layer signaling (e.g., RRC signaling, etc.). In addition, the base station may be a general term for an object that performs data transmission and reception with the UE. For example, the base station may be a concept that includes one or more TPs (Transmission Points), one or more TRPs (Transmission and Reception Points), etc. In addition, the TP and/or TRP may include a panel of the base station, a transmission and reception unit, etc.

Referring to FIG. 10, for convenience of explanation, signaling between one network (base station) and a UE is considered, but of course, the signaling method can be extended and applied to signaling between multiple TRPs and multiple UEs.

Although not shown in FIG. 10, a UE can transmit information on UE capability to a network. For example, the information on the UE capability can include information on the UE capability related to the proposed method described above (for example, one or a combination of one or more of Embodiments 1-1, 1-2, 1-3, 1-4), and for example, can include the maximum value of the sum of $L_n$ values (i.e., $L_1+L_2+L_3+...+L_K$).

Referring to FIG. 10, a network transmits configuration information related to channel state information (CSI) to a UE (S1001). That is, the UE receives configuration information related to channel state information (CSI) from the network.

The configuration information related to the CSI may include at least one of CSI-IM (interference management) resource configuration information, CSI measurement configuration information, CSI resource configuration information, and CSI report configuration information.

In addition, the configuration information related to the CSI (in particular, the configuration information related to the CSI report) may include information on the proposed method described above (for example, one or a combination of one or more of Embodiments 1-1, 1-2, 1-3, 1-4).

For example, according to the Embodiment 1-1 described above, the configuration information may include information on i) one or more of the first parameters ($L_n$, n=1,..., $N_{TRP}$) and ii) a combination of the second parameter (p) and the third parameter (beta).

For example, according to the above-described Embodiment 1-2, the configuration information may include information on one or more of the first parameters ($L_n$, n=1,..., $N_{TRP}$). And, it may include information on a combination of a representative value determined from one or more of the first parameters ($L_n$, n=1, ... , $N_{TRP}$), a second parameter (p), and a third parameter (beta).

For example, according to the above-described Embodiment 1-3, the configuration information may include one or more of information on a combination of the first parameter (L), the second parameter (p), and the third parameter (beta). When a plurality of second parameters (p) and third parameters (beta) are configured, each may be determined as a representative value.

For example, according to the above-described Embodiment 1-4, the configuration information (especially the configuration information related to the CSI resource) may include information on K (= the number of TRPs, i.e., $N_{TRP}$)CSI-RS resources for CJT CSI feedback. In this case, separate/different configurable parameter combinations for L, p, beta may be defined according to the K value. For example, in combination with Embodiment 1-1, when a value of $L_n$ (n=1,..., $N_{TRP}$)and a combination of p, beta are separately signaled, a configurable parameter combination may be defined between the value of $L_n$ (n=1,..., $N_{TRP}$)and the combination of p, beta. That is, a UE may assume that a value of $L_n$ (n=1,..., $N_{TRP}$)values and a combination of p, beta is signaled within the configurable parameter combination.

A network transmits a CSI-RS to a UE on one or more (i.e., K, where K is a natural number) CSI-RS resources (S1002). That is, the UE receives a CSI-RS from the network on one or more (i.e., K, where K is a natural number) CSI-RS resources.

Here, the UE can receive a CSI-RS through one or more antenna ports on one or more CSI-RS resources based on the configuration information.

A network receives channel state information (CSI) (feedback/report) from a UE (S1003). That is, the UE transmits channel state information (CSI) (feedback/report) to the network.

Here, channel state information (CSI) (feedback/report) may be transmitted via an uplink physical layer channel (e.g., PUCCH or PUSCH). In addition, the CSI may include at least one of PMI, CQI, RI, and LI.

The CSI reported by the UE to the network may be derived/generated based on the proposed methods described above (e.g., one or a combination of one or more of Embodiments 1-1, 1-2, 1-3, and 1-4).

For example, the CSI may include PMI corresponding to indices of a codebook for indicating precoding matrix (s). Here, the codebook may correspond to a codebook based on a linear combining of SD basis vector(s) and FD basis vector(s), as in the example of FIG. 9, and for example, the type of the codebook may be a Type II CJT (coherent joint transmission) codebook.

The precoding matrix(s) indicated by the PMI can be determined from the plurality of vectors. In other words, the precoding matrix(s) indicated by the PMI can be determined from $L_n$ vectors (i.e., the number of SD basis vectors) per TRP + M vectors (i.e., the number of FD basis vectors, where M can also be denoted as $M_\upsilon$ for each layer).

The above K CSI-RS resources can correspond to different TRPs, respectively. That is, each CSI-RS resource can correspond to each TRP. Here, the UE can select N ($1 \leq N \leq K$) CSI-RS resources from the configured K CSI-RS resources, and calculate/derive PMI values for the N ($1 \leq N \leq K$) CSI-RS resources and report them to the base station. In this case, the precoding matrix(s) indicated by the PMI can be determined from vectors (i.e., SD basis vectors) and M vectors (i.e., FD basis vectors) corresponding to the selected N CSI-RS resources.

The number of the plurality of vectors (i.e., the number of SD basis vectors and the number of FD basis vectors) can be determined based on the one or more first parameters ($L_n$, n=1, ... , $N_{TRP}$)and the second parameter (p). Each of the one or more first parameters ($L_n$, n=1,..., $N_{TRP}$)can correspond one-to-one to the K CSI-RS resources. Accordingly, the one or more first parameters ($L_n$, n=1, ... , $N_{TRP}$) can indicate the number of SD basis vectors associated with the corresponding CSI-RS resources, respectively. Here, when the UE calculates/derives PMI values for N ($1 \leq N \leq K$) CSI-RS resources and reports them to the base station, only the one or more first parameters ($L_n$, n=1, ... , $N_{TRP}$) corresponding to the N CSI-RS resources can be used to determine the number of the plurality of vectors. Additionally, the number of FD basis vectors common to the K CSI-RS resources (or common to the N CSI-RS resources selected by the UE) can be determined using the second parameter (p).

In addition, as described above, PMI corresponds to codebook indices $i_1$ and $i_2$. $i_1$ and $i_2$ can be composed of multiple codebook indices, respectively, according to the number of ranks ($\upsilon$). The codebook indices can include various indices, and in particular, for combinations between vectors (i.e., SD basis and FD basis combinations), it can include an amplitude coefficient indicator (e.g., $i_{2,4,l}$(l=1, ...,$\upsilon$)) for indicating an amplitude coefficient and a phase coefficient indicator (e.g., $i_{2,5,l}$(l=1, ... , $\upsilon$)) for indicating a phase coefficient. Additionally, the codebook index may include a bitmap (e.g., a bitmap for indicating non-zero coefficient(s) among the one or more amplitude coefficients and the one or more phase coefficients) (e.g., $i_{1,7,l}$(l=1, ... , $\upsilon$)) for identifying which coefficients are reported by the amplitude coefficient indicator and the phase coefficient indicator. Here, an upper bound of non-zero coefficient(s) within the amplitude coefficients and the phase coefficients (i.e., the non-zero coefficient cannot exceed the upper bound) may be determined based on the one or more first parameters ($L_n$, n=1, ... ,$N_{TRP}$), the second parameter (p) and the third parameter (beta). Specifically, the upper bound $K_0$ of the total number of non-zero coefficients may be determined as a minimum integer (i.e.,

$$K_0 = \left\lceil \beta \sum_{n=1}^{K} 2LnM \right\rceil$$

) that is not smaller than the product of the sum of the one or more first parameters, the second parameter, and the third parameter. Here, when the UE calculates/derives a PMI value for N ($1 \leq N \leq K$) CSI-RS resources and reports it to the base station, the sum of only one or more first parameters (Ln, n=1, ... , NTRP) corresponding to the N CSI-RS resources may be used to determine the upper bound of the total number of non-zero coefficients.

After that, the network can transmit DCI scheduling a PDSCH to the UE, i.e., the UE can receive DCI scheduling a PDSCH from the network. Here, the DCI can be transmitted via a physical channel (e.g., PDCCH). In addition, the DCI can include scheduling information for a PDSCH. In addition, the DCI can include beam information for PDSCH transmission. For example, the beam information can include at least one of a QCL (quasi co-location) source, a TCI state index.

In addition, the network can transmit downlink data to the UE, i.e., the UE can receive downlink data from the network. Here, the downlink data can be transmitted via a physical channel (e.g., PDSCH).

FIG. 11 is a diagram illustrating an operation of a UE for a method for transmitting and receiving channel state information according to an embodiment of the present disclosure.

FIG. 11 illustrates an operation of a UE based on the methods proposed above (for example, one or a combination of one or more of Embodiments 1-1, 1-2, 1-3, and 1-4). The example of FIG. 11 is for convenience of explanation and does not limit the scope of the present disclosure. Some step(s) illustrated in FIG. 11 may be omitted depending on a situation and/or setting. In addition, the UE in FIG. 11 is only an example and may be implemented as a device illustrated in FIG. 13 below. For example, the processor (102/202) of FIG. 13 may control the transceiver (106/206) to transmit and receive channels/signals/data/information, etc., and may also control the processor (102/202) of FIG. 13 to store the channels/-signals/data/information to be transmitted or received in the memory (104/204).

Although not shown in FIG. 11, a UE can transmit information on UE capability to a base station. For example, the information on the UE capability can include information on the UE capability related to the proposed method described above (for example, one or a combination of one or more of Embodiments 1-1, 1-2, 1-3, 1-4), and for example, can include the maximum value of the sum of $L_n$ values (i.e., $L_1+L_2+L_3+...+L_K$).

Referring to FIG. 11, a UE receives configuration information related to channel state information (CSI) from a base station (S1101).

The configuration information related to the CSI may include at least one of CSI-IM (interference management) resource configuration information, CSI measurement configuration information, CSI resource configuration information, and CSI report configuration information.

In addition, the configuration information related to the CSI (in particular, the configuration information related to the CSI report) may include information on the proposed method described above (for example, one or a combination of one or more of Embodiments 1-1, 1-2, 1-3, 1-4).

For example, according to the Embodiment 1-1 described above, the configuration information may include information on i) one or more of the first parameters ($L_n$, n=1,..., $N_{TRP}$) and ii) a combination of the second parameter (p) and the third parameter (beta).

For example, according to the above-described Embodiment 1-2, the configuration information may include information on one or more of the first parameters ($L_n$, n=1,..., $N_{TRP}$). And, it may include information on a combination of a representative value determined from one or more of the first parameters ($L_n$, n=1, ... , $N_{TRP}$), a second parameter (p), and a third parameter (beta).

For example, according to the above-described Embodiment 1-3, the configuration information may include one or more of information on a combination of the first parameter (L), the second parameter (p), and the third parameter (beta). When a plurality of second parameters (p) and third parameters (beta) are configured, each may be determined as a representative value.

For example, according to the above-described Embodiment 1-4, the configuration information (especially, for example, the configuration information related to the CSI resource) may include information on K (= the number of TRPs, i.e., $N_{TRP}$) CSI-RS resources for CJT CSI feedback. In this case, separate/different configurable parameter combinations for L, p, beta may be defined according to the K value. For example, in combination with Embodiment 1-1, when a value of $L_n$ (n=1, ..., $N_{TRP}$) and a combination of p, beta are separately signaled, a configurable parameter combination may be defined between the value of $L_n$ (n=1,..., $N_{TRP}$) and the combination of p, beta. That is, a UE may assume that a value of $L_n$ (n=1,..., $N_{TRP}$) values and a combination of p, beta is signaled within the configurable parameter combination.

A UE receives a CSI-RS from a base station on one or more (i.e., K, where K is a natural number) CSI-RS resources (S1102).

Here, the UE can receive a CSI-RS through one or more antenna ports on one or more CSI-RS resources based on the configuration information.

A UE transmits channel state information (CSI) (feedback/report) to a base station (S1103).

Here, channel state information (CSI) (feedback/report) may be transmitted via an uplink physical layer channel (e.g., PUCCH or PUSCH). In addition, the CSI may include at least one of PMI, CQI, RI, and LI.

The CSI reported by the UE to the base station may be derived/generated based on the proposed methods described above (e.g., one or a combination of one or more of Embodiments 1-1, 1-2, 1-3, and 1-4).

For example, the CSI may include PMI corresponding to indices of a codebook for indicating precoding matrix (s). Here, the codebook may correspond to a codebook based on a linear combining of SD basis vector(s) and FD basis vector(s), as in the example of FIG. 9, and for example, the type of the codebook may be a Type II CJT (coherent joint transmission) codebook.

The precoding matrix(s) indicated by the PMI can be determined from the plurality of vectors. In other words, the precoding matrix(s) indicated by the PMI can be determined from $L_n$ vectors (i.e., the number of SD basis vectors) per TRP + M vectors (i.e., the number of FD basis vectors, where M can also be denoted as $M_v$ for each layer).

The above K CSI-RS resources can correspond to different TRPs, respectively. That is, each CSI-RS resource can correspond to each TRP. Here, the UE can select N ($1 \le N \le K$) CSI-RS resources from the configured K CSI-RS resources, and calculate/derive PMI values for the N ($1 \le N \le K$) CSI-RS resources and report them to the base station. In this case, the precoding matrix(s) indicated by the PMI can be determined from vectors (i.e., SD basis vectors) and M vectors (i.e., FD basis vectors) corresponding to the selected N CSI-RS resources.

The number of the plurality of vectors (i.e., the number of SD basis vectors and the number of FD basis vectors) can be determined based on the one or more first parameters ($L_n$, n=1, ... , $N_{TRP}$) and the second parameter (p). Each of the one or more first parameters ($L_n$, n=1,..., $N_{TRP}$) can correspond one-to-one to the K CSI-RS resources. Accordingly, the one or more first parameters ($L_n$, n=1, ... , $N_{TRP}$)can indicate the number of SD basis vectors associated with the corresponding CSI-RS resources, respectively. Here, when the UE calculates/derives PMI values for N ($1 \leq N \leq K$) CSI-RS resources and reports them to the base station, only the one or more first parameters ($L_n$, n=1, ... , $N_{TRP}$) corresponding to the N CSI-RS resources can be used to determine the number of the plurality of vectors. Additionally, the number of FD basis vectors common to the K CSI-RS resources (or common to the N CSI-RS resources selected by the UE) can be determined using the second parameter (p).

In addition, as described above, PMI corresponds to codebook indices $i_1$ and $i_2$. $i_1$ and $i_2$ can be composed of multiple codebook indices, respectively, according to the number of ranks ($\upsilon$). The codebook indices can include various indices, and in particular, for combinations between vectors (i.e., SD basis and FD basis combinations), it can include an amplitude coefficient indicator (e.g., $i_{2,4,l}$(l=1,...,$\upsilon$)) for indicating an amplitude coefficient and a phase coefficient indicator (e.g., $i_{2,5,l}$(l=1, ...,$\upsilon$)) for indicating a phase coefficient. Additionally, the codebook index may include a bitmap (e.g., a bitmap for indicating non-zero coefficient(s) among the one or more amplitude coefficients and the one or more phase coefficients) (e.g., $i_{1,7,l}$(l=1, ...,)) for identifying which coefficients are reported by the amplitude coefficient indicator and the phase coefficient indicator. Here, an upper bound of non-zero coefficient(s) within the amplitude coefficients and the phase coefficients (i.e., the non-zero coefficient cannot exceed the upper bound) may be determined based on the one or more first parameters ($L_n$, n=1,...,$N_{TRP}$), the second parameter (p) and the third parameter (beta). Specifically, the upper bound $K_0$ of the total number of non-zero coefficients may be determined as a minimum integer (i.e.,

$$K_0 = \left\lceil \beta \sum_{n=1}^{K} 2LnM \right\rceil$$

) that is not smaller than the product of the sum of the one or more first parameters, the second parameter, and the third parameter. Here, when the UE calculates/derives a PMI value for N ($1 \leq N \leq K$) CSI-RS resources and reports it to the base station, the sum of only one or more first parameters (Ln, n=1, ... , NTRP) corresponding to the N CSI-RS resources may be used to determine the upper bound of the total number of non-zero coefficients.

FIG. 12 is a diagram illustrating an operation of a base station for a method for transmitting and receiving channel state information according to an embodiment of the present disclosure.

FIG. 12 illustrates an operation of a base station based on the methods proposed above (for example, one or a combination of one or more of Embodiments 1-1, 1-2, 1-3, and 1-4). The example of FIG. 12 is for convenience of explanation and does not limit the scope of the present disclosure. Some step(s) illustrated in FIG. 12 may be omitted depending on a situation and/or setting. In addition, the base station in FIG. 12 is only an example and may be implemented as a device illustrated in FIG. 13 below. For example, the processor (102/202) of FIG. 13 may control the transceiver (106/206) to transmit and receive channels/signals/data/information, etc., and may also control the processor (102/202) of FIG. 13 to store the channels/signals/data/information to be transmitted or received in the memory (104/204).

Although not shown in FIG. 11, a base station can receive information on UE capability from a user equipment. For example, the information on the UE capability can include information on the UE capability related to the proposed method described above (for example, one or a combination of one or more of Embodiments 1-1, 1-2, 1-3, 1-4), and for example, can include the maximum value of the sum of $L_n$ values (i.e., $L_1+L_2+L_3+...+L_K$).

Referring to FIG. 12, a base station transmits configuration information related to channel state information (CSI) to a UE (S1201).

The configuration information related to the CSI may include at least one of CSI-IM (interference management) resource configuration information, CSI measurement configuration information, CSI resource configuration information, and CSI report configuration information.

In addition, the configuration information related to the CSI (in particular, the configuration information related to the CSI report) may include information on the proposed method described above (for example, one or a combination of one or more of Embodiments 1-1, 1-2, 1-3, 1-4).

For example, according to the Embodiment 1-1 described above, the configuration information may include information on i) one or more of the first parameters ($L_n$, n=1,..., $N_{TRP}$) and ii) a combination of the second parameter (p) and the third parameter (beta).

For example, according to the above-described Embodiment 1-2, the configuration information may include information on one or more of the first parameters ($L_n$, n=1,..., $N_{TRP}$). And, it may include information on a combination of a representative value determined from one or more of the first parameters ($L_n$, n=1, ... , $N_{TRP}$), a second parameter (p), and a third parameter (beta).

For example, according to the above-described Embodiment 1-3, the configuration information may include one or more of information on a combination of the first parameter (L), the second parameter (p), and the third parameter (beta). When a plurality of second parameters (p) and third parameters (beta) are configured, each may be determined as a representative value.

For example, according to the above-described Embodiment 1-4, the configuration information (especially, for example, the configuration information related to the CSI resource) may include information on K (= the number of TRPs, i.e., $N_{TRP}$) CSI-RS resources for CJT CSI feedback. In this case, separate/different configurable parameter combinations for L, p, beta may be defined according to the K value. For example, in combination with Embodiment 1-1, when a value of $L_n$ (n=1, ..., $N_{TRP}$) and a combination of p, beta are separately signaled, a configurable parameter combination may be defined between the value of $L_n$ (n=1,..., $N_{TRP}$) and the combination of p, beta. That is, a UE may assume that a value of $L_n$ (n=1,..., $N_{TRP}$) values and a combination of p, beta is signaled within the configurable parameter combination.

A base station transmits a CSI-RS to a UE on one or more (i.e., K, where K is a natural number) CSI-RS resources (S1202).

Here, the base station can transmit a CSI-RS through one or more antenna ports on one or more CSI-RS resources based on the configuration information.

A base station receives channel state information (CSI) (feedback/report) from a UE (S1203).

Here, channel state information (CSI) (feedback/report) may be transmitted via an uplink physical layer channel (e.g., PUCCH or PUSCH). In addition, the CSI may include at least one of PMI, CQI, RI, and LI.

The CSI received from the UE may be derived/generated based on the proposed methods described above (e.g., one or a combination of one or more of Embodiments 1-1, 1-2, 1-3, and 1-4).

For example, the CSI may include PMI corresponding to indices of a codebook for indicating precoding matrix(s). Here, the codebook may correspond to a codebook based on a linear combining of SD basis vector(s) and FD basis vector(s), as in the example of FIG. 9, and for example, the type of the codebook may be a Type II CJT (coherent joint transmission) codebook.

The precoding matrix(s) indicated by the PMI can be determined from the plurality of vectors. In other words, the precoding matrix(s) indicated by the PMI can be determined from $L_n$ vectors (i.e., the number of SD basis vectors) per TRP + M vectors (i.e., the number of FD basis vectors, where M can also be denoted as $M_\upsilon$ for each layer).

The above K CSI-RS resources can correspond to different TRPs, respectively. That is, each CSI-RS resource can correspond to each TRP. Here, the UE can select N (1≤N≤K) CSI-RS resources from the configured K CSI-RS resources, and calculate/derive PMI values for the N (1≤N≤K) CSI-RS resources and report them to the base station. In this case, the precoding matrix(s) indicated by the PMI can be determined from vectors (i.e., SD basis vectors) and M vectors (i.e., FD basis vectors) corresponding to the selected N CSI-RS resources.

The number of the plurality of vectors (i.e., the number of SD basis vectors and the number of FD basis vectors) can be determined based on the one or more first parameters ($L_n$, n=1, ... , $N_{TRP}$) and the second parameter (p). Each of the one or more first parameters ($L_n$, n=1,..., $N_{TRP}$) can correspond one-to-one to the K CSI-RS resources. Accordingly, the one or more first parameters ($L_n$, n=1, ... , $N_{TRP}$) can indicate the number of SD basis vectors associated with the corresponding CSI-RS resources, respectively. Here, when the UE calculates/derives PMI values for N (1≤N≤K) CSI-RS resources and reports them to the base station, only the one or more first parameters ($L_n$, n=1, ... , $N_{TRP}$) corresponding to the N CSI-RS resources can be used to determine the number of the plurality of vectors. Additionally, the number of FD basis vectors common to the K CSI-RS resources (or common to the N CSI-RS resources selected by the UE) can be determined using the second parameter (p).

In addition, as described above, PMI corresponds to codebook indices $i_1$ and $i_2$. $i_1$ and $i_2$ can be composed of multiple codebook indices, respectively, according to the number of ranks ($\upsilon$). The codebook indices can include various indices, and in particular, for combinations between vectors (i.e., SD basis and FD basis combinations), it can include an amplitude coefficient indicator (e.g., $i_{2,4,l}$ (l=1,...,$\upsilon$)) for indicating an amplitude coefficient and a phase coefficient indicator (e.g., $i_{2,5,l}$ (l=1, ...,$\upsilon$)) for indicating a phase coefficient. Additionally, the codebook index may include a bitmap (e.g., a bitmap for indicating non-zero coefficient(s) among the one or more amplitude coefficients and the one or more phase coefficients) (e.g., $i_{1,7,l}$ (l=1, ...,$\upsilon$)) for identifying which coefficients are reported by the amplitude coefficient indicator and the phase coefficient indicator. Here, an upper bound of non-zero coefficient(s) within the amplitude coefficients and the phase coefficients (i.e., the non-zero coefficient cannot exceed the upper bound) may be determined based on the one or more first parameters ($L_n$, n=1,...,$N_{TRP}$), the second parameter (p) and the third parameter (beta). Specifically, the upper bound $K_0$ of the total number of non-zero coefficients may be determined as a minimum integer (i.e.,

$$K_0 = \left\lceil \beta \sum_{n=1}^{K} 2LnM \right\rceil$$

) that is not smaller than the product of the sum of the one or more first parameters, the second parameter, and the third parameter. Here, when the UE calculates/derives a PMI value for N (1≤N≤K) CSI-RS resources and reports it to the base station, the sum of only one or more first parameters (Ln, n=1,..., NTRP) corresponding to the N CSI-RS resources may be used to determine the upper bound of the total number of non-zero coefficients.

General Device to which the Present Disclosure may be applied

FIG. 13 is a diagram which illustrates a block diagram of a wireless communication device according to an embodiment of the present disclosure.

In reference to FIG. 13, a first wireless device 100 and a second wireless device 200 may transmit and receive a wireless signal through a variety of radio access technologies (e.g., LTE, NR).

A first wireless device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts disclosed in the present disclosure. For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104. A memory 104 may be connected to a processor 102 and may store a variety of information related to an operation of a processor 102. For example, a memory 104 may store a software code including commands for performing all or part of processes controlled by a processor 102 or for performing description, functions, procedures, proposals, methods and/or operation flow charts disclosed in the present disclosure. Here, a processor 102 and a memory 104 may be part of a communication modem/circuit/chip designed to implement a wireless communication technology (e.g., LTE, NR). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a wireless device may mean a communication modem/circuit/chip.

A second wireless device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts disclosed in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including commands for performing all or part of processes controlled by a processor 202 or for performing description, functions, procedures, proposals, methods and/or operation flow charts disclosed in the present disclosure. Here, a processor 202 and a memory 204 may be part of a communication modem/circuit/chip designed to implement a wireless communication technology (e.g., LTE, NR). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a wireless device may mean a communication modem/circuit/chip.

Hereinafter, a hardware element of a wireless device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC, RLC, PDCP, RRC, SDAP). One or more processors 102, 202 may generate one or more PDUs (Protocol Data Unit) and/or one or more SDUs (Service Data Unit) according to description, functions, procedures, proposals, methods and/or operation flow charts included in the present disclosure. One or more processors 102, 202 may generate a message, control information, data or information according to description, functions, procedures, proposals, methods and/or operation flow charts disclosed in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts disclosed in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts disclosed in the present disclosure may be implemented by using a firmware or a software and a firmware or a software may be implemented to include a module, a procedure, a function, etc. A firmware or a software configured to perform description, functions, procedures, proposals, methods and/or operation flow charts disclosed in the present disclosure may be included in one or more processors 102, 202 or may be stored in one or more memories 104, 204 and driven by one or more processors 102, 202. Description, functions, procedures, proposals, methods and/or operation flow charts disclosed in the present disclosure may be implemented by using a firmware or a software in a form of a code, a command and/or a set of commands.

One or more memories 104, 204 may be connected to one or more processors 102, 202 and may store data, a signal, a message, information, a program, a code, an instruction and/or a command in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. disclosed in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. disclosed in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefor, one or more transceivers 106, 206 may include an (analogue) oscillator and/or a filter.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure.

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor (s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

Here, a wireless communication technology implemented in a wireless device 100, 200 of the present disclosure may include Narrowband Internet of Things for a low-power communication as well as LTE, NR and 6G. Here, for example, an NB-IoT technology may be an example of a LPWAN(Low Power Wide Area Network) technology, may be implemented in a standard of LTE Cat NB1 and/or LTE Cat NB2, etc. and is not limited to the above-described name. Additionally or alternatively, a wireless communication technology implemented in a wireless device 100, 200 of the present disclosure may perform a communication based on a LTE-M technology. Here, in an example, a LTE-M technology may be an example of a LPWAN technology and may be referred to a variety of names such as an eMTC (enhanced Machine Type Communication), etc. For example, an LTE-M technology may be implemented in at least any one of various standards including 1) LTE CAT 0, 2) LTE Cat M1, 3) LTE Cat M2, 4) LTE non-BL(non-Bandwidth Limited), 5) LTE-MTC, 6) LTE Machine Type Communication, and/or 7) LTE M and so on and it is not limited to the above-described name. Additionally or alternatively, a wireless communication technology implemented in a wireless device 100, 200 of the present disclosure may include at least any one of a ZigBee, a Bluetooth and a low power wide area network (LPWAN) considering a low-power communication and it is not limited to the above-described name. In an example, a ZigBee technology may generate PAN(personal area networks) related to a small/low-power digital communication based on a variety of standards such as IEEE 802.15.4, etc. and may be referred to as a variety of names.

[Industrial Availability]

A method proposed by the present disclosure is mainly described based on an example applied to 3GPP LTE/LTE-A, 5G system, but may be applied to various wireless communication systems other than the 3GPP LTE/LTE-A, 5G system.

**Claims**

1. A method performed by a user equipment (UE) in a wireless communication system, the method comprising:

   receiving, from a base station, configuration information related to a channel state information (CSI) report;
   receiving, from the base station, a CSI-reference signal (CSI-RS) on K (K is a natural number) CSI-RS resources; and
   transmitting CSI to the base station, wherein the CSI includes a precoding matrix indicator (PMI) corresponding to codebook indexes,
   wherein the configuration information includes i) first information on one or more first parameters and ii) second information on a combination of a second parameter and a third parameter,
   wherein a precoding matrix indicated by the PMI is determined from a plurality of vectors, and a number of the plurality of vectors is determined based on the one or more first parameters and the second parameter,
   wherein the codebook indexes include an amplitude coefficient indicator indicating one or more amplitude coefficients and a phase coefficient indicator indicating one or more phase coefficients,
   wherein an upper bound of a total number of non-zero coefficients in the one or more amplitude coefficients and the one or more phase coefficients is determined based on the one or more first parameters, the second parameter, and the third parameter,
   wherein a configurable combination between i) the one or more first parameters and ii) the second parameter and the third parameter is individually determined according to a number of the K CSI-RS resources.

2. The method of claim 1, wherein each of the one or more first parameters corresponds one-to-one to the K CSI-RS resources.

3. The method of claim 1, wherein the PMI is a value for N ($1 \leq N \leq K$) CSI-RS resources selected by the UE among the K CSI-RS resources.

4. The method of claim 3, wherein a first parameter corresponding to the N CSI-RS resources is used to determine the plurality of vectors and the upper bound of the total number of the non-zero coefficients.

5. The method of claim 2, wherein the one or more first parameters indicate a number of spatial domain basis vectors related to a corresponding CSI-RS resource, respectively.

6. The method of claim 2, wherein a number of frequency domain basis vectors common to the K CSI-RS resources is determined using the second parameter.

7. The method of claim 2, wherein the upper bound of the total number of the non-zero coefficients is determined as a minimum integer not smaller than a product of a sum of the one or more first parameters, the second parameter and the third parameter.

8. The method of claim 1, wherein a type of the codebook is a type II coherent joint transmission (CJT) codebook.

9. A user equipment (UE) operating in a wireless communication system, the UE comprising:

   at least one transceiver for transmitting and receiving a wireless signal; and
   at least one processor for controlling the at least one transceiver,
   wherein the at least one processor configured to:

   receive, from a base station, configuration information related to a channel state information (CSI) report;
   receive, from the base station, a CSI-reference signal (CSI-RS) on K (K is a natural number) CSI-RS resources; and
   transmit CSI to the base station, wherein the CSI includes a precoding matrix indicator (PMI) corresponding to codebook indexes,
   wherein the configuration information includes i) first information on one or more first parameters and ii) second information on a combination of a second parameter and a third parameter,
   wherein a precoding matrix indicated by the PMI is determined from a plurality of vectors, and a number of the plurality of vectors is determined based on the one or more first parameters and the second parameter,
   wherein the codebook indexes include an amplitude coefficient indicator indicating one or more amplitude coefficients and a phase coefficient indicator indicating one or more phase coefficients,
   wherein an upper bound of a total number of non-zero coefficients in the one or more amplitude coefficients and the one or more phase coefficients is determined based on the one or more first parameters, the second parameter, and the third parameter,
   wherein a configurable combination between i) the one or more first parameters and ii) the second parameter and the third parameter is individually determined according to a number of the K CSI-RS resources.

10. At least one non-transitory computer-readable medium storing at least one instruction, wherein the at least one instruction executable by at least one processor controls a user equipment (UE) to:

   receive, from a base station, configuration information related to a channel state information (CSI) report;
   receive, from the base station, a CSI-reference signal (CSI-RS) on K (K is a natural number) CSI-RS resources; and
   transmit CSI to the base station, wherein the CSI includes a precoding matrix indicator (PMI) corresponding to codebook indexes,
   wherein the configuration information includes i) first information on one or more first parameters and ii) second information on a combination of a second parameter and a third parameter,
   wherein a precoding matrix indicated by the PMI is determined from a plurality of vectors, and a number of the plurality of vectors is determined based on the one or more first parameters and the second parameter,
   wherein the codebook indexes include an amplitude coefficient indicator indicating one or more amplitude coefficients and a phase coefficient indicator indicating one or more phase coefficients,
   wherein an upper bound of a total number of non-zero coefficients in the one or more amplitude coefficients and the one or more phase coefficients is determined based on the one or more first parameters, the second parameter, and the third parameter,
   wherein a configurable combination between i) the one or more first parameters and ii) the second parameter and the third parameter is individually determined according to a number of the K CSI-RS resources.

11. A processing apparatus configured to control a user equipment (UE) in a wireless communication system, the processing apparatus comprising:

   at least one processor; and
   at least one computer memory operably connected to the at least one processor and storing instructions that, based on being executed by the at least one processor, perform operations comprising:

   receiving, from a base station, configuration information related to a channel state information (CSI) report;
   receiving, from the base station, a CSI-reference signal (CSI-RS) on K (K is a natural number) CSI-RS resources; and
   transmitting CSI to the base station, wherein the CSI includes a precoding matrix indicator (PMI) corresponding to codebook indexes,
   wherein the configuration information includes i) first information on one or more first parameters and ii) second information on a combination of a second parameter and a third parameter,

wherein a precoding matrix indicated by the PMI is determined from a plurality of vectors, and a number of the plurality of vectors is determined based on the one or more first parameters and the second parameter,

wherein the codebook indexes include an amplitude coefficient indicator indicating one or more amplitude coefficients and a phase coefficient indicator indicating one or more phase coefficients,

wherein an upper bound of a total number of non-zero coefficients in the one or more amplitude coefficients and the one or more phase coefficients is determined based on the one or more first parameters, the second parameter, and the third parameter,

wherein a configurable combination between i) the one or more first parameters and ii) the second parameter and the third parameter is individually determined according to a number of the K CSI-RS resources.

12. A method performed by a base station in a wireless communication system, the method comprising:

transmitting, to a user equipment (UE), configuration information related to a channel state information (CSI) report;

transmitting, to the UE, a CSI-reference signal (CSI-RS) on K (K is a natural number) CSI-RS resources; and

receiving CSI from the UE, wherein the CSI includes a precoding matrix indicator (PMI) corresponding to codebook indexes,

wherein the configuration information includes i) first information on one or more first parameters and ii) second information on a combination of a second parameter and a third parameter,

wherein a precoding matrix indicated by the PMI is determined from a plurality of vectors, and a number of the plurality of vectors is determined based on the one or more first parameters and the second parameter,

wherein the codebook indexes include an amplitude coefficient indicator indicating one or more amplitude coefficients and a phase coefficient indicator indicating one or more phase coefficients,

wherein an upper bound of a total number of non-zero coefficients in the one or more amplitude coefficients and the one or more phase coefficients is determined based on the one or more first parameters, the second parameter, and the third parameter,

wherein a configurable combination between i) the one or more first parameters and ii) the second parameter and the third parameter is individually determined according to a number of the K CSI-RS resources.

13. A base station operating in a wireless communication system, the base station comprising:

at least one transceiver for transmitting and receiving a wireless signal; and

at least one processor for controlling the at least one transceiver,

wherein the at least one processor configured to:

transmit, to a user equipment (UE), configuration information related to a channel state information (CSI) report;

transmit, to the UE, a CSI-reference signal (CSI-RS) on K (K is a natural number) CSI-RS resources; and

receive CSI from the UE, wherein the CSI includes a precoding matrix indicator (PMI) corresponding to codebook indexes,

wherein the configuration information includes i) first information on one or more first parameters and ii) second information on a combination of a second parameter and a third parameter,

wherein a precoding matrix indicated by the PMI is determined from a plurality of vectors, and a number of the plurality of vectors is determined based on the one or more first parameters and the second parameter,

wherein the codebook indexes include an amplitude coefficient indicator indicating one or more amplitude coefficients and a phase coefficient indicator indicating one or more phase coefficients,

wherein an upper bound of a total number of non-zero coefficients in the one or more amplitude coefficients and the one or more phase coefficients is determined based on the one or more first parameters, the second parameter, and the third parameter,

wherein a configurable combination between i) the one or more first parameters and ii) the second parameter and the third parameter is individually determined according to a number of the K CSI-RS resources.

FIG.1

# FIG.2

Radio Frame 10ms

Fixed Size

Subframe 1ms

| 0 | 1 | 2 | 3 | 4 | 5 | 6 | 7 | 8 | 9 |
|---|---|---|---|---|---|---|---|---|---|

Subframe ={1,2,4} Slots

Slot

| 0 | 1 | 2 | 3 |
|---|---|---|---|

Slot={7,14} Symbols

Symbol

| 0 | 1 | 2 | 3 | 4 | 5 | 6 | 7 | 8 | 9 | 10 | 11 | 12 | 13 |
|---|---|---|---|---|---|---|---|---|---|----|----|----|----|

Size depends
on subcarrier
spacing

Mini-Slot
(URLLC)

Mini-Slot={2,4,7} Symbols

FIG.3

One Subframe

$14 \cdot 2^{\mu}$ OFDM Symbol

$k = N_{RB}^{\mu} N_{SC}^{RB} - 1$

Resource Block

Resource Element
- In a resource grid, $(k, \bar{l})$
- In a resource block, $(k, l)$

$N_{RB}^{\mu} N_{SC}^{RB} - 1$ Subcarrier

$N_{SC}^{RB}$ Subcarrier

$k = 0$

$l = 0$

$l = 14 \cdot 2^{\mu} - 1$

# FIG.4

FIG.5

Resource grid

A carrier
(up to 3300 subcarriers,i,e.,275 RBs)

A BWP

1 RB=12 subcarrier

1 RE

1 subcarrier

1 Symbol

l=0 ·····

k=0

FIG.6

# FIG.7

Illustration of antenna configuration
of (M,N,P,Mg,Ng) = (4,4,2,2,2)

$(N_1,N_2,P)=(2,2,2)$

# FIG.8

FIG.9

EP 4 614 825 A1

FIG.10

| Network | | UE |
|---|---|---|

Configuration information ——S1001

CSI-RS transmission ——S1002

CSI feedback
(PUCCH/PUSCH) ——S1003

FIG.11

| Receive configuration information related to CSI | ——S1101 |
|---|---|
| Receive CSI-RS on K CSI-RS resources | ——S1102 |
| Transmit CSI | ——S1103 |

FIG.12

| Transmit configuration information related to CSI | ——S1201 |
|---|---|
| Transmit CSI-RS on K CSI-RS resources | ——S1202 |
| Receive CSI | ——S1203 |

FIG.13

EP 4 614 825 A1

## INTERNATIONAL SEARCH REPORT

| International application No. |
| --- |
| **PCT/KR2023/017230** |

| A. | CLASSIFICATION OF SUBJECT MATTER |
| --- | --- |

**H04B 7/0456**(2017.01)i; **H04B 7/024**(2017.01)i; **H04B 7/06**(2006.01)i; **H04L 5/00**(2006.01)i; **H04L 25/03**(2006.01)i

According to International Patent Classification (IPC) or to both national classification and IPC

| B. | FIELDS SEARCHED |
| --- | --- |

Minimum documentation searched (classification system followed by classification symbols)

H04B 7/0456(2017.01); H04W 72/08(2009.01); H04W 72/10(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 채널 상태 정보(channel state information), 코드북 (codebook), 프리코딩 행렬 지시자(precoding matrix indicator), 파라미터(parameter), 조합(combination)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | US 2022-0303999 A1 (LG ELECTRONICS INC.) 22 September 2022 (2022-09-22)<br>See paragraphs [0156]-[0168], [0315] and [0381]-[0382]; and figure 7. | 1-13 |
| A | QUALCOMM INCORPORATED. CSI enhancements for high/medium UE velocities and Coherent-JT. R1-2209969, 3GPP TSG RAN WG1 #110bis-e, e-Meeting. 30 September 2022.<br>See sections 3.2-3.4. | 1-13 |
| A | NTT DOCOMO, INC. Discussion on CSI enhancement. R1-2209890, 3GPP TSG RAN WG1 #110bis-e, e-Meeting. 30 September 2022.<br>See sections 2.1-2.3. | 1-13 |
| A | HUAWEI et al. CSI enhancement for coherent JT and mobility. R1-2208441, 3GPP TSG RAN WG1 #110bis-e, e-Meeting. 30 September 2022.<br>See sections 2.1-2.9. | 1-13 |
| A | WO 2022-144778 A1 (TELEFONAKTIEBOLAGET LM ERICSSON (PUBL)) 07 July 2022 (2022-07-07)<br>See page 43, line 13 - page 56, line 29; and figures 19-20. | 1-13 |

☐ Further documents are listed in the continuation of Box C.    ☑ See patent family annex.

| | | |
| --- | --- | --- |
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
| --- | --- |
| **07 February 2024** | **07 February 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2023/017230**

| Patent document cited in search report | | | Publication date (day/month/year) | Patent family member(s) | | | Publication date (day/month/year) |
|---|---|---|---|---|---|---|---|
| US | 2022-0303999 | A1 | 22 September 2022 | CN | 114270923 | A | 01 April 2022 |
| | | | | EP | 4016866 | A1 | 22 June 2022 |
| | | | | JP | 2022-544612 | A | 19 October 2022 |
| | | | | JP | 7377342 | B2 | 09 November 2023 |
| | | | | KR | 10-2022-0047800 | A | 19 April 2022 |
| | | | | WO | 2021-029695 | A1 | 18 February 2021 |
| WO | 2022-144778 | A1 | 07 July 2022 | CN | 116711222 | A | 05 September 2023 |
| | | | | EP | 4268380 | A1 | 01 November 2023 |

Form PCT/ISA/210 (patent family annex) (July 2022)